(19) **Europäisches Patentamt European Patent Office Office européen des brevets**

(11) **EP 1 593 173 B1**

(12) **FASCICULE DE BREVET EUROPEEN**

(45) Date de publication et mention de la délivrance du brevet:
**05.10.2011 Bulletin 2011/40**

(21) Numéro de dépôt: **03799653.5**

(22) Date de dépôt: **19.12.2003**

(51) Int Cl.:
*H01M 10/04* (2006.01)   *H01G 13/02* (2006.01)

(86) Numéro de dépôt international:
**PCT/FR2003/003822**

(87) Numéro de publication internationale:
**WO 2004/059773 (15.07.2004 Gazette 2004/29)**

(54) **ARCHITECTURE DE DISPOSITIF DE BOBINAGE D’ENSEMBLE DE STOCKAGE D&RSQUO;ENERGIE-ELECTRIQUE**

VORRICHTUNG ZUR AUFWICKLUNG VON SPEICHERN ELEKTRISCHER ENERGIE

ARCHITECTURE OF A WINDING DEVICE FOR AN ELECTRIC ENERGY STORAGE UNIT

(84) Etats contractants désignés:
**CH IT LI**

(30) Priorité: **23.12.2002 FR 0216507**

(43) Date de publication de la demande:
**09.11.2005 Bulletin 2005/45**

(73) Titulaire: **Batscap**
**29500 Ergué-Gabéric (FR)**

(72) Inventeur: **LE GAL GUY**
**F-29000 Quimper (FR)**

(74) Mandataire: **Texier, Christian**
**Cabinet Regimbeau**
**20, rue de Chazelles**
**75847 Paris Cedex 17 (FR)**

(56) Documents cités:
**EP-A- 0 746 048    EP-A2- 0 034 662**
**GB-A- 962 643    JP-A- 10 255 815**
**US-A- 1 789 451    US-A- 2 276 980**
**US-A- 3 432 901    US-A- 4 265 410**
**US-A- 4 402 784**

• **PATENT ABSTRACTS OF JAPAN vol. 2002, no. 09, 4 septembre 2002 (2002-09-04) & JP 2002 128336 A (NIPPEI TOYAMA CORP), 9 mai 2002 (2002-05-09)**

# Description

La présente invention concerne le domaine des ensembles de stockage d'énergie électrique.

Plus précisément encore, la présente invention concerne en particulier les ensembles électrochimiques multi-couches à base de matériaux polymères comprenant un électrolyte encadré par deux électrodes formant respectivement cathode et anode.

Le document GB 962 643 décrit un dispositif de réalisation de condensateurs comprenant des moyens multiples d'alimentation sous forme de bobines montées libres en rotation, des moyens de complexage et des moyens d'enroulement. Le dispositif comprend des moyens pour piloter les moyens d'enroulement incluant une chaîne, un réducteur et un moteur 9.

Le document EP 0 034 662 décrit un dispositif de réalisation de condensateurs comprenant un moyen d'alimentation sous la forme d'un rouleau débiteur monté libre en rotation et des moyens d'enroulement d'une bande sous la forme d'un mandrin. Le dispositif comprend des moyens pour piloter les moyens d'enroulement sous la forme d'un moteur entraînant le mandrin. Le dispositif comprend en outre un système de frein incluant un levier, un rouleau et un ressort permettant de régler la tension de la bande.

Le document US 2 276 980 décrit un dispositif de réalisation de condensateurs comprenant des moyens multiples d'alimentation sous la forme de rouleaux d'alimentation, des moyens de complexage et des moyens d'enroulement sous la forme d'un axe. Le dispositif comprend des moyens pour piloter les moyens d'enroulement sous la forme d'un moteur entraînant l'axe. Le dispositif comprend en outre un système de frein comprenant un tambour et des patins de freinage pour freiner chaque rouleau d'alimentation.

L'invention s'applique notamment, mais non exclusivement, aux dispositifs comprenant une anode à base de lithium.

La présente invention s'applique à la réalisation de condensateurs, super-condensateurs et générateurs ou batteries.

Des exemples de tels ensembles électrochimiques pourront être trouvés dans les documents FR-A-2737339, FR-A-2759087, FR-A-2759211, FR-A-2808622.

La présente invention a pour objet un dispositif permettant la réalisation, en automatique et en continu, de tels ensembles de stockage d'énergie électrique.

Plus précisément encore, dans ce contexte, la présente invention a pour but de proposer un dispositif de fabrication d'ensembles multi-couches à fonction de stockage d'énergie électrique présentant des qualités supérieures à l'art antérieur.

Ce but est atteint dans le cadre de la présente invention grâce à un dispositif de réalisation d'ensembles de stockage d'énergie électrique conforme à la revendication 1.

La présente invention concerne également un procédé de réalisation d'ensembles de stockage d'énergie électrique conforme à la revendication 72.

Selon une caractéristique importante de la présente invention, l'enroulement du complexe est opéré sous la forme de galettes généralement planes, afin de permettre un empilement aisé et un raccordement sous forme série/parallèle, de plusieurs de tels ensembles.

Les inventeurs ont constaté qu'il est particulièrement avantageux de réaliser de tels ensembles de stockage d'énergie électrique sous forme d'un enroulement multi-couches généralement plan dès l'origine, afin d'éviter la réalisation de plis ou défauts équivalents dans la structure desdits ensembles.

En effet, les inventeurs ont constaté que la réalisation de tels ensembles sous forme d'un enroulement circulaire de révolution, ultérieurement aplani, conduit fréquemment à des défauts tels que plis ou bosses dans les différentes couches, et un mauvais interface entre celles-ci, le cas échéant un décollement local entre les différentes couches entraînant un affaiblissement de la capacité de stockage, en raison des contraintes générées dans les spires qui ont un développé différent d'une spire à l'autre.

Les inventeurs ont également constaté que ces problèmes, liés à l'état de la technique, peuvent accélérer le vieillissement des éléments, en diminuant le nombre de cycles charges/décharges tolérés par les éléments, dans le cas de batteries, voire aller jusqu'à l'autodécharge des éléments.

Les moyens ainsi proposés dans le cadre de l'invention permettent d'obtenir une force de traction constante sur les films alimentant le mandrin et de ce fait un enroulement parfaitement régulier.

La présente invention concerne également les éléments de stockage d'énergie électrique constitués d'un enroulement plat à contraintes internes minimisées, formés chacun d'un ensemble superposé de films comportant au moins un collecteur de courant, une cathode à base de polymères chargés, un électrolyte solide à base de polymères chargés, une anode métallique, par exemple à base de lithium, ces différents éléments étant réalisés sous la forme de films minces, complexés entre eux, enroulés et préformés sur un mandrin quasi-plat à section en fuseau, puis pressés et mis à plat sur une presse à faible poussée.

D'autres caractéristiques, buts et avantages de la présente invention apparaîtront à la lecture de la description détaillée qui va suivre et en regard des dessins annexés donnés à titre d'exemples non limitatifs et sur lesquels :

- la figure 1 représente une vue générale schématique des moyens principaux composant le dispositif conforme à la présente invention,
- la figure 2 représente une vue en bout partielle à échelle agrandie d'un mandrin d'enroulement conforme à un mode de réalisation préférentiel de la présente invention,

- la figure 3 représente une vue schématique des moyens d'enroulement conformes à la présente invention, composés de la combinaison d'un tel mandrin d'enroulement et d'un rouleau presseur associé,

- les figures 4, 5 et 6 représentent des vues similaires des moyens d'enroulement dans trois positions successives de leur cinématique,

- la figure 7 représente une vue partielle de moyens conformes à la présente invention situés en amont d'un ensemble de complexage,

- la figure 8 représente une vue partielle similaire de moyens conformes à la présente invention situés en aval de cet ensemble de complexage et en amont d'un module d'enroulement,

- les figures 9 à 16, qui seront décrites plus en détail par la suite, illustrent schématiquement, en coupe transversale, les structures multi-couches mises en oeuvre à différents stades de l'alimentation du dispositif conforme à la présente invention,

- les figures 17 à 20, qui seront également décrites plus en détail par la suite, représentent des vues en coupe transversale des trois structures multi-couches de base utilisées dans le cadre de l'invention et de la structure multi-couche résultante, avant pelliculage, destinée à l'alimentation du mandrin, les figures 17 à 20 illustrant plus précisément le positionnement relatif des bords latéraux longitudinaux des différentes couches impliquées,

- la figure 21 représente schématiquement un enroulement conforme à la présente invention (la figure 21 représente un nombre de spires inférieur à la réalité pour simplifier l'illustration),

- la figure 22 représente schématiquement des moyens d'entraînement d'un mandrin d'enroulement et d'un rouleau presseur associé, conformes à la présente invention,

- la figure 23 représente schématiquement des moyens de coupe localisée d'un collecteur de courant,

- la figure 24 représente schématiquement le collecteur de courant résultant comportant des coupes localisées,

- la figure 25 représente schématiquement un enroulement comportant de telles coupes,

- la figure 26 représente schématiquement le déploiement d'un collecteur de courant obtenu grâce à de telles coupes,

- la figure 27 représente les courbes d'évolution de vitesse du mandrin d'enroulement conforme à la présente invention et d'un rouleau presseur associé, à l'origine de l'enroulement, pour une rotation complète sur 360°, en fonction de leur position angulaire,

- la figure 28 représente des courbes similaires de variation de vitesse du mandrin et du rouleau presseur à la fin d'un enroulement, en fonction de leur position angulaire,

- la figure 29 représente la variation du rayon d'enroulement en fonction de l'angle du mandrin ainsi qu'une courbe de variation d'un facteur de correction en fonction de cet angle,

- la figure 30 représente un tableau qui illustre les données utilisées pour piloter l'évolution de la vitesse de rotation du mandrin d'enroulement,

- la figure 31 représente une vue schématique du bord tranchant d'une lame de coupe conforme à un mode de réalisation préférentiel de la présente invention,

- la figure 32 représente schématiquement un mode de réalisation préférentiel d'un dépelliculeur conforme à la présente invention,

- la figure 33 représente un synoptique général du dispositif conforme à la présente invention.

- la figure 34 représente une vue en coupe horizontale, selon le plan de coupe référencé XXXIV-XXXIV sur la figure 8, de moyens de commande de mors du mandrin,

- la figure 35 représente, en position juxtaposée deux demi-axes de commande de déplacement relatif des mors du mandrin,

- la figure 36 représente une vue en coupe transversale d'un tronçon de l'un de ces deux demi-axes, selon un plan de coupe référencé XXXVI-XXXVI sur la figure 38,

- la figure 37 représente une vue axiale en bout des deux demi-axes précités,

- les figures 38 et 39 représentent des vues respectives latérales des deux demi-axes,

- la figure 40 représente une vue en plan, selon une vue orthogonale aux figures 38 et 39, d'un tel demi-axe,

- la figure 41 représente une vue latérale des moyens mécaniques de commande des demi-axes assurant l'orientation relative des deux mors du mandrin,

- la figure 42 représente une vue selon l'orientation référencée XXXXII sur la figure 41 des mêmes moyens,

- la figure 43 représente une vue partielle des mêmes moyens, notamment des vérins de commande, selon l'orientation référencée XXXXIII sur la figure 41,

- les figures 44A à 44F représentent six positions successives des mors du mandrin au cours d'une séquence de fermeture du mandrin,

- la figure 45 représente les mors du mandrin en position initiale pour la rotation du mandrin en vue d'un enroulement,

- les figures 46A à 46H représentent huit positions successives des mors du mandrin au cours de cette rotation,

- les figures 47A à 47F représentent six positions successives du mandrin et d'un rouleau presseur additionnel escamotable au cours de la séquence du dernier tour d'enroulement,

- la figure 48 schématise la phase d'escamotage de ce rouleau presseur additionnel,

- la figure 49 schématise la phase d'arrêt de rotation du mandrin et d'ouverture des mors,

- la figure 50 schématise la phase d'extraction de l'élément enroulé,
- les figures 51A à 51E schématisent cinq positions successives et relatives des portes mors du mandrin,
- les figures 52A à 52E représentent respectivement les cinq positions des mors du mandrin correspondant respectivement aux figures 51A à 51E,
- les figures 53A à 53E représentent les cinq positions de moyens de commande mécanique correspondant respectivement aux cinq figures 51A à 51E,
- la figure 54 représente une variante de réalisation du mandrin,
- les figures 55A et 55B représentent deux vues d'une autre variante de réalisation du mandrin, respectivement dans une position de préhension de bande par aspiration d'air et d'extraction d'élément,
- les figures 56A, 56B et 56C représentent trois vues d'une autre variante de réalisation de mandrin, respectivement en position d'enroulement, en position d'extraction, et en vue axiale,
- la figure 57 représente une vue schématique en bout d'un mandrin conforme à une autre variante de réalisation,
- la figure 58 représente une vue en bout d'un mandrin conforme à une autre variante de réalisation selon l'invention,
- la figure 59 représente une vue schématique en bout d'un mandrin conforme à une autre variante de réalisation de l'invention,
- la figure 60 représente schématiquement un exemple de dispositif de pilotage d'entraînement de films en défilement conforme à l'invention,
- les figures 61 et 62 représentent schématiquement des étapes du procédé de collage de queue d'enroulement,
- la figure 63 représente de manière schématique les moyens de coupe et les moyens d'actionnement associés,
- la figure 64 représente schématiquement un dispositif de chauffage conforme à un mode de réalisation de l'invention,
- la figure 65 représente schématiquement un dispositif de chauffage conforme à un autre mode de réalisation de l'invention,
- la figure 66 représente une vue générale schématique des moyens principaux composant le dispositif de réalisation d'ensembles de stockage d'énergie électrique, sur laquelle on a représenté des systèmes dérouleurs-aligneurs conformes à la présente invention,
- la figure 67 représente schématiquement une vue latérale d'un système dérouleur-aligneur conforme à la présente invention,
- les figures 68, 69 et 70 représentent des vues schématiques du module de sectionnement dans différentes positions,
- la figure 71 représente schématiquement les moyens de coupe permettant de sectionner le complexe lorsque l'enroulement est terminé.

Dans la suite de la description on utilisera les termes « amont » et « aval » en référence au sens de déplacement des complexes dans le dispositif, le terme « amont » qualifiant les éléments situés avant une référence donnée, tandis que le terme « aval » qualifie les éléments situés après celle-ci.

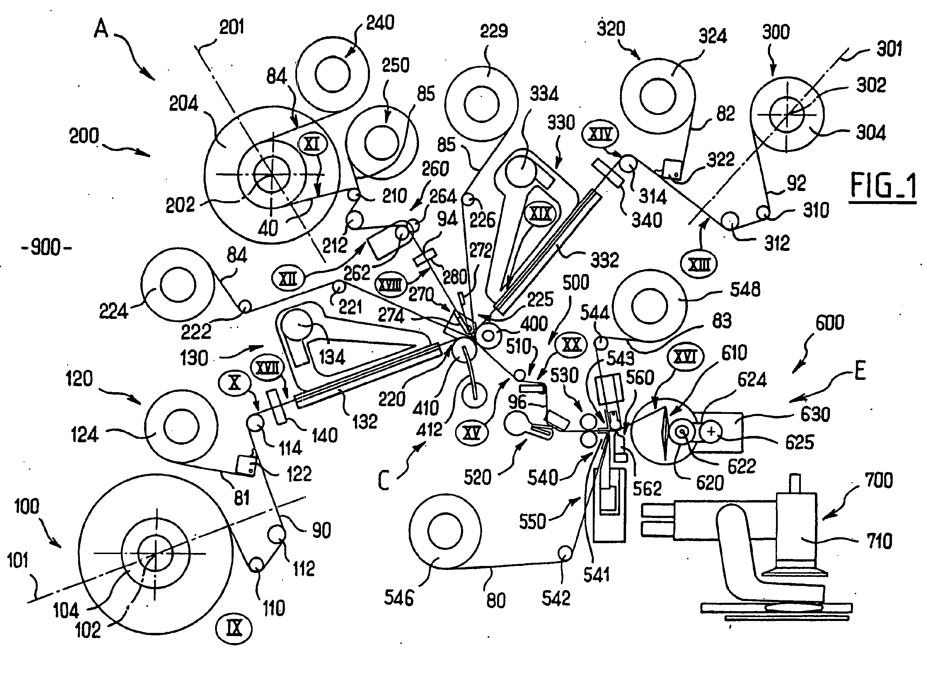

Le dispositif de réalisation d'ensembles de stockage d'énergie électrique conforme à la présente invention comprend essentiellement, comme illustré sur la figure 1 annexée :

- des moyens A d'alimentation en structures multi-couches, et
- des moyens E d'enroulement de ces structures.

Les moyens d'alimentation A ont pour fonction d'acheminer plusieurs ensembles mono-couches ou multi-couches 90, 92, 94, initialement séparés et de complexer, c'est-à-dire de superposer et de lier, ceux-ci. Les moyens d'alimentation A ont également pour fonction d'assurer un positionnement relatif précis des bords longitudinaux des différentes couches impliquées dans le complexe final 96.

Les différents éléments mono-couches ou multi-couches et les complexes résultant mis en oeuvre dans le cadre de la présente invention, sont déplacés parallèlement à un bâti 900 dont la fonction sera définie plus en détail par la suite.

Le mode de réalisation particulier du dispositif illustré sur la figure 1 annexée est destiné à la réalisation d'ensembles générateurs formés d'un empilement de six couches : un collecteur 10 (par exemple en aluminium), une cathode 20 (par exemple à base de POE (polyoxyéthylène) et de sel de lithium), une couche d'électrolyte 30, une anode 40, par exemple en lithium, une couche d'électrolyte 50 et une cathode 60. Les électrolytes 30 et 50 sont par exemple à base de $LiV_3O_8$ ou $V_2O_5$ et POE. Le collecteur en Al 10 est de préférence revêtu d'une barrière anticorrosion, par exemple à base de nitrure de Ti ou autre, graphite par exemple.

Cependant, l'invention n'est pas limitée à cet exemple particulier.

Dans ce contexte, les moyens d'alimentation A comprennent trois magasins d'alimentation séparés 100, 200 et 300.

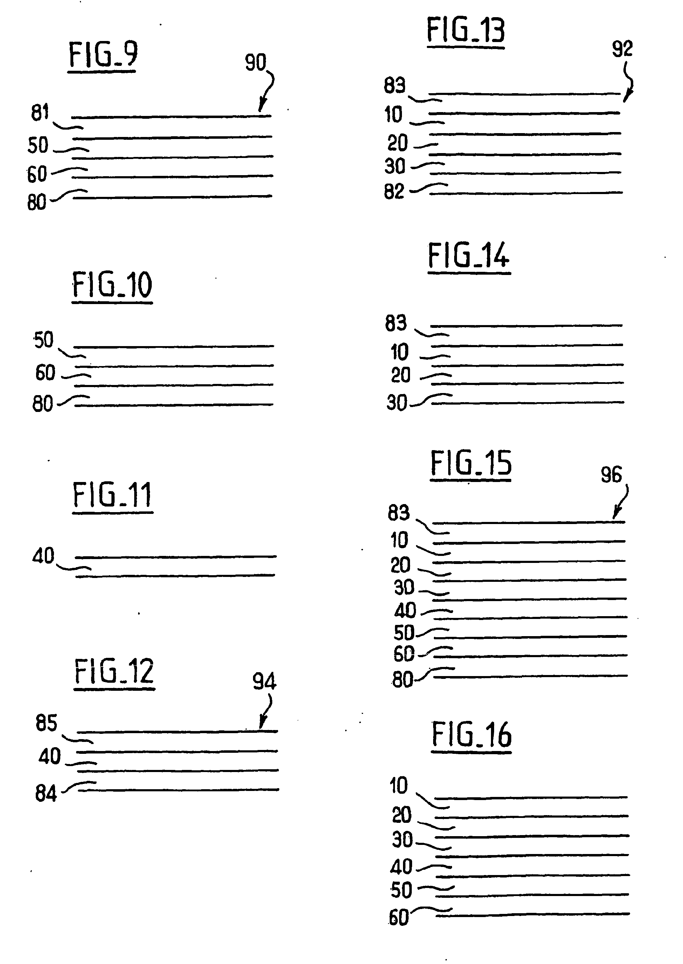

Le moyen d'alimentation 100 est destiné à l'alimentation d'un complexe 90 quatre couches comprenant la cathode 60 et la couche d'électrolyte 50 précitées placées en sandwich entre deux pellicules externes de protection 80, 81 (voir figure 9).

Le moyen d'alimentation 200 est destiné à l'alimentation de la feuille d'anode 40 (voir figure 11).

Le moyen d'alimentation 300 est destiné à l'alimentation d'un complexe 92 cinq couches comprenant : l'électrolyte 30, la cathode 20 et le collecteur 10 pris en sandwich entre deux pellicules externes de protection 82, 83 (voir figure 13).

De préférence, chacun de ces moyens d'alimentation 100, 200, 300 comprend une bobine du complexe souhaité, 90, 40 ou 92, préalablement réalisée par tout moyen approprié, placée à rotation sur le bâti commun 900 autour d'axes de rotation respectifs 102, 202, 302.

Bien entendu, les bobines formant les magasins d'alimentation 100, 200 et 300 sont montées de manière amovible sur le bâti 900 pour pouvoir être remplacées après épuisement.

Le complexage des trois ensembles 90, 40 et 92 issus respectivement des trois moyens d'alimentation 100, 200 et 300, c'est-à-dire l'empilage de ces ensembles, est réalisé dans un module de complexage C interposé entre la sortie des moyens d'alimentation 100, 200, 300, et les moyens d'enroulement E.

Sur la figure 1, les bobines des complexes 90, 40 et 92 placées dans les trois moyens d'alimentation 100, 200, 300, sont référencées respectivement 104, 204, 304.

Le complexe quatre couches 90 issu de la bobine 104 est guidé vers le module de complexage C par des rouleaux 110, 112, 114.

En aval de la sortie de bobine 104, le module 100 comprend un ensemble de dépelliculage 120 conçu pour retirer la pellicule 81 située côté face à complexer, sur l'électrolyte 50. Cet ensemble de dépelliculage 120 est positionné entre les rouleaux de renvoi 112 et 114.

La structure de complexe trois couches 50, 60, 80 obtenue en sortie de l'ensemble de dépelliculage 120 est illustrée sur la figure 10.

Par ailleurs, le moyen d'alimentation 100 comprend entre l'ensemble de dépelliculage 120 et le module de complexage C un module de chauffage 130. La structure et la fonction de celui-ci seront décrites plus en détail par la suite.

De manière similaire, le complexe cinq couches 92 issu de la bobine 304 est guidé vers le module de complexage C par des rouleaux 310, 312, 314.

En aval de la sortie de bobine 304, le module 300 comprend un ensemble de dépelliculage 320 conçu pour retirer la pellicule 82 située côté face à complexer, sur l'électrolyte 30. Cet ensemble de dépelliculage 320 est positionné entre les rouleaux de renvoi 312 et 314.

La structure de complexe quatre couches 83, 10, 20, 30 obtenue en sortie de l'ensemble de dépelliculage 320 est illustrée sur la figure 14.

Par ailleurs, le moyen d'alimentation 300 comprend entre l'ensemble de dépelliculage 320 et le module de complexage C un module de chauffage 330. La structure et la fonction de celui-ci seront décrites plus en détail par la suite.

L'ensemble d'alimentation 200 destiné à l'alimentation d'un film d'anode, de préférence à base de lithium, comprend deux rouleaux d'alimentation 240, 250, de pellicules respectives 84, 85.

Les pellicules 84, 85 et le film d'anode 40 sont guidés par des rouleaux 210, 212, vers un ensemble d'application primaire 260. Cet ensemble 260 a pour fonction de réunir sous forme d'un élément comprenant la couche d'anode 40 prise en sandwich entre les deux pellicules 84, 85, ces films initialement distincts provenant des bobines d'alimentation respectives 204, 240 et 250.

L'élément comprenant les deux pellicules 84 et 85 encadrant l'anode 40, est illustré sur la figure 12.

L'ensemble d'application 260 est formé de préférence de deux rouleaux pinceurs 262, 264 montés à rotation autour d'axes respectifs parallèles, recevant entre eux à défilement les trois films précités 84, 40, 85. De préférence, l'un 262 des rouleaux a son axe de rotation fixe dans l'espace, tandis que le second rouleau 264 placé en regard, qui sert de rouleau presseur, est sollicité à déplacement contre le rouleau 262 premier cité, sous un effort contrôlé, par exemple à l'aide de moyens élastiques, tels qu'une lame élastique 263.

Par ailleurs l'un au moins des deux rouleaux 262, 264 est motorisé. Il est contrôlé pour alternativement, entraîner par traction l'élément 84, 40, 85 , et freiner cet élément, en synchronisation avec le process aval. A ce titre les rouleaux 262, 264 sont asservis en esclave sur les moyens du processus aval.

Le cas échéant l'un au moins des rouleaux 262, 264 est monté sur un équipage escamotable, par exemple piloté par un vérin, pour permettre de séparer les deux rouleaux 262, 264 et faciliter ainsi la mise en place initiale de l'élément 84, 40, 85 entre ceux-ci.

En aval de l'ensemble d'application 260, le moyen d'alimentation 200 comprend un module 270 de sectionnement transversal de la couche d'anode 40.

A cette fin, le module de sectionnement 270 comprend un système de marteau 272 et d'enclume 274 disposés respectivement de part et d'autre du chemin de déplacement de l'élément 84, 40, 85. Le marteau 272 opère par frappe linéaire transversale au travers des pellicules de protection 84, 85.

L'un au moins du marteau 272 ou de l'enclume 274, de préférence le marteau 272, comprend une arête contondante.

Le marteau 272 est sollicité séquentiellement à la frappe contre l'enclume 274 pour délimiter dans le film initial 40 d'anode, une longueur avale correspondant à l'enroulement recherché. On notera que le marteau 272 opère sur l'élément comprenant l'anode 40 prise en sandwich entre les deux pellicules 84, 85. Cependant, les pellicules 84, 85 sont formées d'un matériau apte à résister à la frappe du marteau 272 pour éviter toute rupture des pellicules 84, 85.

Les deux pellicules 84, 85 sont retirées de l'élément précité illustré sur la figure 12, en sortie du module de sectionnement 270 par des moyens de dépelliculage 220, 225. Le cas échéant ces moyens de dépelliculage 220, 225 peuvent être formés par le marteau 272 et l'enclume 274 eux mêmes.

Le tronçon de l'anode 40 situé en avant de la ligne de rupture définie par le module 270 est entraîné par les moyens d'entraînement situés en aval, ce tronçon d'anode 40 étant lui-même pris en sandwich entre les deux ensembles 50, 60, 80, d'une part, et 83, 10, 20, 30, d'autre part, dans le module de complexage C.

Le tronçon du film d'anode 40 situé en amont de la ligne de rupture est quant à lui entraîné par les pellicules 84, 85, puisque celles-ci, comme indiqué précédemment, ne sont pas sectionnées dans le module 270.

On notera sur ce point que l'ensemble des pellicules 80, 81, 82, 83, 84 et 85, a non seulement pour fonction d'éviter une pollution des faces externes de complexe par l'environnement extérieur et d'empêcher le collage des complexes sur les différents rouleaux impliqués, mais de plus participe à l'entraînement de leur complexe associé.

Les pellicules 80, 81, 82, 83, 84 et 85 sont avantageusement à base de PP (polypropylène), PE (polyéthylène), PET (polyéthylène téréphtalate) ou analogue.

Lorsque celles-ci sont retirées, elles le sont le plus loin possible sur leur trajectoire, de sorte que le film associé ne passe jamais nu sur un rouleau de son parcours, afin d'éviter la pollution à la fois du film et du rouleau.

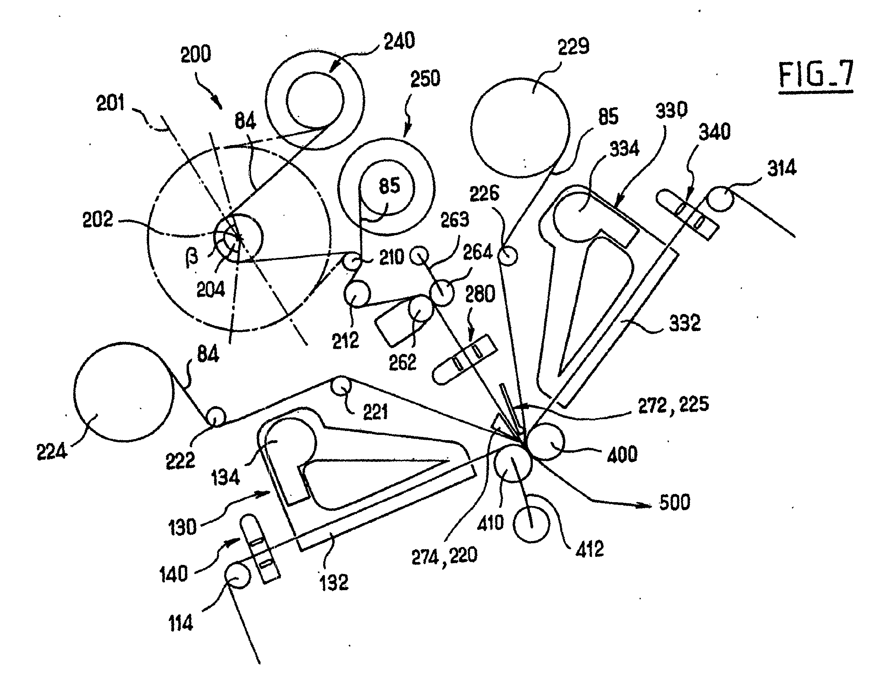

On notera par ailleurs que les deux dérouleurs de pellicule 240, 250 associés au dérouleur d'anode 204 sont sensiblement adjacents et que la pellicule 84 issue du dérouleur 240 entoure le rouleau d'anode 204 sur un arc d'enroulement (« embarrage » selon l'expression consacrée) important (typiquement supérieur à 90° et préférentiellement au moins égal à 270°) pour à la fois assurer une bonne protection de ce film fragile et garantir un entraînement mécanique adéquat. Cet arc d'enroulement de l'anode 204 par la pellicule 84 est référencé β sur la figure 7 annexée. Il varie en fonction du rayon de la spire externe de film présent sur le dérouleur 240.

La commande séquentielle d'une part, de l'entraînement des pellicules 84 et 85, et par conséquent du tronçon d'anode 40 situé en amont de la ligne de rupture, et d'autre part, de l'entraînement des pellicules 80 et 83 et par conséquent du tronçon d'anode situé en aval de cette ligne de rupture, est de préférence adaptée pour définir un intervalle, par exemple de l'ordre de 20mm entre les deux tronçons précités, après rupture. Plus précisément la frappe de l'outil 272 est synchronisée avec l'arrêt en frein des rouleaux pinceurs 262, 264 de façon à créer une interruption de défilement du lithium 40 pendant que le complexage continue en aval à la même vitesse.

On évite ainsi, grâce à la pré-rupture de la couche d'anode 40, d'avoir à couper en aval, simultanément, toutes les couches composant le complexe final, ce qui risquerait de pincer toutes les couches entre elles et pourrait entraîner des courts-circuits entre l'anode 40, les cathodes 20, 60 et le collecteur 10.

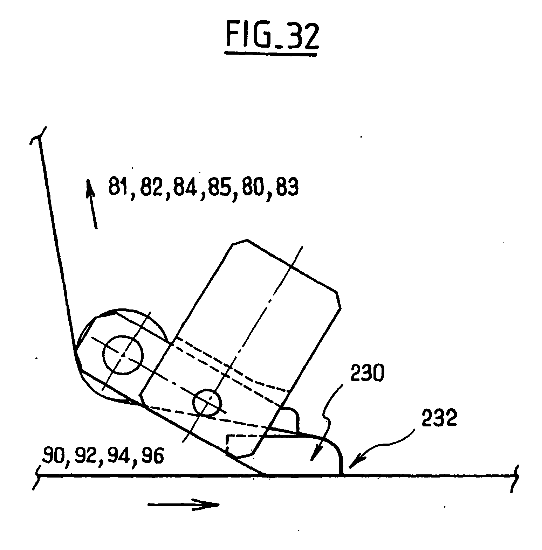

Pour éviter de détériorer l'interface adjacente aux pellicules, notamment par arrachement, lors du retrait de celles-ci, de préférence le dépelliculage, au niveau des postes 120, 220, 225 et 320 précités, est réalisé à l'aide d'un système racleur 230 schématisé sur la figure 32, disposé tangentiellement au film concerné et doté d'une arête polie 232 presque vive, adapté pour assurer un pelage de la pellicule grâce à une déviation brutale de celle-ci d'au moins 60° (voir figure 32), le cas échéant avec retournement sur elle-même de celle-ci sensiblement à 180°, selon un rayon de courbure faible (typiquement un rayon proche de 0,05mm). Le racleur 230 est formé d'une lame statique à arête émoussée 232 proche du plan de déplacement, en amont, du film qui porte la pellicule. L'arête 232 à sa convexité dirigée vers l'aval du déplacement du film.. Les inventeurs ont en effet déterminé qu'un tel pelage permettait de préserver la surface du complexe adjacent alors qu'un arrachement de la pellicule sans précaution détériore généralement celle-ci. Le racleur précité 230 permet en effet un décollement de la pellicule par effet de cisaillement entre le film fonctionnel et la pellicule de protection. En tirant la pellicule de protection autour de l'arête 232 du racleur 230, on crée un allongement de la courbure extérieure de la couche de pellicule de protection, ce qui crée localement une force tangentielle sur la dite couche, un micro-étirage de la pellicule et un effet de glissement de la couche de pellicule sur le film fonctionnel, évitant ainsi l'arrachement de particules du produit fonctionnel.

De préférence, le dispositif comprend également des moyens de réglage de l'effort de traction exercé sur la pellicule de protection lorsque celle-ci est déviée sur l'arête émoussée 232 du racleur 230.

Sur la figure 1, le système racleur des ensembles de dépelliculage 120, 320, sont référencés 122, 322. Les pellicules 81, 82, 84 et 85, retirées sur les postes 120, 320, 220 et 225, sont dirigées vers des rouleaux respectifs 124, 324, 224 et 229. A cette fin, les pellicules 84 et 85, sont guidées par des rouleaux 221, 222, d'une part, et 226 d'autre part.

Les moyens de chauffage 130 et 330 ont pour fonction de porter à température contrôlée la surface externe d'interface des électrolytes 50 et 30 avant que ceux-ci ne soient portés au contact de la couche d'anode 40 dans l'ensemble de complexage C, pour permettre par la suite une bonne adhérence entre les couches d'électrolyte 50 et 30 et l'anode 40. De préférence, ces moyens de chauffage 130 et 330 sont formés de fours à montée en température rapide et à descente en température rapide, aptes à opérer un balayage d'air chaud, par une circulation forcée en boucle et régulée d'air chaud, sur les interfaces précitées. Typiquement, les moyens de chauffage 130 et 330 sont conçus pour diffuser de l'air comprimé thermostaté, à la précision du °C, par exemple à 60°C, sur les interfaces d'électrolytes 50 et 30.

Plus précisément encore, l'ensemble du dispositif conforme à la présente invention comprenant des phases séquentielles d'interruption de déplacement des films d'alimentation en amont du module d'enroulement E, pour permettre la coupe du complexe, l'évacuation successive de chaque enroulement, et le réengagement d'un élément suivant, de préférence les fours 130 et 330 sont également pilotés de manière séquentielle. C'est-à-dire que la diffusion d'air chaud, dans les fours 130 et 330 est interrompue cycliquement lors de l'arrêt du défilement des complexes, afin d'éviter une montée en température néfaste de la portion des complexes située dans ces fours. Une surexposition à la chaleur de ces tronçons de films pourraient en effet altérer la qualité du complexe final.

Par ailleurs pour éviter une montée en température intempestive des tronçons de film stagnant dans les fours, pendant les phases d'arrêt, les moyens de chauffage 130, 330 peuvent comporter des moyens aptes à insuffler séquentiellement un jet d'air frais comprimé sur les films. Ces moyens sont adaptés typiquement pour ramener la température à l'intérieur des fours à une valeur de l'ordre de 40°C.

De préférence les fours 130, 330 sont formés d'un circuit en boucle. Sur les figures on a référencé 132, 332, les tronçons de ces fours dans lesquels circulent les films multicouches et 134, 334 des ventilateurs assurant séquentiellement la soufflerie d'air chaud et d'air froid. Pour assurer le chauffage, de préférence des éléments chauffants constitués de multifils nus électriquement conducteurs sont placés en regard de la sortie des ventilateurs 134, 334.

On a repéré sur la figure 1 sous les références IX, X, XI, XII, XIII, XIV, XV et XVI respectivement la localisation sur le trajet du dispositif des différents complexes illustrés sur les figures 9, 10, 11, 12, 13, 14, 15 et 16.

Il est important de contrôler le positionnement relatif des bords latéraux longitudinaux des différents films 10, 20, 30, 40, 50 et 60 formant le complexe issu de l'ensemble C, afin d'éviter des contacts électriques parasites entre ces différentes couches.

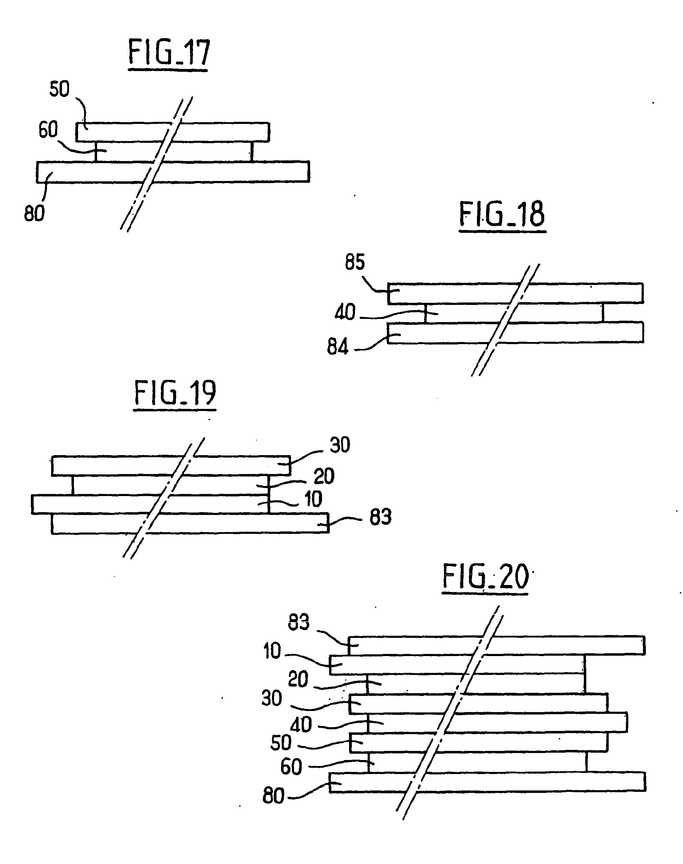

On a représenté sur la figure 17 le positionnement relatif des bords longitudinaux de la pellicule 80, de la cathode 60 et de l'électrolyte 50 en aval du poste de dépelliculage 120. On notera que la cathode 60 possède une largeur inférieure à l'électrolyte 50, que ce dernier déborde de part et d'autre de la cathode 60, que la pellicule 80 possède une largeur supérieure à l'électrolyte 50 et qu'elle déborde de part et d'autre de celui-ci.

On a représenté sur la figure 18, le positionnement relatif des bords longitudinaux des pellicules 84, 85, et de l'anode 40. On notera que l'anode 40 possède une largeur inférieure aux deux pellicules 84, 85, lesquelles peuvent posséder des largeurs identiques et que les pellicules 84, 85, débordent de part et d'autre de l'anode 40.

On a représenté sur la figure 19, le positionnement relatif de la pellicule 83, du collecteur 10, de la cathode 20 et de l'électrolyte 30. On notera que la cathode 20 possède une largeur inférieure au collecteur 10, qu'un premier bord de la cathode 20 affleure un premier bord du collecteur 10, que l'électrolyte 30 possède une largeur supérieure à la cathode 20, qu'elle déborde de part et d'autre de celle-ci, que l'électrolyte 30 déborde par rapport au premier bord de la cathode 20 et du collecteur 10, mais que le second bord de l'électrolyte 30 est située en retrait du collecteur 10, que la pellicule 83 a un premier bord qui déborde par rapport au premier bord de l'électrolyte 30 mais possède un second bord qui affleure le second bord de l'électrolyte 30.

Enfin, on a représenté sur la figure 20, le positionnement relatif de la pellicule 80, de la cathode 60 de l'électrolyte 50, de l'anode 40, de l'électrolyte 30, de la cathode 20, du collecteur 10 et de la pellicule 83, en sortie du module de complexage C.

On notera que les bords des électrolytes 50 et 30 sont superposés, l'anode 40 ayant un bord en retrait des électrolytes 50 et 30 sur le côté émergeant du collecteur 10, tandis que l'anode 40 dépasse des électrolytes 30, 50 sur le côté opposé.

On a référencé XVII, XVIII, XIX et XX sur la figure 1, la localisation des complexes représentés respectivement sur les figures 17, 18, 19 et 20.

Le positionnement relatif des couches représenté sur les figures 17 et 18 est assuré lors de la réalisation des bobines d'alimentation 104 et 304. Le positionnement relatif représenté sur la figure 19 est assuré lors du pelliculage dans le module 260. Le positionnement relatif représenté sur la figure 20 est assuré dans le module de complexage C.

Afin de définir le positionnement relatif (que l'on peut également qualifier « d'alignement relatif ») nécessaire entre les deux sous-ensembles représentés sur les figures 17 et 19 et la couche d'anode 40, il est prévu de préférence des moyens aptes à détecter le positionnement des bords longitudinaux des complexes respectifs en amont de l'ensemble de complexage C et des moyens aptes à déplacer ces complexes, par rapport à un référentiel commun, en amont du module de complexage C, pour obtenir le positionnement relatif souhaité. De préférence, ces moyens de déplacement agissent sur les moyens d'alimentation 100, 200 et 300. A cette fin, de préférence, chacun de ces moyens d'alimentation 100, 200 et 300 est monté sur une platine individuelle susceptible de déplacement contrôlé par rapport au bâti support général 900 du dispositif. Plus précisément encore, de préférence, chacune de ces platines est montée à pivotement autour d'un axe respectif 101, 201, 301 et associée à un moyen de déplacement contrôlé.

Les moyens de détection de positionnement des bords des complexes sont formés de préférence de moyens optiques, le cas échéant infra-rouge ou laser, ou de moyens ultrasons, disposés sur une fourche à deux éléments émetteur/récepteur disposés respectivement de part et d'autre du trajet de déplacement du multicouche.

Sur la figure 1 on a référencé 140 un tel moyen de détection associé au complexe issu des moyens 100, 280 le moyen équivalent de détection associé au complexe issu des moyens 260 et 340 le moyen équivalent de détection associé au complexe issu des moyens 300.

Le moyen de détection 140 est placé entre le rouleau 114 et le four 130. Le moyen de détection 340 est placé entre le rouleau 314 et le four 330. Le moyen de détection 280 est placé entre le module primaire de complexage 260 et le module de complexage, C.

Les moyens de déplacement précités peuvent être formés de moyens à base de vérins pneumatiques ou tous moyens équivalents.

De préférence, chacune des platines précitées porte un moyen d'amortissement apte à reposer contre le bâti commun précité 900 pour éviter toute vibration du dispositif. A titre d'exemple non limitatif, ces moyens d'amortissement peuvent être formés de ventouses.

Les axes de pivotement précités 101, 201 et 301 sont de préférence parallèles à la platine 900. Ils passent par le centre (axe de rotation 102, 202, 302) des dérouleurs 104, 204, 304 et par un plan médian de la largeur de la bobine placée sur le dérouleur. Ils sont par ailleurs parallèles aux tronçons de films multicouches respectifs associés, situés immédiatement en amont de l'ensemble de complexage C, imposés par les rouleaux 114, 262 et 314.

A cet égard on notera que le tronçon du film d'anode 40 situé en amont du module de complexage C, guidé par le rouleau 262, est situé sensiblement selon la bissectrice de l'angle formé par les tronçons des complexes 90 et 92 issus respectivement des dérouleurs 104 et 304, en amont du module de complexage, tels que guidés par les rouleaux 114 et 314. Plus précisément encore, en amont du module de complexage, les complexes 90 et 92 font entre eux un angle de l'ordre de 150° et le film d'anode 40, situé selon leur bissectrice est sensiblement à 75° de chacun de ces deux complexes 90 et 92.

De même de préférence, l'anode 40 est située, en amont du module de complexage C, sensiblement selon la bissectrice des tronçons des pellicules 84 et 85 situés en aval des dépelliculeurs 220 et 225, lesquels tronçons de pellicules 84 et 85 font entre eux un angle de l'ordre de 60°.

Les rouleaux de renvoi 110, 112, 114, 221, 222, 226, 310, 312 et 314 permettent de disposer les chargeurs 104, 204 et 304 dans des positions éloignées, et de rapprocher les tronçons de complexe impliqués, en amont du module de complexage C de sorte que l'angle complet formé entre ceux-ci, au niveau du module de complexage, soit inférieur à 180°.

On notera que les moyens de positionnement relatif précités des complexes de base ont non seulement pour fonction de garantir une connectique électrique satisfaisante dans le produit final, et notamment une protection des cathodes par débordement de l'électrolyte, pour éviter les courts-circuits, mais également d'optimiser la surface active en fonctionnement, dans une largeur de complexe la plus faible possible.

Les rouleaux de réception des différents ensembles de dépelliculage 124, 224, 229, 324, 520 et 522 comprennent de préférence des enrouleurs motorisés.

De même les dérouleurs 104, 204 et 304 sont de préférence motorisés et paramétrés pour maîtriser la force de traction, constante sur les films multicouches impliqués. Il est en effet important de maintenir constante la traction exercée sur les films pour avoir une reproductibilité dans la réalisation des éléments.

Les moteurs ainsi associés aux dérouleurs 104, 204 et 304 sont commandés alternativement en moteur, à l'origine d'un enroulement de complexe, puis en frein lorsque l'entraînement du complexe est pris en charge par des moyens aval.

On notera en particulier que dans ce contexte, les moteurs des différents dérouleurs 104, 204, 304 et dépelliculeurs 124, 224, 229, 324, 520 et 522, sont contrôlés par une unité centrale programmée pour faire évoluer de manière adéquate les efforts moteurs et les efforts de freinage respectifs requis en prenant en compte l'évolution du diamètre de films déroulés et respectivement du diamètre de pellicule enroulée.

Ces diamètres peuvent être soit calculés par l'unité centrale, à partir de la longueur respective de complexe et de pellicule traitée, soit mesurée à l'aide de capteurs adéquats, par exemple à ultrasons, équipant respectivement chacun des dérouleurs et enrouleurs concernés 104, 204, 304, 124, 224, 229, 324, 520 et 522.

L'ensemble de complexage C comprend de préférence deux rouleaux pinceurs 400, 410, montés à rotation autour d'axes parallèles et entre lesquels est acheminé l'empilage formé des couches superposées : pellicule 80, cathode 60, électrolyte 50, anode 40, électrolyte 30, cathode 20, collecteur 10 et pellicule 83.

Les deux rouleaux pinceurs 400, 410 sont sollicités en rapprochement relatif sous un effort contrôlé. Ils exercent donc un effort de pression contrôlé sur les films acheminés entre ces rouleaux 400, 410. A cette fin, de préférence, l'axe de rotation du rouleau 400 est fixe tandis que l'axe de rotation du rouleau 410 est monté sur un équipage sollicité à déplacement vers le rouleau 400 précité sous un effort contrôlé, par exemple par un organe élastique telle qu'une lame 412. De préférence le rouleau 410 est également monté sur un équipage escamotable piloté par un moyen d'entraînement, par exemple un vérin, pour assurer sur commande le dégagement du rouleau 410 et faciliter la mise en place du complexe.

On retrouve ainsi en sortie de l'ensemble de complexage C l'empilement illustré sur les figures 15 et 20.

Le cas échéant les rouleaux de complexage 400, 410 peuvent être chauffants. Leur diamètre est typiquement au moins égal à 20 mm.

Le dispositif conforme à la présente invention comprend en outre entre le module de complexage C et le module d'enroulement E, un ensemble 500 à fonctions multiples et ayant notamment pour fonction 1) de contrôler le débit (longueur) de complexe, dans un module 510, 2) de réaliser des coupes longitudinales localisées dans le collecteur 10, au niveau d'un module 520, 3) d'assurer alternativement l'entraînement du complexe au début d'un enroulement puis le freinage de ce complexe lorsque celui-ci est placé en traction par le mandrin 610, au niveau d'un module 530, 4) de retirer les pellicules 80 et 83, dans un module 540, 5) de sectionner les couches 10 à 60 de l'empilement fonctionnel après défilement d'une longueur correspondant à l'enroulement souhaité, dans un module 550 et 6) de chauffer les faces externes de l'empilement résultant à la fin d'un enroulement, au niveau d'un module 560.

Le dispositif de détection 510 est destiné à piloter une correction des défauts de synchronisation pouvant résulter de microglissements du complexe sur les rouleaux 400, 410, afin d'assurer une vitesse constante d'alimentation de l'enrouleur E.

A titre d'exemple non limitatif, un tel dispositif de détection 510 peut être formé d'un rouleau de synchronisation 512 monté sur un levier pivotant 514 et sollicité en appui contre le complexe en défilement par un vérin pneumatique ou tout moyen équivalent, et associé à un codeur absolu 516.

Le complexe est plaqué contre le rouleau 512 par un rouleau 518 placé en amont sur le chemin de déplacement du complexe.

Le module de coupe 520 est destiné à réaliser un refendage linéaire séquentiel, en sens longitudinal, sur le bord du collecteur 10. Sur les figures annexées les tronçons de coupe résultant sont référencés 521. Chaque tronçon 521 a une longueur L1 sensiblement égale, tout en étant légèrement inférieure, à une demie circonférence d'enroulement sur le mandrin 610. L'actionnement de ce dispositif 520 est piloté de sorte que les refendages 521 se retrouvent tous superposés sur une même face de l'élément final bobiné. En d'autres termes ces refendages 521 sont opérés avec un pas P1 identique à la longueur de chaque spire réalisée sur le mandrin 610. Dans la mesure où cette longueur est variable et croissante, en raison de l'épaisseur accumulée sur le mandrin 610, de préférence le pas des refendages 521 est également variable.

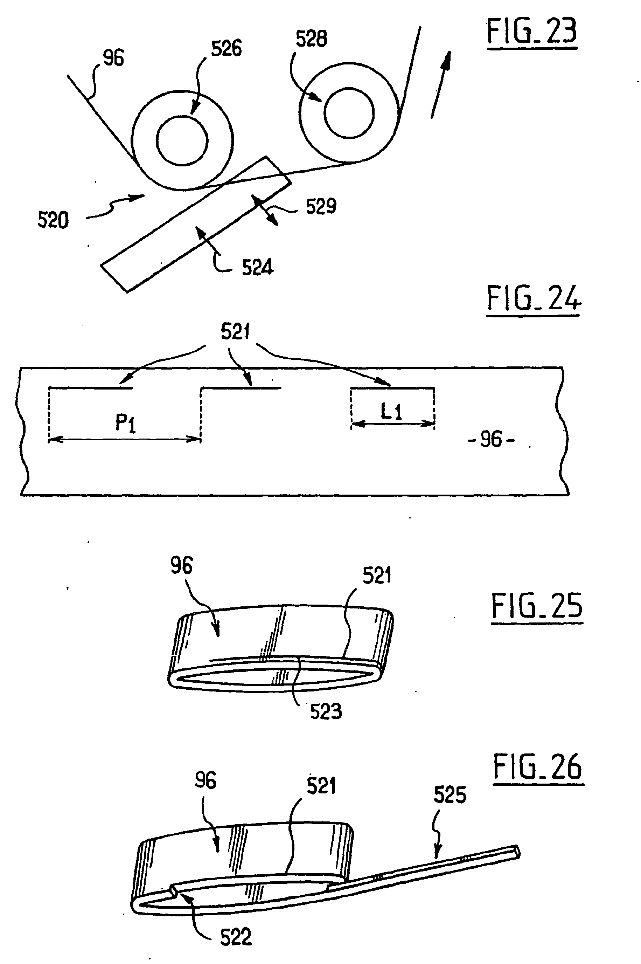

Comme on l'a illustré schématiquement sur la figure 26 annexée, au niveau du poste de conformation finale 700, un segment de découpe transversale 522 est opéré entre une extrémité axiale de la découpe précitée 521 et le bord libre adjacent du collecteur 10, puis la bande latérale externe 523 ainsi délimitée dans le collecteur 10 est déployée vers l'extérieur de l'élément enroulé, pour servir de connecteur sur le concentrateur de courant. Sur la figure 26 la partie de bande de collecteur 10 ainsi déployée est référencée 525.

Le dispositif de refendage 520 est de préférence de type « coupe en l'air ». Il comprend une lame de refendage oscillante 524 adaptée pour venir sectionner localement et séquentiellement le collecteur 10, entre deux rouleaux 526 et 528 servant d'appui au complexe. Sur la figure 23 le mouvement de pivotement de la lame 524 est schématisé sous la référence 529.

Le module d'entraînement 530 comprend de préférence deux rouleaux pinceurs 532, 534, entre lesquels chemine l'ensemble complexe illustré sur les figures 15 et 20. Ces deux rouleaux 532, 534, sont associés à des motorisations respectives. Lors de l'acheminement de l'extrémité avant du complexe vers le mandrin 610, les rouleaux 532, 534, sont pilotés en mode moteur d'entraînement. En revanche, une fois l'extrémité avant du complexe saisie par le mandrin 610, celui-ci devient moteur, et les rouleaux 532, 534, sont pilotés, par leur moteur respectif, en mode de freinage. On garantit ainsi un placage étroit du complexe sur le mandrin 610. Ces deux rouleaux pinceurs 532, 534 sont situés à proximité du mandrin enrouleur 610, en amont de celui-ci.

L'entraînement des rouleaux pinceurs 400, 410 est asservi sur celui des rouleaux pinceurs 532, 534 qui opèrent en maître, par rapport aux rouleaux esclaves 400, 410.

L'un au moins des rouleaux 532, 534 est associé à un moyen de sollicitation tel que les rouleaux 532 et 534 exercent sur le complexe qu'ils encadrent, un effort de pincement contrôlé.

Par ailleurs de préférence, l'un au moins des rouleaux 532, 534, par exemple le rouleau 534, est monté sur un équipage escamotable 535, par exemple piloté par un vérin 536, pour faciliter l'insertion du complexe entre les rouleaux 532 et 534.

Le retrait des pellicules 80 et 83 est opéré, dans le module 540, à l'aide de racleurs 541, 543 similaires aux racleurs 122 et 322 précités. Les pellicules 80 et 83 sont dirigées, après dépelliculage, grâce à des rouleaux 542, 544 sur des rouleaux d'accumulation 546, 548. Ceux-ci sont motorisés, comme indiqué précédemment.

Le sectionnement transversal complet de l'empilement des 6 couches résultantes 10, 20, 30, 40, 50 et 60 du complexe est opéré, juste en aval des lames de dépelliculage 541, 543, dans le module 550, par tous moyens appropriés.

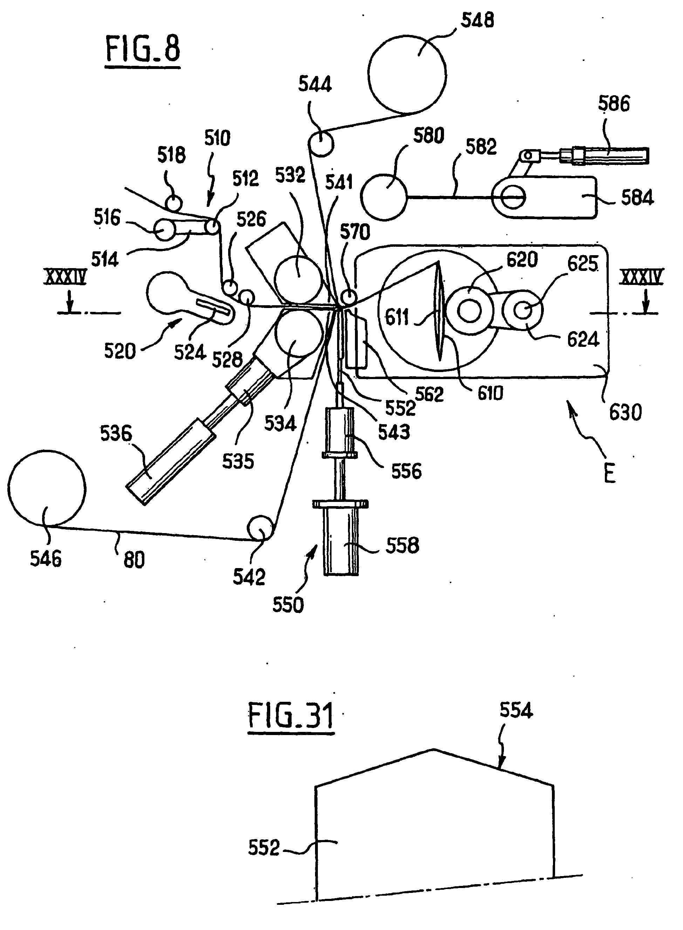

De préférence ces moyens de coupe 550 comprennent une lame 552 comprenant un bord tranchant 554 formé d'un dièdre convexe à deux pentes symétriques (voir figure 31) animée d'une vitesse rapide de déplacement, sous faible course lorsque la coupe est requise.

Les déplacements de la lame de coupe 552 sont pilotés par un moyen 556 formé de préférence d'un vérin. Par ailleurs la lame de coupe 552 est de préférence placée sur un équipage escamotable piloté par un moyen de déplacement spécifique, par exemple un second vérin 558, pour permettre d'escamoter la lame de coupe sur demande, afin de faciliter la mise en place du complexe, ou toute autre intervention de maintenance requise.

En variante ces moyens de coupe peuvent être formés d'un système marteau/enclume similaires à celui précédemment décrit sous les références 272, 274.

On va maintenant préciser la structure des moyens de coupe 550, par rapport à l'état de la technique.

Dans le cadre d'un dispositif automatisé de réalisation d'enroulements, il est nécessaire d'utiliser des moyens de coupe automatisés et synchronisés avec le défilement du complexe.

A cet effet, on connaît des moyens de coupe de type « à appui » ou « à gorge ». Ces moyens comprennent généralement un outil tranchant et un élément complémentaire positionné en face l'un de l'autre, de part et d'autre du chemin de défilement du complexe. L'outil tranchant se présente sous la forme d'une lame ou d'une molette. La lame ou la molette vient trancher séquentiellement le complexe en appui contre une surface d'appui ou à l'intérieur d'une gorge. Dans les deux cas, le complexe est amené au contact soit de la surface d'appui, soit des deux bords de la gorge.

Un inconvénient de ces techniques de coupe est que dans le cadre de réalisation d'ensembles de stockage d'énergie, le contact du complexe avec l'élément complémentaire risque d'entraîner le collage de certaines couches formant le complexe sur l'élément complémentaire.

Ce contact génère en outre une pollution des faces externes du complexe par l'élément complémentaire et vice versa.

Les inventeurs on constaté qu'il était particulièrement avantageux de rassembler les films mono-couche ou multi-couches formant le complexe en sandwich entre des pellicules de protection. Ces pellicules ont pour fonction d'éviter une pollution des faces externes du complexe par l'environnement extérieur et d'empêcher le collage des complexes sur les différents rouleaux impliqués. Ces pellicules participent en outre à l'entraînement du complexe.

Les pellicules protégeant les faces externes du film complexe doivent être retirées avant l'enroulement du complexe sur le mandrin. Lorsque ces pellicules sont retirées, elles le sont le plus loin possible sur la trajectoire du film, de sorte que le film ne passe jamais nu sur un rouleau lors de son parcours et qu'il soit toujours entraîné par les pellicules.

Ces pellicules sont par conséquent retirées de préférence immédiatement en amont des moyens de coupe finaux.

Ceci exclut l'utilisation des moyens de coupe de type « à appui » ou « à gorge » précités dont l'élément complémentaire à surface d'appui ou à gorge présente un certain encombrement et est mal adapté dans le cadre d'une machine automatique de réalisation d'éléments de stockage d'énergie. En effet, cette machine doit être placée dans un environnement anhydre tel qu'une salle anhydre de faibles dimensions. Par conséquent, les éléments de cette machine doivent être les plus compacts possible pour un encombrement final minimal de la machine.

Dans ce contexte l'invention propose un dispositif de coupe compact, compatible avec les contraintes de réalisation en automatique d'ensembles de stockage d'énergie sous forme d'enroulements.

A cet effet l'invention propose un dispositif de réalisation d'ensembles de stockage d'énergie électrique, comprenant des moyens d'entraînement d'un film complexe et des moyens d'enroulement du film complexe, caractérisé en ce qu'il comprend en outre des moyens pour tendre le film complexe sur un tronçon et des moyens de coupe mobiles aptes à être actionnés séquentiellement pour venir effectuer une coupe en l'air du film complexe au niveau du tronçon tendu.

Dans un tel dispositif, la coupe étant réalisée en l'air, le film ne se trouve en appui sur aucun élément. Ce dispositif permet donc d'exclure toute pollution du complexe.

Le fait que le film soit tendu lorsqu'il défile devant les moyens de coupe permet en outre de réaliser une coupe transversale précise.

Avantageusement, les moyens pour tendre le film complexe comprennent un rouleau sur lequel le film complexe vient en appui, le rouleau étant disposé entre les moyens de coupe et les moyens d'enroulement du film complexe, sur la trajectoire du film.

De manière préférentielle, les moyens de coupe comprennent une lame comprenant un bord tranchant formé d'un dièdre convexe à deux pentes symétriques.

Le fait que la lame de coupe présente la forme d'un dièdre symétrique à deux pentes présente certains avantages par rapport à une lame classique qui présenterait une pente simple. La symétrie de la lame permet de limiter la déformation transversale du film. Le découpage par une lame à pente simple risquerait en effet de générer lors de sa pénétration dans le film des contraintes transversales qui pourraient fausser l'ajustement latéral du film. En outre, pour un même angle de lame, la lame à deux pentes présente une hauteur inférieure à la lame à pente simple, de sorte que la lame à deux pentes peut être actionnée avec une course moindre que la lame à pente unique. Son actionnement est par conséquent plus rapide.

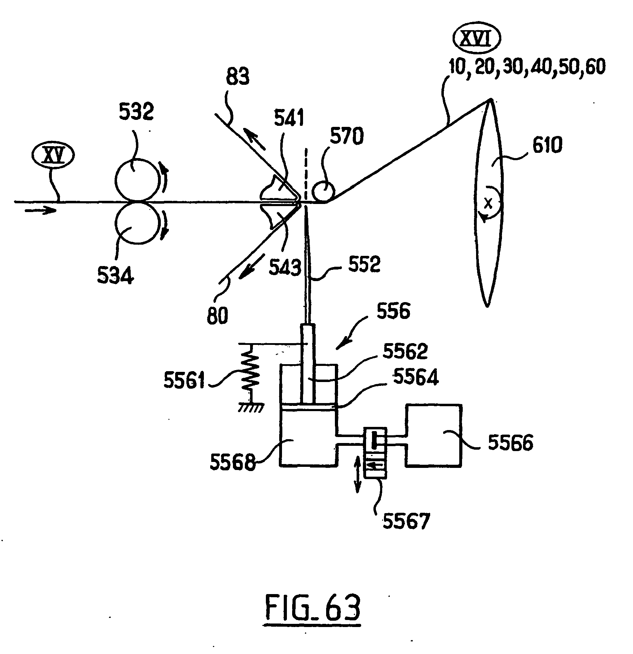

Sur la figure 63, on a représenté de manière schématique les moyens de coupe 550 et les moyens d'actionnement associés.

Les moyens de coupe 550 sont disposés sur le chemin de défilement du complexe entre les moyens de dépelliculage 541, 543 et le rouleau d'appui 570, le plus près possible des moyens de dépellliculage.

Ces moyens de coupe comprennent la lame 552 (voir figure 31). Cette lame 552 est commandée en déplacement par des moyens d'actionnement 556. Ces moyens d'actionnement 556 comprennent un vérin pneumatique comprenant une tige 5562 solidaire d'un piston 5564 délimitant avec le corps cylindrique du vérin une chambre 5568 d'injection de gaz sous pression.

La chambre 5568 d'injection est reliée à un distributeur de gaz sous pression 5566 directement juxtaposé au vérin 556. La chambre 5568 communique avec le distributeur de gaz 5566 par l'intermédiaire d'une vanne 5567 pouvant être commandée en position ouverte ou fermée.

Lorsque la vanne 5567 est commandée en position ouverte, le gaz sous pression est injecté quasi-instantanément du distributeur 5566 vers la chambre 5568 d'injection. L'injection de gaz provoque la translation du piston 5562 et par conséquent de la lame qui vient sectionner le complexe suivant la ligne de coupe représentée en pointillés sur la figure 63.

Grâce à ce dispositif de coupe, une coupe peut être réalisée en moins de 0,2 secondes (intervalle de temps entre la commande de la coupe et le sectionnement complet du complexe). Le déclenchement rapide du dispositif est obtenu grâce au fait que le distributeur 5566 est directement juxtaposé au vérin. La chambre d'injection 5568 est alimentée directement par le distributeur 5566 sans tuyauterie. Ainsi, le circuit pneumatique entre le distributeur 5566 et la chambre d'injection 5568 est extrêmement court et permet une montée rapide en vitesse du piston.

Cette montée en vitesse rapide permet de combiner à l'effet tranchant de la lame 552, un effet de frappe sur le film complexe qui garantit l'obtention d'une coupe franche.

Comme on peut le constater sur la figure 63, le vérin 556 est un vérin de type « simple effet », il ne peut être alimenté en gaz sous pression que du côté du piston 5564 ne supportant pas la tige 5562. Le côté supportant la tige est à l'air libre. Le rappel du piston est donc réalisé par un ressort de rappel 5561 lié à la tige 5562. Ce ressort 5561 permet de ramener la lame 552 et le piston 5564 en position de repos après leur actionnement.

Les moyens d'actionnement du dispositif de coupe 550 sont commandés en synchronisation avec l'ensemble des rouleaux du dispositif de réalisation d'ensembles de stockage.

En particulier, les rouleaux 532 et 534 d'entraînement du film complexe et le mandrin 610 sont pilotés en frein pour immobiliser le tronçon de film soumis aux moyens de coupe lors de son sectionnement. Au moment du déclenchement du système de coupe, le tronçon de film est donc maintenu immobile, tendu en position entre les rouleaux 532 et 534 et le rouleau d'appui 570.

En variante, les moyens de coupe peuvent être formés d'un fil tendu ou d'une lame à pointes multiples (du type scie égoïne) ou encore d'un laser. On notera que l'utilisation d'un laser suppose l'aspiration de la matière de film sublimée pour éviter une pollution des couches et/ou des éléments du dispositif de réalisation d'ensembles de stockage.

Dans tous les cas, la coupe réalisée est avantageusement une coupe en l'air.

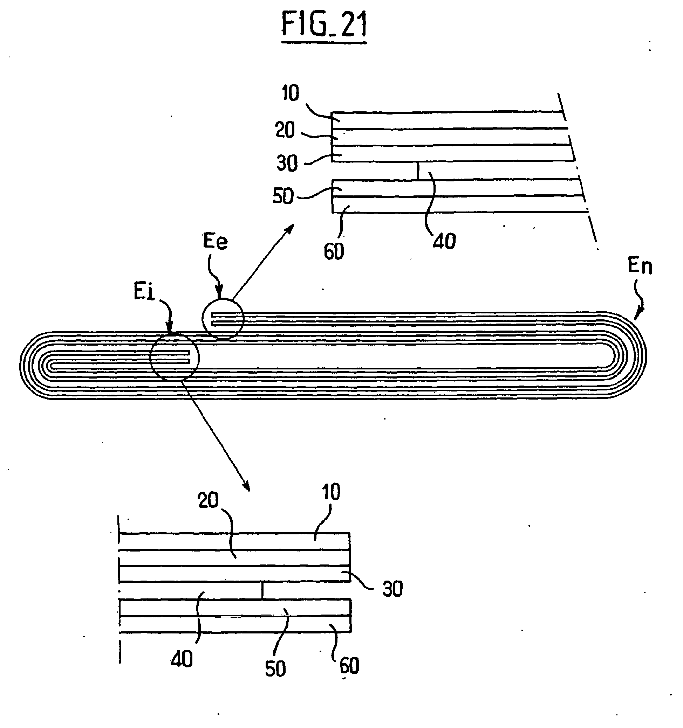

La coupe opérée par le moyen de coupe 552 est opérée sensiblement au milieu de l'intervalle formé dans la couche d'anode en lithium 40, au niveau du poste de frappe 572/574. Ainsi comme on le voit sur la figure 21, la couche d'anode 40 est placée en retrait des autres couches composant l'enroulement, tant au niveau de l'extrémité avant que de l'extrémité arrière de l'enroulement.

Par ailleurs comme on le voit sur la figure 21, de préférence les deux extrémités axiales Ei, Ee de l'enroulement fini En ne sont pas superposées. En d'autres termes l'extrémité externe Ee de l'enroulement est interrompue en deçà de l'extrémité interne Ei, pour éviter une surépaisseur à ce niveau. Ainsi l'enroulement fini aplati présente globalement une épaisseur identique sur toute son étendue.

Le chauffage des faces externes de l'empilement est opéré par tous moyens appropriés dans le module 560, par exemple par soufflage d'air chaud pulsé ou passage sur un rouleau chauffant.

Ce chauffage est de préférence assuré par une barre escamotable de soufflage d'air chaud 562 située immédiatement en aval du dispositif de coupe 550, pour chauffer une bande transversale du complexe, afin de préparer le thermo-collage de la fin de l'enroulement.

Les moyens de chauffage précités ont pour objet de résoudre le problème qui suit.

On connaît les techniques de réalisations d'ensembles de stockage d'énergie électrique sous forme d'enroulements multi-couches.

Ces ensembles sont généralement réalisés par enroulement sur un mandrin circulaire de révolution de couches de matériaux polymères superposées. Lorsque le nombre de tours d'enroulement est suffisant, les couches doivent être coupées transversalement par des moyens de coupe.

Pour achever l'enroulement et éviter le flottement de l'extrémité coupée (appelée queue de l'enroulement), cette extrémité doit être définitivement fixée à l'enroulement. L'enroulement obtenu est ensuite libéré du mandrin.

L'enroulement circulaire de révolution est aplani par des moyens de pressage de manière à lui donner une forme plane moins encombrante. Cette forme plane permet un empilement aisé des ensembles de stockages et un raccordement sous forme série/parallèle de plusieurs ensembles.

La fixation de la queue de l'enroulement peut être réalisée suivant différentes techniques.

Une technique possible consiste à apposer sur l'enroulement un élément adhésif (par exemple un ruban) pour maintenir la queue sur la surface externe de la dernière spire.

L'inconvénient de cette technique est qu'elle génère une surépaisseur locale qui lors de l'opération ultérieure de pressage de l'ensemble provoque une augmentation de pression localisée au niveau de l'élément adhésif. Cette augmentation locale crée une contrainte locale dans les spires, génératrice de défauts de qualité : notamment manque d'homogénéité de l'enroulement, vieillissement rapide, fluage de la couche d'électrolyte pouvant entraîner des court-circuit à cet endroit.

En outre, la colle de l'élément adhésif utilisé peut se révéler constituer un véritable polluant sur le plan électrochimique de l'ensemble de stockage réalisé.

Une autre technique possible consiste à appliquer de la colle directement sur l'enroulement, par exemple par pulvérisation.

Toutefois, cette technique présente les mêmes inconvénients que la technique qui précède, relatifs aux défauts dus à la surépaisseur générée ou à la pollution de l'ensemble.

En outre, dans le cas d'une réalisation automatique d'ensembles, l'utilisation d'une colle nécessite un temps de polymérisation qui peut retarder la cadence de fabrication des ensembles de stockage d'énergie.

Il existe des colles dites « rapides », de type cyanocrylate. Néanmoins, on notera que ces colles ne fonctionnent pas en atmosphère anhydre.

Or, dans le cadre d'une machine automatique de réalisation d'ensembles de stockage d'énergie, cette machine doit être placée dans un environnement anhydre tel qu'une salle anhydre de faibles dimensions.

C'est pourquoi, les deux techniques qui précèdent ne semblent pas a priori adaptées à la fabrication automatisée d'ensembles de stockage d'énergie sous forme d'enroulements multicouches et en particulier d'éléments plans.

Dans ce contexte un but auxiliaire de l'invention est de permettre une fabrication en automatique et en continu d'ensembles multi-couches de stockage d'énergie électrique comprenant un dispositif de collage de fin d'enroulement adapté.

A cet effet l'invention propose un dispositif de réalisation d'ensembles de stockage d'énergie, comprenant des moyens d'entraînement d'un film complexe, des moyens d'enroulement du film complexe et des moyens de coupe pour sectionner le film complexe en fin d'enroulement, caractérisé en ce qu'il comprend en outre des moyens de chauffage pour chauffer le film complexe et des moyens pour presser l'extrémité de fin d'enroulement du film contre la surface de l'ensemble enroulé, de sorte que la fin de l'enroulement adhère à cette surface.

Ce dispositif permet de fixer les queues des enroulements de manière simple, par thermo-collage et sans nécessiter aucun produit adhésif supplémentaire qui risquerait de polluer ou de détériorer l'ensemble électrochimique final.

Selon une première mise en oeuvre de l'invention, les moyens de chauffage peuvent inclure des moyens pour maintenir une température ambiante dans un compartiment incluant le dispositif de réalisation d'ensembles de stockage d'énergie.

Selon une autre mise en oeuvre de l'invention, les moyens de chauffage comprennent des moyens de chauffage localisés pour chauffer une portion du film, lesdits moyens de chauffage étant disposés immédiatement en amont des moyens d'enroulement sur la trajectoire du film complexe.

Dans cette mise en oeuvre, les moyens de chauffage sont disposés pour chauffer une portion du film complexe à proximité de l'extrémité sectionnée du film de sorte que celle-ci adhère à l'ensemble enroulé lors du pressage.

De préférence, les moyens de chauffage sont aptes à être activés en permanence ou de manière séquentielle de manière à éviter une surchauffe de la portion de film.

Cette caractéristique est particulièrement avantageuse dans le cas de moyens de chauffage localisés.

Les moyens de chauffage sont par exemple des moyens de soufflage d'air chaud.

Plus précisément encore de préférence, les moyens de chauffage comprennent un bloc de chauffe constitué d'une barre escamotable 562 en alliage cuivreux positionnée en face du rouleau 570, immédiatement en aval du dispositif de coupe 550 et en amont du mandrin 610. Cette barre escamotable 562 comprend une multitude d'orifices reliés par des conduits munis d'une électrovanne, à des moyens d'injection d'air sous pression.

La barre en alliage cuivreux est maintenue en permanence à une température de chauffage par des moyens de régulation. Cette température est par exemple de l'ordre de 300 degrés Celsius, elle dépend de la nature des couches polymériques 10, 20, 30, 40, 50, 60 à chauffer. Cette température de chauffage est en effet choisie pour obtenir une température d'environ 120 degrés Celsius à la surface du film et recréer un effet collant entre les couches.

La barre escamotable 562 est montée sur un dispositif télescopique piloté par un vérin pneumatique sans tige.

On va maintenant décrire les étapes de collage de fin d'enroulement.

Lors de la réalisation de l'enroulement, le dispositif télescopique est replié de sorte que la barre 562 se trouve éloignée de la surface du film complexe, dans une position de garage.

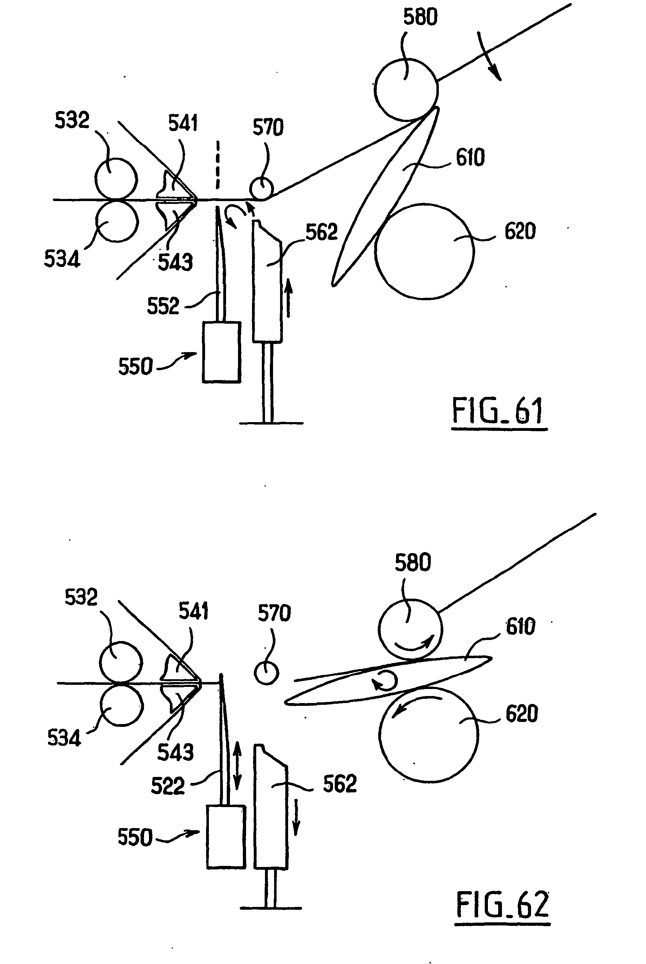

Lorsque le nombre de tours d'enroulement est suffisant, la rotation du mandrin est interrompue et les différents rouleaux d'entraînement sont pilotés en frein de sorte que la bande de film soit immobilisée (voir figure 61). Le rouleau presseur escamotable 580 est déplacé pour venir en appui sur l'enroulement. Juste avant l'opération de sectionnement complet du film complexe par le module de coupe 550, le dispositif télescopique est déployé et la barre 562 est positionnée à proximité de la surface du film complexe.

A ce moment, l'électrovanne est ouverte et de l'air sous pression est soufflé à travers les orifices de la barre 562. Les jets d'airs qui s'échappent des orifices de la barre sont chauffés par le corps de celle-ci. Les jets d'air sont dirigés dans une direction légèrement oblique par rapport à la surface de la bande de complexe, vers la zone de coupe.

Cette caractéristique permet avantageusement d'éviter de surchauffer le complexe contenant une couche de lithium. Les jets d'air chauffent en effet une portion de complexe destinée à être sectionnée, dépourvue de lithium (voir figure 21).

Ces moyens de chauffage ne nécessitent pas de contact mécanique des couches du complexe avec le bloc de chauffe. Ils agissent par convection de l'air chaud soufflé. Ceci évite la fonte des couches et le transfert de celles-ci sur le bloc de chauffe.

Au bout d'un temps donné, une fois l'opération de chauffage terminée, le bloc chauffant 562 est escamoté par repli du dispositif télescopique et simultanément, le module de coupe 550 opère un sectionnement transversal de la bande de complexe (voir figure 62).

Puis, le mandrin 610 est à nouveau entraîné en rotation pour poursuivre l'enroulement de la fin du film. Le rouleau presseur 580 en appui sur le mandrin rabat la queue de l'enroulement sur l'ensemble ainsi enroulé, finalisant ainsi le thermocollage de la queue sur l'enroulement.

Le rouleau de guidage 570 peut également être chauffant. Par exemple il peut être maintenu en permanence à une température d'environ 110 degrés Celsius. Lors de l'interruption du défilement de la bande de complexe, la portion de complexe en contact avec ce rouleau serait alors chauffée dans toute son épaisseur à une température de 110 degrés Celsius. Ce chauffage sera suffisant pour assurer le collage de la queue de l'enroulement.

Dans un tel cas, le rouleau de guidage 570 devra être ajusté en position par rapport à la bande de complexe. En particulier, il ne devra pas déborder sur l'une des couches d'électrolyte 30 ou 50 qui dépassent pour éviter le collage de ces couches sur le rouleau et leur arrachement subséquent.

Enfin, le bloc chauffant 562 pourrait être remplacé par tout autre élément chauffant tel qu'un four similaire aux modules de chauffage 130 et 330, des résistances chauffantes à filament ou à infra-rouge, etc.

Le mandrin 610 poursuit sa rotation sur un tour supplémentaire pour que le rouleau satellite achève le pressage du dernier tour enroulé. Pendant environ 100 degrés de rotation du dernier tour, le rouleau presseur 580 et le rouleau presseur 620 sont actifs simultanément. Le rouleau presseur escamotable 580 sera escamoté lorsque le mandrin aura dépassé la position horizontale d'environ 30 degrés, après que la queue d'enroulement ait été complètement plaquée contre l'ensemble enroulé.

On notera que la température de chauffage de l'élément de chauffe est nettement supérieure à la température de complexage des couches qui est de l'ordre de 40 à 80 degrés Celsius. Cette température garantie un collage fiable et répétitif à l'échelle industrielle.

On pourra éventuellement jouer sur les paramètres de chauffage de l'élément chauffant : température du bloc, débit d'air injecté, temps de soufflage de l'air sur la bande de complexe, etc. pour obtenir un effet plus ou moins collant.

De manière optionnelle, le rouleau presseur escamotable 580 peut être également chauffant. Cette caractéristique permet d'utiliser des températures différentes pour le bloc de chauffe 562 et le rouleau presseur 580 afin de réaliser une progressivité dans l'accroissement de la température du film complexe. Ceci évite d'induire des contraintes trop fortes dans le complexe. Par exemple, le bloc chauffant 562 peut être maintenu à une température de 200 degrés Celsius, ce qui induirait un chauffage de la surface du film à une température d'environ 120 degrés Celsius, tandis le rouleau presseur 580 est maintenu à une température de 200 degrés Celsius.

On va maintenant décrire les moyens d'enroulement E conformes à l'invention.

Ceux-ci comprennent principalement un mandrin 610 monté à rotation autour d'un axe 611.

Le mandrin 610 présente une section droite, transversale à son axe de rotation 611, non circulaire de révolution. Le mandrin 610 est sensiblement plat. Il a une section générale en fuseau. Typiquement le rapport entre un grand axe et un petit axe de sa section droite est supérieur à 3, préférentiellement supérieur à 5 et très avantageusement supérieur à 10. Il possède avantageusement une section droite généralement elliptique.

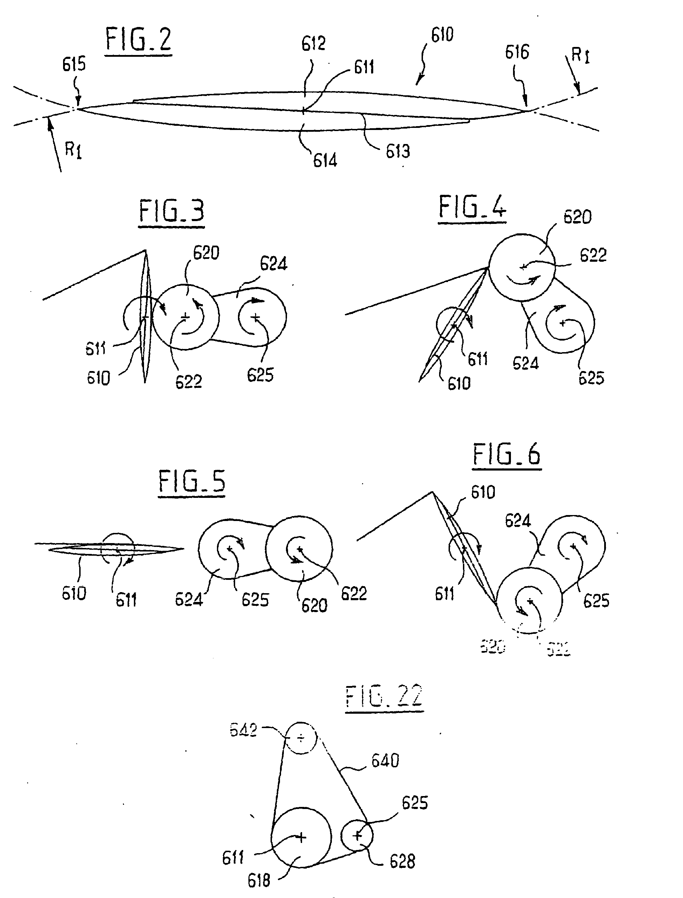

Plus précisément, l'enveloppe externe du mandrin 610 est de préférence délimitée par deux secteurs de cylindre de révolution convexes ayant des rayons identiques (R1 sur la figure 2), mais des axes parallèles éloignés ; par ailleurs cette enveloppe externe délimitant la section droite du mandrin possède des extrémités émoussées 615, 616 à faible rayon.

Le mandrin 610 a une longueur (considérée parallèlement à son axe de rotation 611) supérieure à la largeur des complexes à enrouler.

Plus précisément encore, de préférence, le mandrin 610 est formé de deux mors 612, 614, symétriques et complémentaires. L'interface entre les deux mors 612, 614, c'est-à-dire la face d'appui mutuelle entre ceux-ci, en position d'enroulement, référencée 613 sur les figures est de préférence plane et relie les deux surfaces courbes d'enveloppe externe convexe du mandrin à distance des extrémités effilées de l'ellipse d'enveloppe externe.

A titre d'exemple non limitatif, le grand axe du mandrin 610, formé par les deux mors 612 et 614 accolés, est de l'ordre de 12 cm tandis que le petit axe du mandrin 610, formé par les deux mors 612 et 614 accolés, est de l'ordre de 9 à 10 mm, l'angle formé entre le plan oblique qui correspond à l'interface 613 entre les deux mors 612, 614 et le grand axe du fuseau est typiquement de l'ordre de 2,5°, le fuseau est terminé, sur les extrémités 615, 616 du grand axe, par des arcs de cercle de l'ordre de 0,15mm de rayon, et la distance séparant les centres des surfaces principales cylindriques du mandrin est supérieure à 6 fois leur rayon R1.

Les deux mors 612, 614, sont associés à des moyens d'entraînement, par exemple des vérins hydrauliques ou équivalents adaptés pour assurer sur commande un déplacement relatif contrôlé des deux mors entre une première position dans laquelle les deux mors 612, 614, sont écartés pour permettre l'insertion de l'extrémité avant d'un empilement complexe 10 à 60 à enrouler et une seconde position dans laquelle les deux mors 612, 614, sont accolés pour permettre l'enroulement de l'empilement complexe précité.

Le mandrin 610 formé par la coopération des deux mors 612, 614, est lui-même entraîné à rotation autour de son axe 611, à vitesse non constante, selon des modalités qui seront définies par la suite.

Le mandrin 610 est associé à un rouleau presseur 620.

Celui-ci est monté libre de rotation autour de son axe 622 sur l'extrémité d'un bras rotatif 624.

Le bras 624 est animé d'un mouvement rotatif autour d'un axe 625 excentré par rapport à l'axe 622, et selon une vitesse double de celle du mandrin 610, de telle sorte que le rouleau 620 roule successivement sur chacune des faces du mandrin 610, plus précisément sur l'empilement complexe 10 à 60 enroulé sur celui-ci, afin de le presser régulièrement et d'éviter toute formation de plis dans l'empilement. Le bras 624 est de préférence entraîné en rotation mécaniquement par la rotation du mandrin 610 avec un rapport multiplicateur égal à 2.

Le mandrin 610 et le bras 624 tournent dans le même sens de rotation.

La cinématique de déplacement du mandrin 610 et du rouleau 620 est schématisée sur les figures 3 à 6 associées.

A titre d'exemple non limitatif, comme illustré sur la figure 22, le mandrin 610 et le bras 624 peuvent être entraînés par une courroie commune 640 associée à un moteur 642, grâce à des rouleaux respectifs 618, 628 en prise avec ladite courroie commune 640. Pour assurer une vitesse double au bras 624, le rouleau 628 associé à celui-ci possède un rapport d'entraînement deux fois plus faible que le rouleau 618 associé au mandrin 610, soit typiquement une dimension circonférentielle deux fois plus faible.

On notera que le dispositif comprend de préférence en outre, un rouleau 570, en aval de la lame de coupe 552, en regard de la buse de soufflage d'air chaud 562.

Ce rouleau 570 sert d'ultime guidage au complexe formé, avant enroulement sur le mandrin 610.

La génératrice du rouleau 570 sur laquelle s'appuie le complexe, est située dans un plan défini par la génératrice du rouleau amont 534 et la génératrice du mandrin 610 correspondant au petit axe de celui-ci (laquelle génératrice sert d'appui au complexe quand celui-ci est positionné avec son grand axe parallèle au plan précité, comme illustré sur la figure 5).

L'ensemble formé par la combinaison du mandrin 610, du bras 624 et du rouleau presseur 622 est monté sur un tiroir 630 lui-même associé à des moyens d'entraînement propres à déplacer cet ensemble à translation entre une position d'enroulement telle qu'illustrée sur la figure 1, rapproché du module 500 et une position d'évacuation, éloignée de ces moyens 500, une fois la longueur souhaitée d'empilement enroulée sur le mandrin 610, pour faciliter le retrait de l'enroulement obtenu.

Le tiroir 630 précité peut également être déplaçable dans une position initiale additionnelle temporaire, rapprochée des rouleaux pinceurs d'alimentation 532, 534, lorsque ceux-ci sont pilotés en moteur, pour assurer la saisie de l'extrémité avant du complexe au début de l'enroulement. Une fois cette saisie opérée, de préférence le tiroir 630 est écarté des rouleaux pinceurs 532, 534 pour l'enroulement proprement dit.

Pour achever l'enroulement et éviter un flottement de l'extrémité externe arrière du complexe enroulé, le mandrin 610 est de préférence animé d'un mouvement de rotation complet sur 360° après rupture du complexe enroulé et enroulement complet de ce complexe et le rouleau presseur 620 est maintenu en appui sur l'enroulement pendant cette rotation additionnelle afin de parfaire le « collage » de la dernière spire de l'enroulement, grâce au préchauffage précité par les moyens 560. Le cas échéant, ce chauffage peut être complété par un soufflage d'air chaud au niveau du poste d'enroulement E.

On obtient ainsi un collage de la queue de l'enroulement, sans apport de colle.

On notera que le dispositif peut comprendre en outre, comme illustré sur la figure 8, un rouleau presseur additionnel escamotable 580, placé entre le rouleau 570 et le mandrin 610. Un tel rouleau 580 a pour fonction de permettre le blocage du complexe lors de la coupe et le plaquage de la fin de la bande, sur le mandrin 610. Le rouleau 580 est de préférence lié, par une lame élastique 582, à un équipage oscillant 584, piloté par un vérin 586.

Lors du bobinage de l'enroulement de complexe, sur le mandrin 610, le rouleau 580 est placé dans la position illustrée sur la figure 8, écartée du trajet de déplacement du complexe et éloignée du mandrin 610. A la fin d'un enroulement, après coupe du complexe, au contraire, l'équipage oscillant précité et le rouleau 580 associé, sont déplacés de sorte que le rouleau 580 soit plaqué sur la face du mandrin 610 opposée à celle sur laquelle repose le rouleau 620.

Cet enroulement, obtenu sous une forme généralement aplatie, grâce à la géométrie elliptique du mandrin 610 est ensuite retiré du mandrin 610 et évacué grâce à un robot ou tout moyen équivalent adapté vers un poste de pressage 700 destiné à parfaire la planéité de chaque enroulement obtenu.

Un tel robot peut être formé d'un robot pneumatique à pinces de serrage assurant la préhension de l'élément enroulé de stockage d'énergie électrique sur le mandrin 610, son extraction de celui-ci et par divers mouvements de rotations et de translations, la mise en place de l'élément dans le poste de pressage 700.

Pour l'essentiel ce poste de pressage comprend une presse, formé par exemple d'un vérin presseur 710, chargé de la mise à plat finale de l'élément. Celui-ci opère de préférence en temps masqué, pendant qu'un élément suivant est en cours d'enroulement.

Pour faciliter le retrait de l'enroulement obtenu, le dispositif peut comprendre des moyens aptes à assurer pendant une séquence limitée, à la fin de l'enroulement, un déplacement relatif et alternatif à translation entre les deux mors 612 et 614 composant le mandrin 610, selon une direction parallèle à l'interface 613, pour faire ainsi varier la longueur du grand axe du mandrin, afin de « desserrer » légèrement l'enroulement par rapport au mandrin 610, décoller la première spire et dépincer l'accrochage du premier tour.

Chaque enroulement peut ensuite être dirigé vers un magasin pour la réalisation des étapes ultérieures requises pour la connexion sous la configuration série/parallèle souhaitée. Un tel magasin et les moyens mis en oeuvre pour assurer les liaisons requises série/parallèle, ne seront pas décrits plus en détail par la suite.

Comme on l'a indiqué précédemment, selon une caractéristique avantageuse de l'invention, le mandrin 610 est entraîné à rotation à une vitesse angulaire non constante contrôlée de telle sorte que la vitesse linéaire de défilement de l'empilement complexe alimentant le mandrin 610 soit constante.

Grâce à cette caractéristique, l'invention permet de garantir un effort de traction constant sur le complexe et par conséquent un enroulement parfait sur le mandrin 610, exempt de tout pli ou défaut équivalent.

Par ailleurs grâce au défilement à vitesse constante du complexe, on évite toute nécessité de disposer d'un magasin intermédiaire, en amont du module d'enroulement E, pour absorber les à-coups d'accélération - décélération de la bande. Et l'on permet ainsi la réalisation de l'ensemble du dispositif sous forme compact, dans un volume limité.

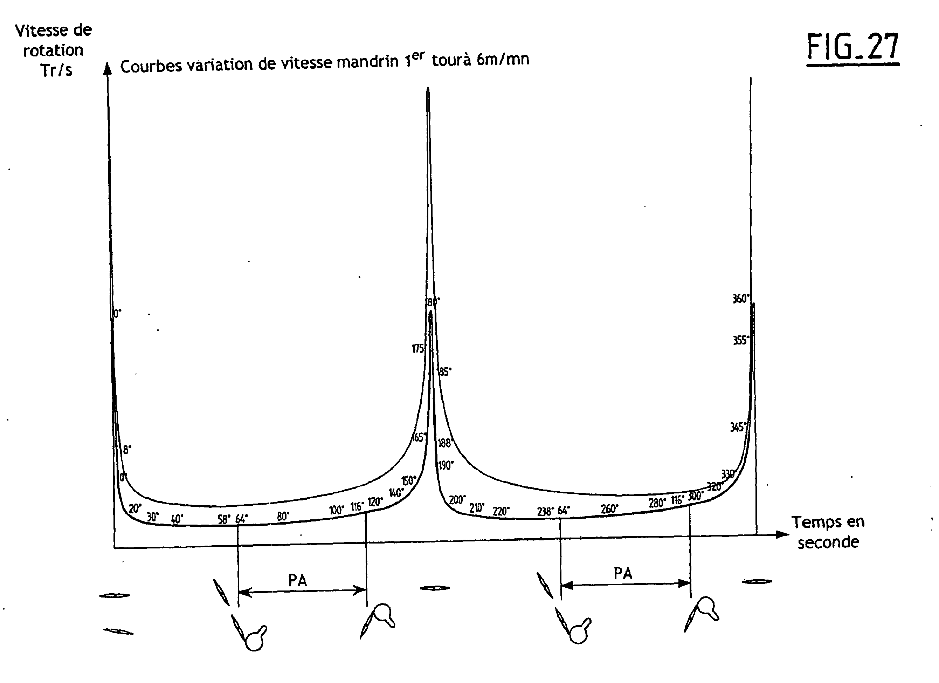

On a illustré en traits forts sur la figure 27, la courbe de variation de vitesse du mandrin 610 à l'origine de l'enroulement.

Sur la même figure 27, on a illustré en traits fins, la courbe de variation de vitesse du bras 624 portant le rouleau presseur 620.

On notera que sont illustrées sous l'axe des abscisses de la figure 27, les positions relatives du mandrin 610 et du rouleau presseur 620.

Plus précisément encore, la vitesse de rotation angulaire du mandrin 610 est corrigée au cours de l'enroulement, pour tenir compte de l'évolution du rayon d'enroulement résultant de la variation d'épaisseur de complexe accumulé sur le mandrin 610 afin de garantir la constance de vitesse linéaire de défilement.

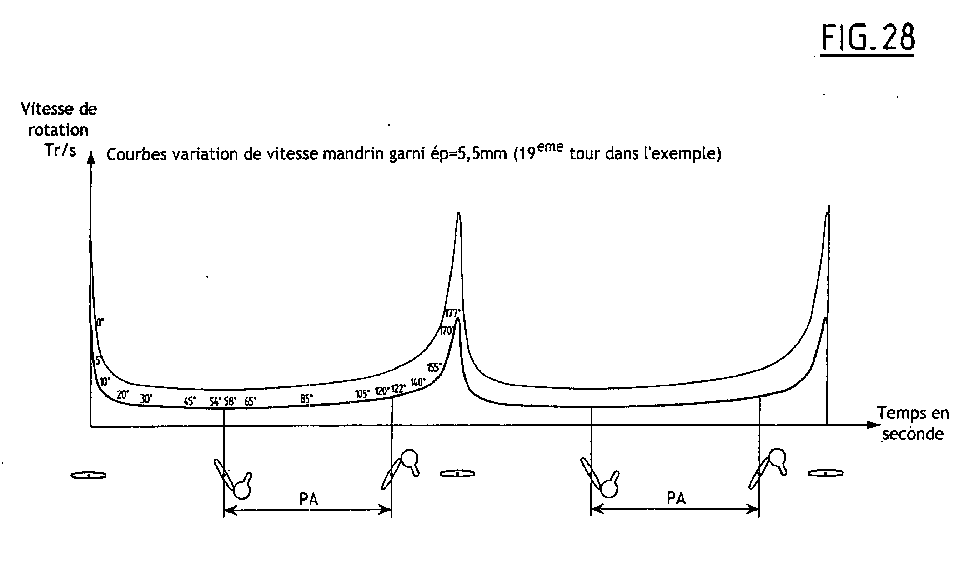

On a ainsi illustré sur la figure 28 en traits forts la courbe de variation de vitesse du mandrin 610 garnie par une épaisseur de 5,5mm de complexe (correspondant par exemple à 19 tours d'enroulement) et en traits fins la courbe de variation correspondante de vitesse du rouleau 620.

Sur les figures 27 et 28, on a repéré, sous l'axe des abscisses, sous la référence PA, les plages angulaires dans lesquelles le rouleau presseur 620 est en appui sur le mandrin 610.

On notera à l'examen des figures 27 et 28, que le vitesse de rotation du mandrin 610 et de l'équipage 624 portant le rouleau presseur 620, est élevée quand l'enroulement du complexe est opéré sur un faible rayon (c'est à dire un rayon d'enroulement de l'ordre de grandeur du petit axe du mandrin 610), soit lorsque le mandrin 610 est orienté sensiblement parallèlement au tronçon de complexe acheminé. Puis cette vitesse chute quand le rayon d'enroulement grandit (et s'approche du grand axe du mandrin 610), c'est à dire lorsque le mandrin 610 est orienté sensiblement perpendiculairement au tronçon de complexe acheminé.

Ainsi la vitesse de rotation du mandrin 610 et du rouleau presseur 620 présente une évolution cyclique : 2 pics par rotation de 360°. Cette évolution est inversement proportionnelle à l'évolution du rayon d'enroulement.

Par ailleurs on notera que le rouleau presseur 620 entre en contact, et reste en contact, avec le film complexe enroulé sur le mandrin 610, lorsque celui-ci est entraîné en rotation à basse vitesse. Cette disposition permet de garantir un bon contact entre le rouleau presseur 620 et le film enroulé et par conséquent entre les différentes couches superposées du film enroulé.

La figure 28 qui correspond à la fin d'un enroulement présente une plage d'évolution de vitesse moins étendue. En effet en raison de l'épaisseur de complexe accumulée sur le mandrin 610, le rapport de rayon d'enroulement couvre une plage moins étendue qu'à l'origine de l'enroulement.

Ainsi lors de l'enroulement d'un élément, la vitesse de rotation varie à chaque tour sur une période de 180°. De plus la durée d'enroulement par tour augmente du fait que la longueur d'enroulement sur le mandrin 610 augmente d'un tour à l'autre en raison de l'épaisseur rajoutée sur le mandrin 610.

En conséquence les vitesses et les accélérations diminuent progressivement au cours de l'enroulement.

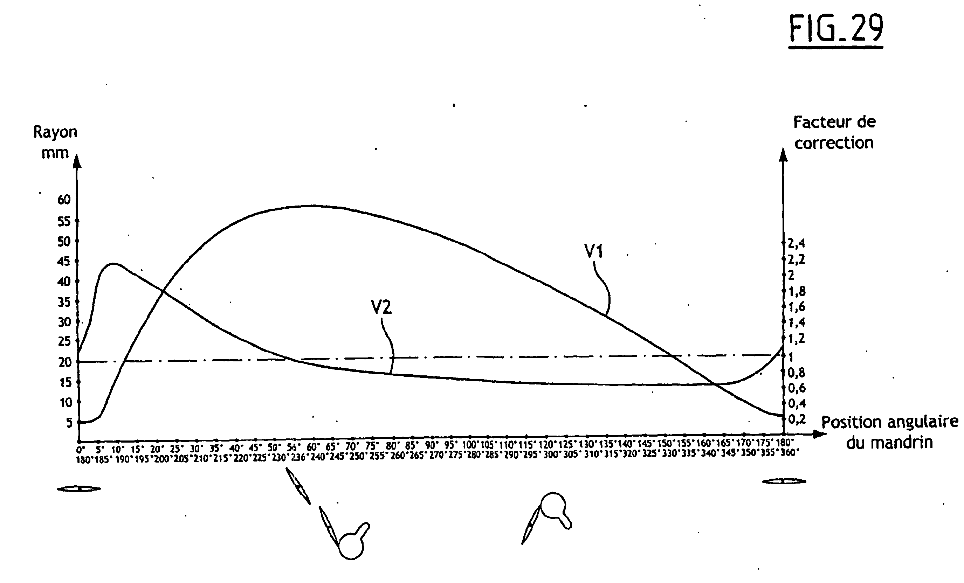

On aperçoit par ailleurs sur la figure 29, d'une part, une courbe lissée V1 de variation du rayon d'enroulement en fonction de la position angulaire du mandrin et, d'autre part, une courbe lissée V2 de variation d'un facteur de correction en fonction de cette position angulaire.

On a porté en abscisse une plage angulaire de 0 à 180°. Celle-ci couvre également la plage de 180 à 360°, les courbes précitées présentant une périodicité sur 180°. Par ailleurs on a porté sur les échelles d'ordonnées, à gauche l'amplitude du rayon d'enroulement et à droite l'amplitude du facteur de correction.

Les inventeurs ont en effet déterminé que le facteur de correction à appliquer sur l'évolution de base V1 de la vitesse de rotation angulaire tenant compte de la seule évolution du rayon d'enroulement nu en fonction de la position angulaire du mandrin, pour tenir compte de la variation d'épaisseur de l'enroulement, pouvait être assimilé à une telle courbe lissée V2 qui varie en fonction de la position angulaire du mandrin 610, tout en étant fixe pour un angle donné quelque soit le nombre de spires enroulées précédemment sur le mandrin.

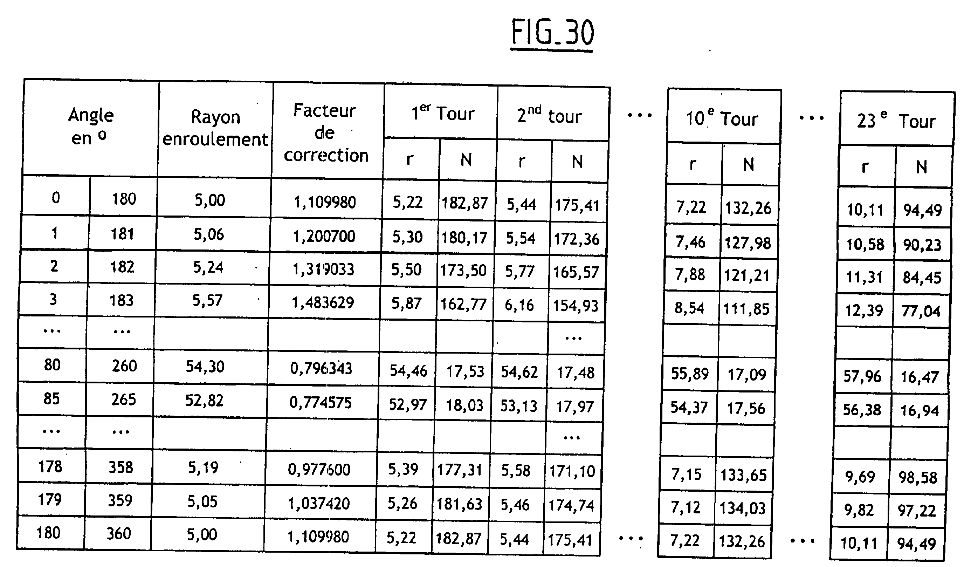

On a illustrée sur la figure 30 un tableau schématisant un exemple de données utilisées dans le cadre de la présente invention pour piloter le moteur d'entraînement du mandrin 610.

On retrouve sur les deux premières colonnes du tableau de la figure 30, l'angle de rotation du mandrin.

Ces deux colonnes correspondent respectivement aux plages de 0 à 180° et de 180 à 360°, en raison de la symétrie existant entre les deux demis tours successifs d'une même spire d'enroulement. En effet une spire complète n'est enroulée qu'après une rotation de 360°. On retrouve donc la même épaisseur sur les deux faces du mandrin pendant les deux demi périodes successives de 0 à 180° et de 180 à 360° d'enroulement d'une même spire.

La troisième colonne de la figure 30 représente le rayon du mandrin 610 nu, c'est à dire à l'origine de l'enroulement.

La quatrième colonne de la figure 30 représente le facteur de correction illustré sur la figure 29.

Les paires de colonnes qui suivent sur la figure 30 représentent deux à deux, pour chaque tour d'enroulement, l'une le rayon d'enroulement, et l'autre la vitesse de rotation du mandrin 610.

Plus précisément, comme le montre le tableau de la figure 30, pour chaque tour d'enroulement, on calcule le rayon d'enroulement r sur la base de la relation :

$$r = ro + (F . n . e)$$

dans laquelle :

ro représente le rayon du mandrin (610) nu,
F représente le facteur de correction mentionné dans la quatrième colonne,
n représente le rang de la spire en cours, ie le nombre d'enroulements opéré sur le mandrin 610 et
e représente l'épaisseur du complexe enroulé sur le mandrin 610.

Puis l'on calcule la vitesse de rotation du mandrin 610 sur la base de la relation :

$$\omega = V / (2 . \pi . r)$$

dans laquelle :

V représente la vitesse linéaire constante recherchée pour le complexe, et
r représente le rayon d'enroulement précédemment calculé.

En pratique, le pilotage du moteur d'entraînement du mandrin 610 peut être opéré, soit à l'aide de données précalculées et stockées dans des mémoires adaptées, soit à l'aide de données calculées en direct par une unité centrale (comprenant un microprocesseur et des moyens mémoire associés) sur la base, d'une part, de la loi d'évolution du rayon d'enroulement en fonction de la géométrie du mandrin 610 et d'autre part de la loi de correction dépendant de l'évolution de ce rayon en fonction de l'épaisseur de l'enroulement réalisé précédemment sur le mandrin.

Les données précitées sont appliquées successivement à chaque fraction angulaire de la rotation du mandrin 610, sur le moteur d'entraînement de celui-ci.

A titre d'exemple non limitatif, pour une vitesse linéaire de l'ordre de 6 m/mn, le mandrin 610 atteint une vitesse de l'ordre de 180 tr/mn, soit une vitesse angulaire de l'ordre de 1090 °/s, d'où une vitesse d'échantillonnage de l'ordre de 1 °/ms.

Le choix de travailler au plus près du degré impose un rafraîchissement de la consigne de vitesse moteur proche de la ms.

Dans ce contexte la consigne de vitesse destinée à être appliquée au moteur est choisie de nature numérique, pour éviter le traitement de convertisseurs analogique/numérique.

Bien évidemment, un module de contrôle assure l'asservissement complet de l'ensemble des moyens intervenant dans la réalisation de l'enroulement du complexe.

Les différents axes précités notamment les axes 102, 202, 302, des rouleaux 104, 204, 304, l'axe 611 de rotation du mandrin 610, l'axe de rotation du rouleau presseur 620 et l'axe de pivotement du bras oscillant 624, les axes des rouleaux 124, 224, 240, 250, 229, 320, 520 et 522 associés aux pellicules, les axes des rouleaux de renvoi 110, 112, 114, 221, 222, 210, 212, 226, 310, 312, 314 et les axes des rouleaux presseur 262, 264, 400, 410 sont parallèles entre eux et de préférence horizontaux.

Selon une autre caractéristique avantageuse de l'invention, le dispositif comprend un boîtier scindé en deux compartiments séparés par une cloison verticale 900 : un premier compartiment, sous atmosphère sèche contrôlée qui loge l'ensemble des moyens 100, 200, 300, 400, 500, 600 et 700 précités et un deuxième compartiment qui loge les moyens de commande et d'entraînement/motorisation associés. La cloison verticale de séparation précitée constitue le bâti support des différents axes de rotation précédemment décrits.

Le cas échéant un balayage supplémentaire d'air sec peut être prévu dans l'enceinte opérationnelle.

La présente invention permet typiquement la réalisation d'un enroulement de complexe comprenant entre 16 et 19 tours, correspondant à une longueur de complexe de l'ordre de 4 à 5,5m, soit une épaisseur totale d'enroulement de l'ordre de 5,5 mm. La vitesse de défilement du complexe est typiquement comprise entre 2 et 10 m/ mn. Elle est avantageusement de l'ordre de 6m/mm.

A titre d'exemple non limitatif le dispositif conforme à la présente invention est adapté pour traiter des laizes de complexe de largeur comprise entre 50 et 150 mm.

La présente invention offre de nombreux avantages par rapport aux moyens proposés dans l'état de la technique.

De façon non limitative on citera :

- le fait que la forme quasi plate du mandrin d'enroulement 610 évite de générer les contraintes rencontrées avec l'état de la technique, lors de la mise à plat,
- le réchauffage des complexes dans des fours et le complexage des multicouches formant cathode et collecteur sur le lithium, permettant de réaliser un collage de bonne qualité sans reprise intermédiaire des produits en optimisant le contact surfacique des couches entre elles, ceci améliorant les échanges ioniques entre les différentes couches fonctionnelles du produit final,
- le fait que toutes les fonctions du dispositif sont pilotées en automatique avec des paramétrages et des régulations précises de chaque fonction, ce qui permet d'assurer la reproductibilité avec un niveau de qualité toujours contrôlé.

On rappelle que d'une manière générale, tous les galets et rouleaux enrouleurs ou dérouleurs mis en oeuvre dans le dispositif de l'invention ont des fonctions moteur et/ou frein alternativement, selon la séquence de l'enroulement impliqué, pour garantir une traction constante sur l'ensemble des films, complexes et pellicules associés.

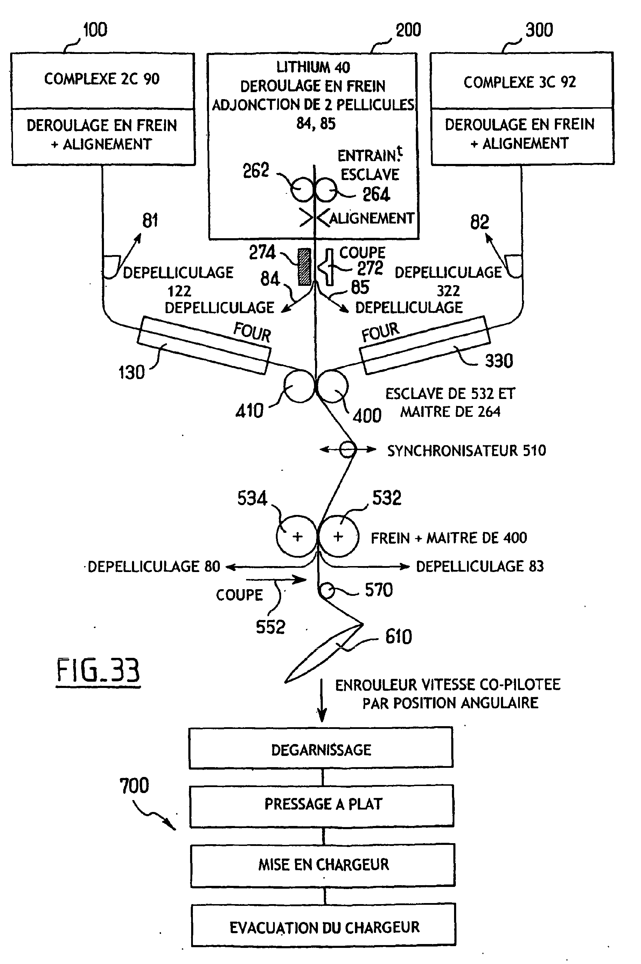

Comme indiqué précédemment, la figure 33 représente un synoptique général des moyens principaux du dispositif conforme à la présente invention.

Comme indiqué précédemment, le dispositif conforme à la présente invention comprend des moyens mécaniques aptes à modifier sur commande la section droite du mandrin 610.

La modification de section du mandrin 610 peut notamment être utilisée pour pincer une extrémité des films à enrouler, à l'origine de l'enroulement et/ou pour provoquer un desserrage général de l'enroulement, c'est à dire créer un certain jeu entre l'enroulement et la surface externe du mandrin 610, pour faciliter l'extraction de l'enroulement. Cette dernière fonction peut être obtenue par exemple par réduction commandée de la longueur du grand axe du mandrin 610.

On va maintenant décrire plus particulièrement les moyens spécifiques à la présente invention, propres à modifier sur commande la section droite du mandrin 610 lorsque celui-ci est formé de deux mors complémentaires 612, 614.

Les moyens précités sont conçus pour assurer sur commande un déplacement relatif des deux mors 612, 614, l'un par rapport à l'autre, selon au moins une composante transversale à l'axe de rotation 611 du mandrin 610.

Chaque mors 612, 614 est fixé sur un porte mors respectif 652, 654. Chacun de ceux-ci est lié rigidement à un arbre 653, 655 monté à rotation, sur un corps de mandrin 660, autour d'axes respectifs 656, 657 excentrés par rapport à l'axe de rotation 611 du mandrin 610, mais parallèles à celui-ci. Plus précisément les arbres 653 et 655 sont montés à rotation sur un plateau 661 appartenant au corps de mandrin 660.

L'homme de l'art comprendra que la rotation d'un arbre 653, 655, et par conséquent du porte mors 652, 654, et du mors 612, 614 respectivement associé, par rapport au corps de mandrin 660, entraîne un déplacement du mors impliqué par rapport à l'autre.

A cette fin chaque arbre 653, 655 porte un pignon 658, 659 à taillage hélicoïdal. A titre d'exemple non limitatif, l'angle de taille des pignons 658, 659 peut être de l'ordre de 17°.

Les pignons 658, 659 liés aux porte mors 652, 654 sont animés angulairement par deux demi-axes respectifs de commande 670, 680.

Ceux-ci peuvent faire l'objet de divers modes de réalisation.

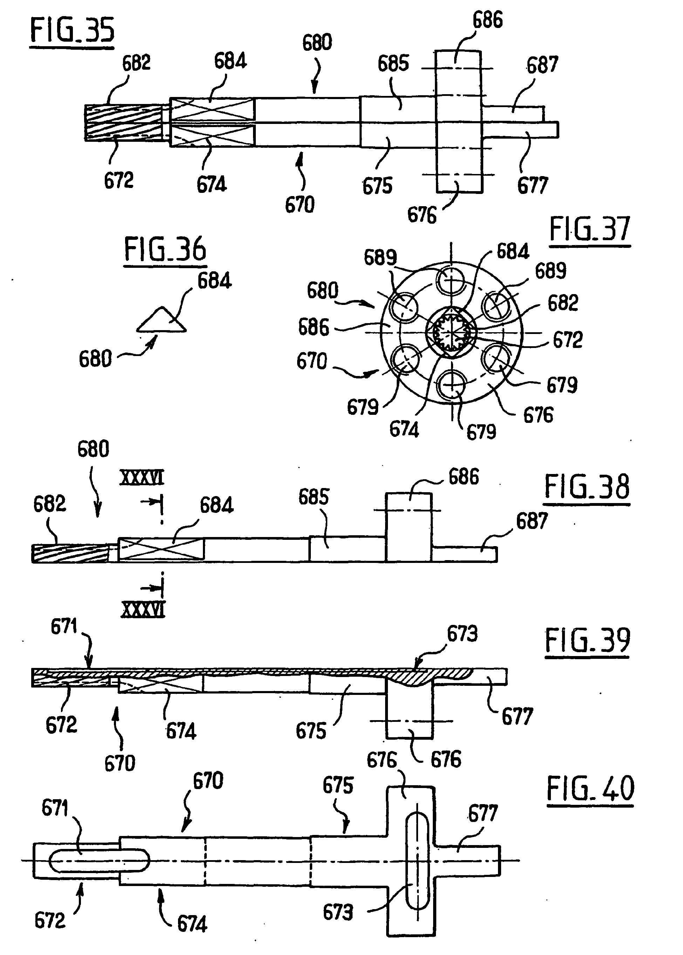

Ils sont de préférence conformes aux figures 35 à 40.

On aperçoit sur celles-ci deux demi-axes 670, 680 généralement symétriques par rapport à un plan axial longitudinal passant par leur axe commun de rotation, lequel est confondu avec l'axe 611 de rotation du mandrin 610.

Les demi-axes 670, 680 sont juxtaposés et disposés dans un fourreau 662 lié au corps de mandrin 660. Ils sont conçus pour être déplacés à translation, parallèlement à leur axe, par des moyens qui seront décrits par la suite.

Le fourreau 662 tient lieu de fusée assurant le guidage à rotation du corps de mandrin 660 autour de l'axe 611.

Chaque demi-axe 670, 680 comporte, à une extrémité, un tronçon taillé en pignon hélicoïdal 672, 682 se conjuguant avec les pignons arbrés 658, 659.

Par ailleurs chaque demi-axe 670, 680 comporte un tronçon 674, 684 de section non circulaire de révolution, par exemple en dièdre (les deux dièdres accolés 674, 684 appartenant respectivement aux deux demi-axes 670, 680 formant en combinaison, un carré), disposé dans un tronçon de section complémentaire du fourreau 662. L'engagement ainsi défini interdit toute rotation relative entre les demi-axes 670, 680 et le fourreau 662, mais autorise et assure un guidage axial relatif entre ceux-ci.

A leur seconde extrémité, les demi-axes 670, 680 sont munis chacun d'une tête élargie 676, 686, en forme de demi-couronne. On verra par la suite que chacune de ces têtes 676, 686 porte de préférence des moyens de réglage d'organes élastiques sollicitant les demi-axes vers une position de repos. A cette fin, chaque tête comporte plusieurs logements 679, 689, par exemple 3 par tête, équirépartis angulairement.

De plus de préférence, chaque demi-axe 670, 680 comprend en outre, d'une part du côté de la tête 676, 686 situé vers le pignon 672, 682, un tronçon cylindrique de révolution 675, 685 qui sert de guidage à translation, et d'autre part du côté opposé de la tête 676, 686, une queue 677, 687 en saillie au delà de la tête 676, 686.

Les deux demi-axes 670, 680 sont susceptibles de déplacement relatif à translation l'un par rapport à l'autre, pour permettre une inclinaison relative des mors 612, 614. A cette fin de préférence des patins de glissement sont intercalés entre les deux demi-axes 670, 680, dans des lumières 671, 673 prévues à cet effet au niveau de l'interface des demi-axes 670, 680.

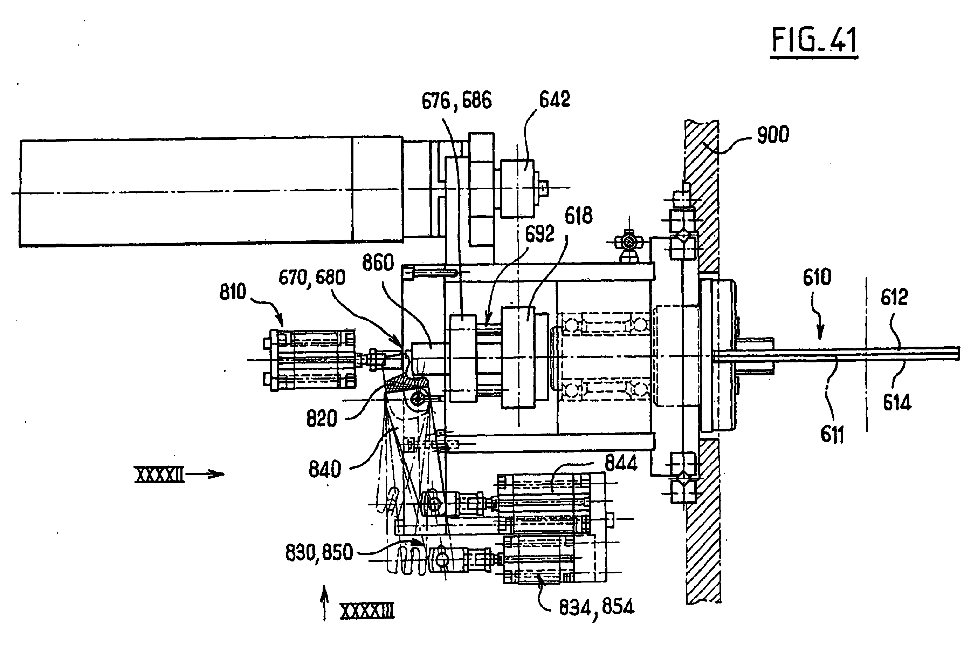

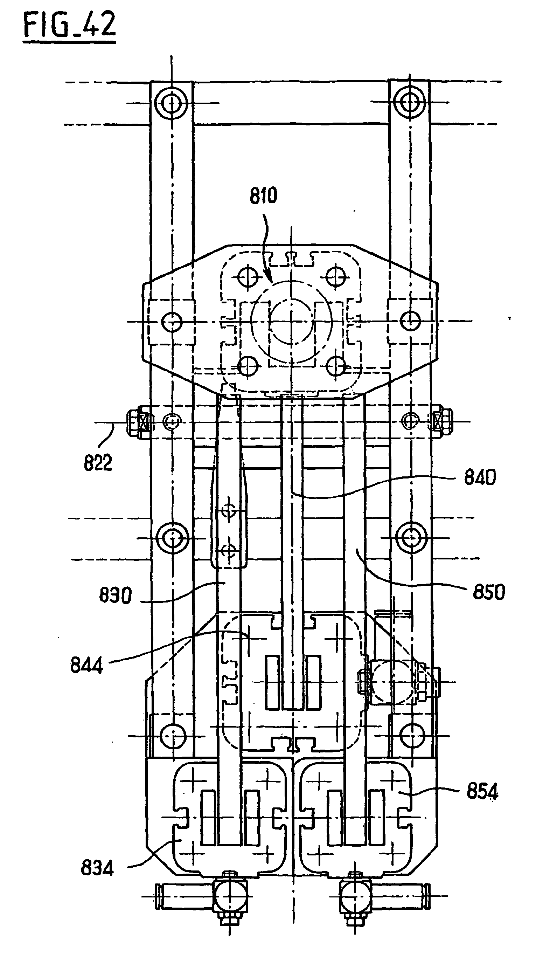

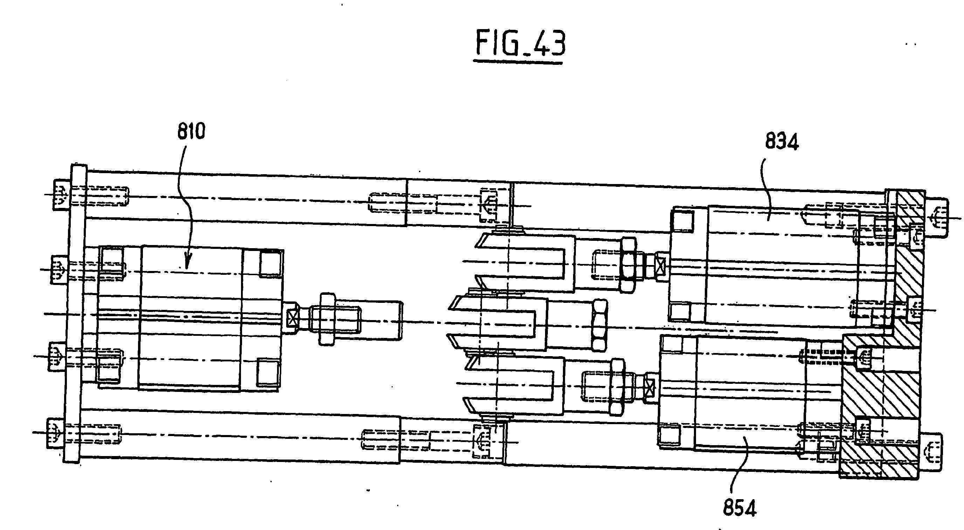

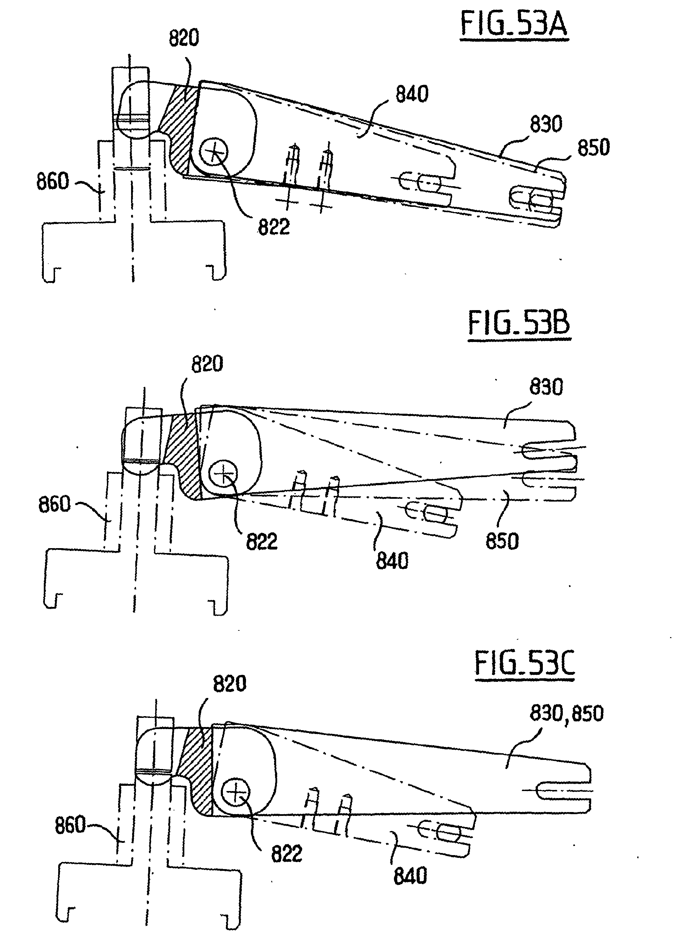

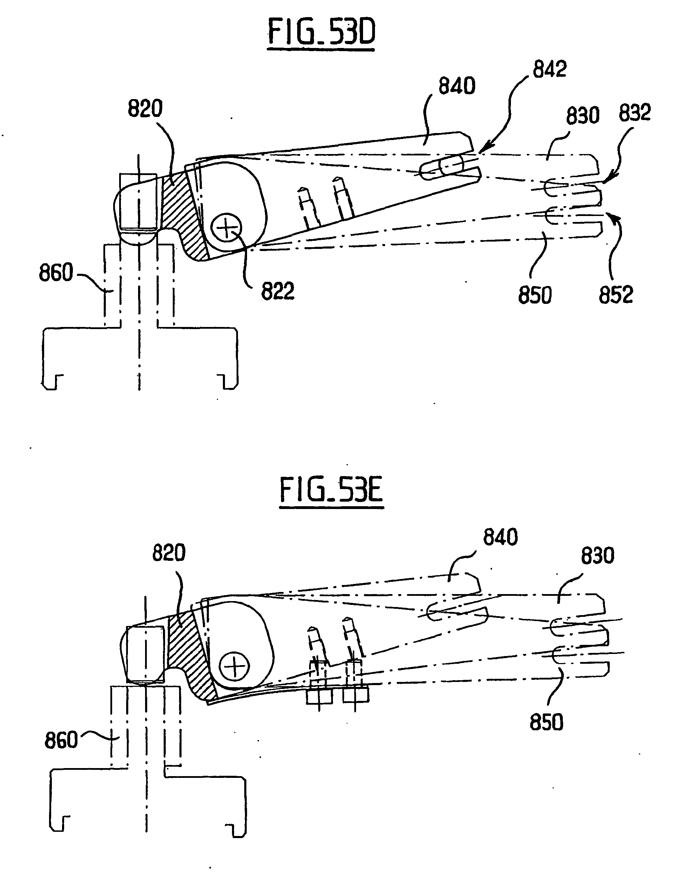

Les queues 677, 687 des demi-axes 670, 680 sont sollicitées sélectivement dans plusieurs positions choisies par des moyens mécaniques 800 qui seront décrits par la suite en regard des figures 41, 42, 43 et 53.

On notera que chacun des deux porte-mors 652, 654 peut être déplacé indépendamment de l'autre. Il en est donc de même des deux demi-axes 670, 680, indépendants l'un de l'autre pour permettre une désynchronisation de mouvements entre les deux mors 612, 614. Cette désynchronisation est notamment nécessaire pour pincer/emprisonner l'extrémité nouvelle d'une bande à l'origine d'un enroulement.

La fusée constituée par le fourreau précité 662 est montée à rotation sur un palier 634 lié au tiroir 630 et équipé de deux roulements à billes 635, 636. La fusée 662 est munie, à son extrémité arrière opposée au mandrin 610, du pignon 618 (illustré figure 22) coopérant avec la courroie crantée d'entraînement 640.

Le pignon 618 comporte des alvéoles 619 en nombre identique au nombre de logements 679, 689 formés dans les têtes 676, 686 des demi-axes 670, 680.

Dans le cas d'espèce non limitatif, il est ainsi prévu six alvéoles 619 respectivement alignées sur les logements 679, 689.

Chaque logement 619 loge un ressort de compression 690. Les ressorts 690 sont ainsi intercalés entre le pignon 618 et les têtes 676, 686 des demi-axes 670, 680. Les ressorts 690 sollicitent par conséquent les demi-axes 670, 680 en éloignement des porte-mors 652, 654. En d'autres termes, les ressorts 690 sollicitent automatiquement à la fermeture les mors 612, 614. Des moyens mécaniques 800 qui seront décrits plus en détail par la suite en regard des figures 41 à 43 et 53 opèrent un effet inverse sur les demi-axes 670, 680. Ces moyens mécaniques de commande 800, lors de leur activation, sollicitent en effet les demi-axes 670, 680 vers les porte-mors 652, 654.

L'effort exercé par les ressorts 690 peut être réglé par des vis 692 en prise dans des logements 679, 689 des têtes 676, 686. Le réglage des vis 692 permet par conséquent de régler l'effort de pincement exercé par les mors 612, 614.

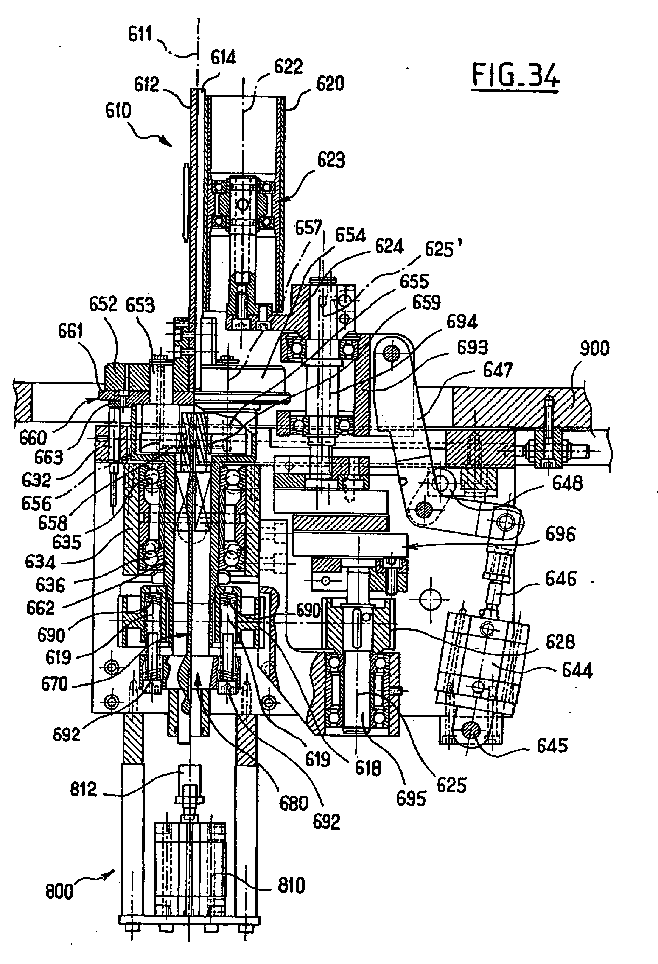

On retrouve sur la figure 34, le rouleau presseur 620 monté libre de rotation via des moyens de roulement internes, autour de son axe 622 sur un bras ou embase 624. De préférence, comme on le voit sur la figure 34, les moyens assurant la rotation du rouleau presseur 620 autour de son axe 622 sont formés d'un moyeu articulé 623 adapté pour permettre un auto-positionnement du rouleau 620 propre à assurer un plaquage étroit de celui-ci sur la surface externe de l'enroulement. En pratique le moyeu articulé 623 peut être constitué de deux roulements de faible écartement positionnés au centre (considéré dans la direction longitudinale) du rouleau 620 et autorisant un certain débattement angulaire du rouleau 620.

Le bras 624 est lui-même monté à rotation autour d'un axe 625' parallèle à l'axe 622 précité et excentré par rapport à celui-ci. Plus précisément, le bras 624 est monté à rotation autour de l'axe 625' sur un élément 693. Ce dernier forme un petit chariot mobile par rapport au tiroir ou chariot principal 630 pour compenser les variations d'épaisseur de l'enroulement, sur le mandrin 610, entre le premier tour et le dernier.

Différents moyens peuvent être prévus pour entraîner le bras 624 à rotation autour de l'axe 625'. On rappelle ici que de préférence le bras 624 est entraîné à une vitesse de rotation double de celle du mandrin 610.

Selon le mode de réalisation particulier et non limitatif représenté sur les figures annexées, le bras 624 est solidaire d'un arbre 694 centré sur l'axe 625' et monté à rotation sur le petit chariot 693 précité.

Un deuxième arbre 695 portant le pignon 628 conçu pour coopérer avec la courroie d'entraînement 640 représentée sur la figure 22 est monté à rotation autour de l'axe 625 sur une entretoise liée au tiroir 630.

Par ailleurs, un accouplement homocinétique 696 est intercalé entre la sortie de l'arbre moteur 695 et l'entrée de l'arbre mené 694 lui-même lié au bras 624.

L'accouplement homocinétique 696 a pour fonction d'autoriser un déplacement relatif de l'arbre 694, parallèlement à lui-même, par rapport à l'arbre 695, lors de l'augmentation d'épaisseur de l'enroulement sur le mandrin 610, tout en assurant en permanence une liaison précise à rotation entre l'arbre menant 695 et l'arbre mené 694.

Le déplacement du petit chariot 693 par rapport au tiroir principal 630 est contrôlé par tout moyen approprié, de préférence par un vérin 644. Le corps du vérin 644 est articulé en 645 sur le tiroir 630. Sa tige 646 est articulée sur une première extrémité d'une bielle en équerre 647. La seconde extrémité de la bielle 647 est articulée sur le chariot 693. Enfin, la bielle 647 est articulée, en son milieu, sur une biellette 648 montée à rotation par ailleurs sur le tiroir 630.

Ainsi, le rouleau presseur 620 est mis en appui sur l'élément enroulé sur le mandrin 610 par la coopération du petit chariot 693 et du vérin 644. A titre d'exemple non limitatif, la course de déplacement du petit chariot 693 par rapport au tiroir 630, et par conséquent par rapport à l'axe 611 de rotation du mandrin 610, au cours du déplacement du rouleau sur le film enroulé, peut être de l'ordre de 3mm pour la première spire et de l'ordre de 8,5mm sur l'élément terminé. Le différentiel de course entre la position d'origine mandrin nu et la position élément terminé est compensé ainsi par la course de translation du vérin 644 et du petit chariot 693.

Typiquement, mais à titre d'exemple non limitatif, l'accouplement homocinétique 696 est conçu pour permettre un décalage radial de l'ordre de 25mm entre les axes parallèles 625 et 625' des arbres 695 et 694, pour permettre de réaliser la course utile de mouvement radial du rouleau satellite presseur 620 vers le mandrin 610.

En résumé, le pignon 628 transmet le mouvement rotatif à l'arbre mené 694 par l'intermédiaire de l'accouplement homocinétique 696. L'arbre 694 transmet son mouvement au bras 624 qui porte lui-même le palier central du rouleau satellite 620. Le palier de ce rouleau est équipé d'un système de palonnage autour de l'axe 622 pour permettre un auto alignement du rouleau 620 contre les spires pendant l'enroulement.

Par ailleurs, le rouleau presseur satellite 620 est porté par le petit chariot 693 embarqué sur le tiroir 630 du mandrin. En raison du rapport ½ entre les pignons 628 et 618, le bras 624 et le rouleau presseur 620 qui l'accompagne tournent deux fois plus vite que le mandrin 610, ce qui permet au rouleau presseur 620 de presser l'enroulement à chaque demi-tour du mandrin.

Le mouvement d'approche et d'écartement du rouleau satellite 620 par rapport au mandrin 610 est effectué à l'aide de la bielle ou levier 647 en équerre et du vérin pneumatique 644 double effet.

En synthèse :

- le tiroir 630 est susceptible de déplacement à translation horizontale par rapport au bâti de la machine et au rouleau 570 entre une position rapprochée du rouleau 570 pour saisir le début d'un enroulement et une position éloignée de celui-ci pour assurer l'enroulement. Le tiroir porte le corps de mandrin 660, le mandrin 610, les demi-axes 670, 680, le rouleau presseur 620 et les moyens qui lui sont liés.
- plus précisément, le rouleau presseur 620 est monté par l'intermédiaire du bras rotatif 624 sur un chariot 693, lui-même susceptible de translation par rapport au tiroir 630.
- le corps de mandrin 660 supporte les porte-mandrins 652, 654 qui supportent eux-mêmes les mors 612, 614. Le corps de mandrin 660 est monté à rotation autour de l'axe 611 sur le tiroir 630 et entraîné par le pignon 618.
- les porte-mors 652, 654, et par conséquent les mors 612, 614 eux-mêmes qui leur sont liés, sont montés à rotation autour d'axes respectifs 656, 657 sur le corps 660.
- enfin, les demi-axes 670, 680 sont montés à translation dans le corps 660. La translation de chaque demi-axe 670, 680 par rapport au corps de mandrin 660 entraîne, grâce à la coopération définie entre les filets hélicoïdaux prévus sur les pignons 658, 659 d'une part, 672, 682 d'autre part, la rotation des porte-mors 652, 654, et par conséquent des mors 670, 680 qui leur sont liés par rapport au corps de mandrin 660 et donc un déplacement des mors 612, 614 l'un par rapport à l'autre.

On va maintenant décrire la structure des moyens mécaniques de commande 800 illustrés sur les figures 41, 42, 43 et 53, conçus pour assurer le déplacement contrôlé des demi-axes 670, 680.

Les moyens 800 ont pour fonction de définir plusieurs positions relatives précises des demi-axes 670, 680 et par conséquent des mors 612, 614.

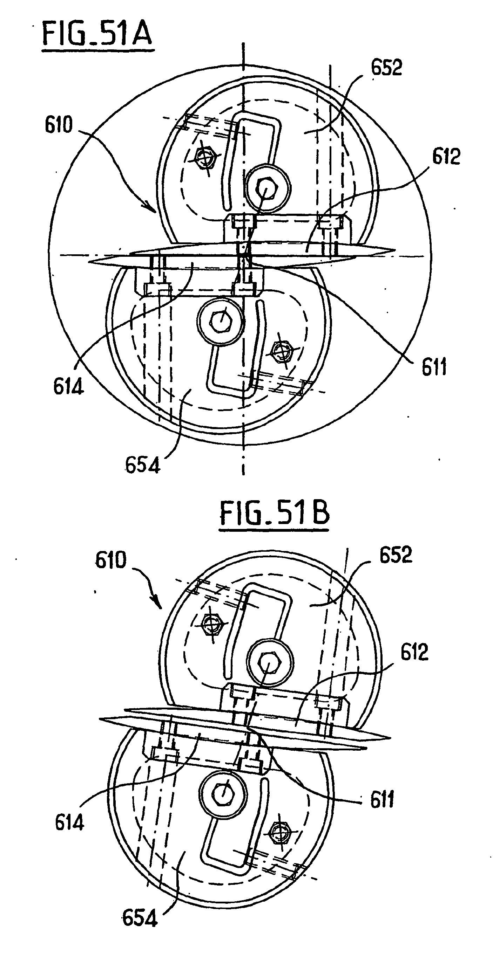

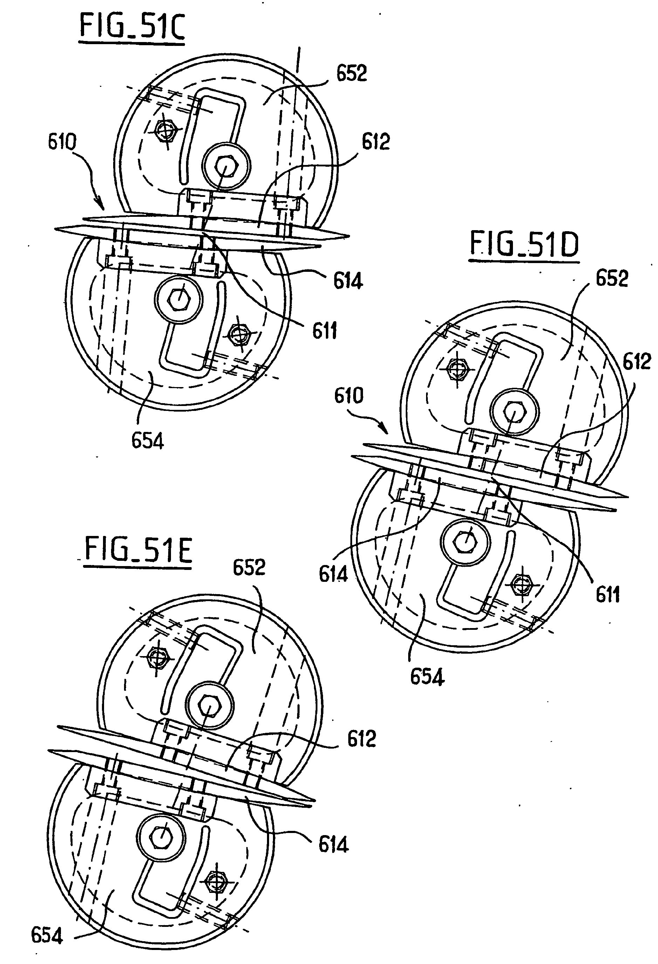

De préférence, les moyens 800 sont prévus pour assurer quatre positions relatives précises de travail des mors 612, 614, en sus d'une position de repos. Ces diverses positions et les moyens mis en oeuvre pour les obtenir seront décrits par la suite en regard des figures 51, 52 et 53.

Plus précisément encore, les moyens mécaniques de commande 800 sont conçus pour commander individuellement chaque demi-axe 670, 680 et par conséquent chaque mors 612, 614.

Les moyens mécaniques 800 sont de préférence adaptés pour piloter séquentiellement, soit une inclinaison relative entre les deux mors 612, 614, par exemple pour assurer l'ouverture et la fermeture lors de la saisie et de la libération de l'enroulement, soit un déplacement relatif parallèles entre eux des deux mors 612, 614, afin de modifier la longueur du grand axe et du petit axe du mandrin ("pour donner du ventre au mandrin"), lors d'une séquence finale d'extraction de l'enroulement.

Pour piloter une inclinaison relative entre les deux mors 612, 614, les moyens de commande 800 sont conçus pour opérer un déplacement relatif à translation entre les deux demi-axes 670, 680.

Différents moyens peuvent être prévus à cet effet.

Dans le cadre du mode de réalisation préférentiel de l'invention, les deux demi-axes 670, 680 ont des longueurs différentes, plus précisément les queues 677, 687 respectives des deux demi-axes 670, 680 qui émergent sur l'arrière des têtes 676, 686 ont de préférence des longueurs différentes comme on le voit sur la figure 35.

L'homme de l'art comprendra que la sollicitation de la queue 677 de plus grande longueur du demi-axe 670, sans intervenir sur le demi-axe 680 entraîne une rotation du seul porte-mors 652 et par conséquent du seul mors 612 par rapport au corps 660. Une telle sollicitation peut être opérée à l'aide d'un vérin 810, dont la tige 812 est placée en regard du demi-axe 670.

Au contraire pour assurer un déplacement relatif des deux mors 612, 614 tout en maintenant une position parallèle entre ceux-ci, les moyens mécaniques de commande 800 doivent déplacer les demi-axes 670, 680 sur des courses identiques.

Différents moyens peuvent être prévus à cet effet.

Selon le mode de réalisation représenté sur les figures annexées, les moyens 800 comprennent à cet effet un culbuteur 820 ou poussoir articulé monté à rotation sur le tiroir 630 autour d'un axe 822. Le culbuteur 820 est lui-même sollicité par trois leviers 830, 840, 850 articulés sur le tiroir 630 autour d'un axe parallèle à l'axe 822 et préférentiellement confondu avec celui-ci. Chaque levier 830, 840, 850 est lui-même sollicité, par l'intermédiaire d'une liaison de type chape 832, 842, 852 par la tige d'un vérin 834, 844, 854 respectivement associé.

Des ressorts sollicitent les leviers 830, 840, 850 vers une position de repos dans laquelle le culbuteur 820 est sans action sur les demi-axes 870, 880. Au contraire, les vérins 834, 844, 854 sollicitent les leviers 830, 840, 850 dans le sens d'un rapprochement du culbuteur 820 vers les demi-axes 870, 880. Le culbuteur 820 est lui-même susceptible de débattement par rapport à chacun des leviers 830, 840, 850 de sorte que la position de travail du culbuteur 820 est définie par celui des trois leviers 830, 840, 850 qui est déplacé sur la course la plus grande.

Plus précisément encore, comme illustré sur les figures annexées, il est de préférence prévu deux grands leviers latéraux 830, 850 encadrant un levier central de plus faible longueur 840.

Le culbuteur 820 peut venir en appui direct sur les têtes 676, 686 des demi-axes 670, 680. Cependant, de préférence, il est prévu une bague 860 (voir figure 41) intercalée entre le culbuteur 820 et la face arrière des têtes 676, 686. La bague 860 entoure les queues 677, 687.

Ainsi, on définit deux commandes indépendantes des demi-axes 670, 680 : l'une qui concerne seul le demi-axe 670 générée par le vérin 810, l'autre qui concerne les deux demi-axes 670, 680 générée par les vérins 834, 844, 854 via les leviers 830, 840, 850, le culbuteur 820 et la bague 860.

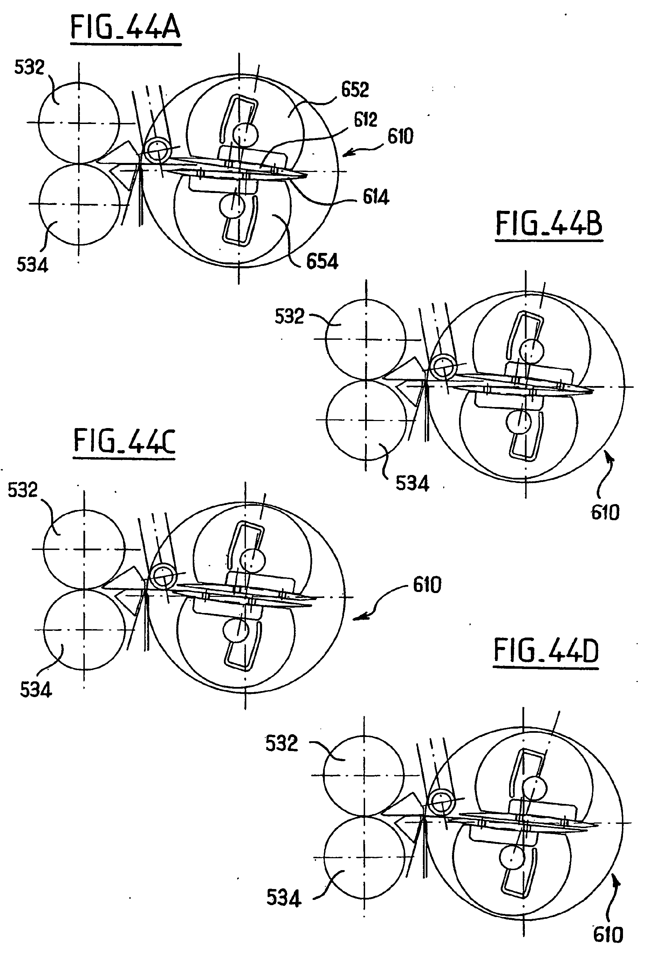

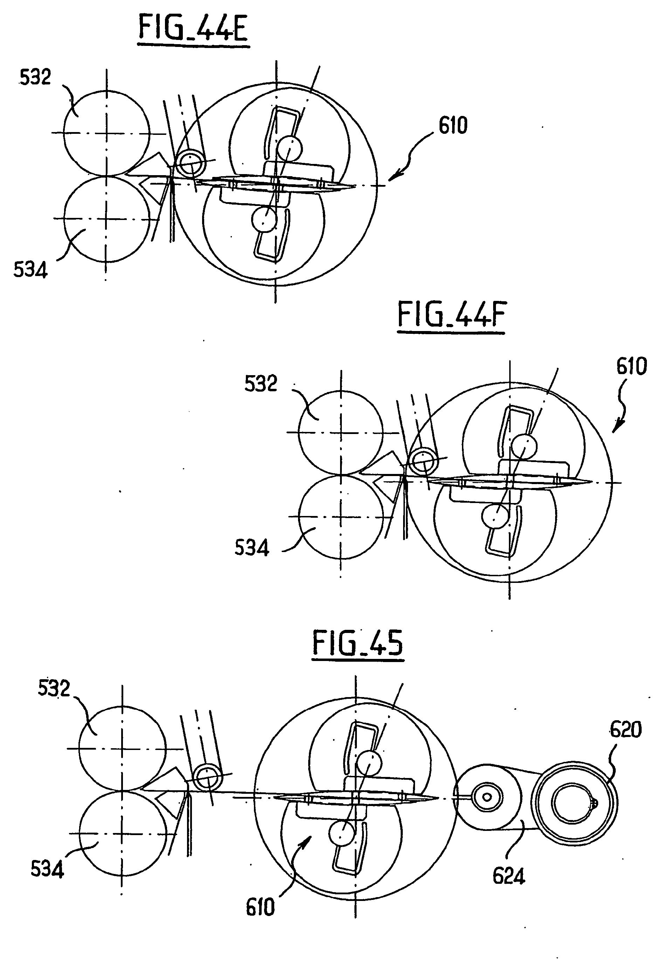

On va maintenant décrire le fonctionnement général du mandrin en regard des figures 44 et suivantes annexées.

Bien entendu ce descriptif est donné uniquement à titre d'exemple non limitatif.

Le pincement du début d'une bande à enrouler se fait par rapprochement des deux mors 612, 614 l'un contre l'autre. Ce pincement est effectué par les porte-mors 652, 654 précités eux-mêmes entraînés angulairement par les pignons arbrés 658, 659, eux-mêmes mis en rotation par la translation axiale des deux demi-arbres 670, 680. Cette translation axiale est provoquée par la charge réglable des six ressorts 690 précédemment mentionnés.

Plus précisément encore, la préhension de la bande et la fermeture des mors 612, 614 est réalisée selon la cinématique illustrée sur les figures 44A à 44F.

A l'origine, les mors 612, 614 sont indexés dans une position illustrée sur la figure 44A symétrique par rapport à la bande. Le tiroir 630 de mandrin est approché de la sortie de bande venant du rouleau de guidage 570.

Les rouleaux 532, 534 sont activés pour avancer la bande vers les mors 512, 514, par exemple sur une distance de l'ordre de 40mm, comme illustré sur la figure 44B.

Comme illustré sur la figure 44C, les mors 612, 614 sont ramenés dans une position parallèle en rétractant la tige du vérin 810. On notera que de préférence la position angulaire du mandrin reste identique lors des deux étapes des figures 44A et 44B, mais en revanche que le mandrin est recalé angulairement pour passer à l'étape illustrée sur la figure 44C. A titre d'exemple, la position angulaire peut être de 348°, par rapport à un référenciel arbitraire, pour les figures 44A et 44B et de 351° pour la figure 44C.

Comme illustré sur les figures 44D, 44E et 44F, les mors 612, 614 sont ensuite progressivement rapprochés en rétractant successivement les tiges des vérins 844, 854 et 834. Là encore, on opère de préférence un recalage angulaire successif pour maintenir le plan d'interface des mors 612, 614 dans une position optimale. Par rapport au référentiel précité, la position de la figure 44D peut être à 356°, celle de la figure 44E à 368° et celle de la figure 44F à 0°.

Le mandrin est alors prêt pour un enroulement dans la position illustrée sur la figure 45, après translation du tiroir 630 en éloignement du rouleau de guidage 570.

La rotation du mandrin peut alors être opérée selon le concept de régulation de vitesse précédemment décrit.

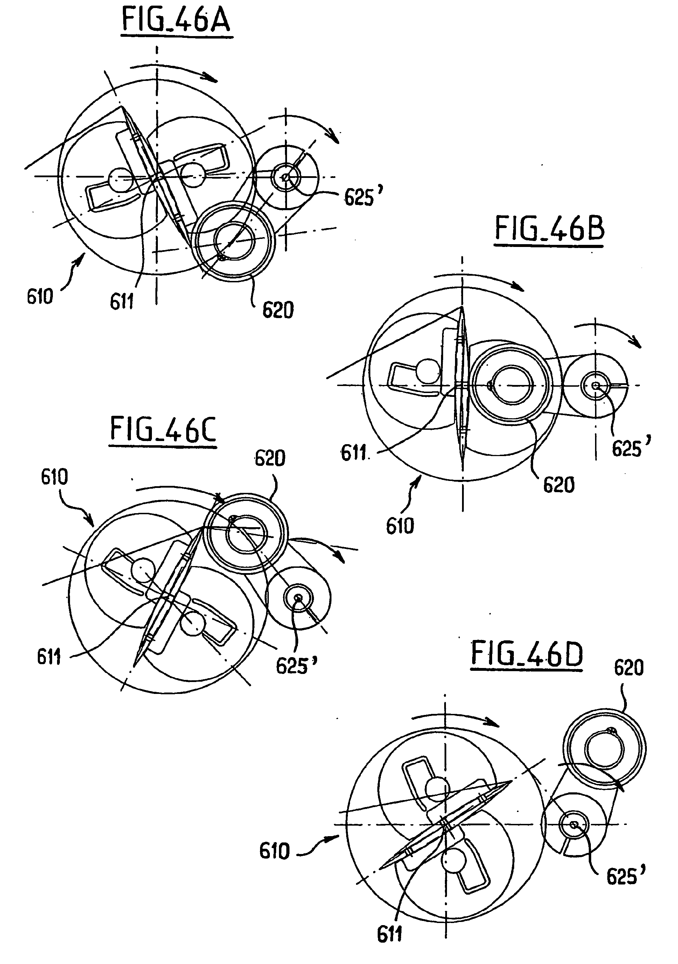

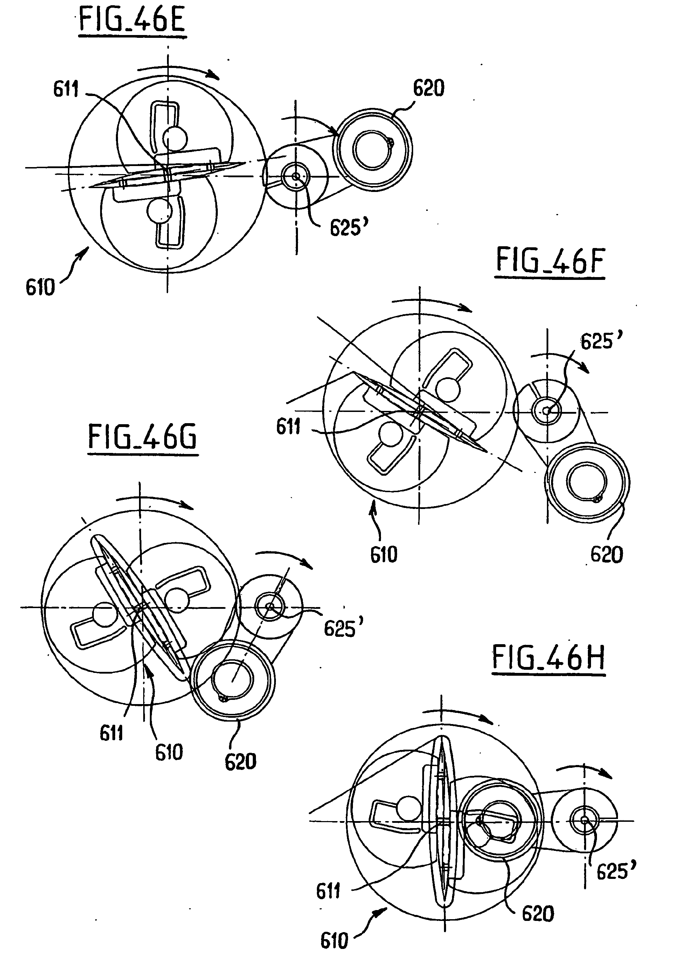

Au cours de cet enroulement illustré sur les figures 46, de préférence les rouleaux amont 532, 534 sont placés en fonction frein pour retenir et assurer la traction de bande pendant l'enroulement.

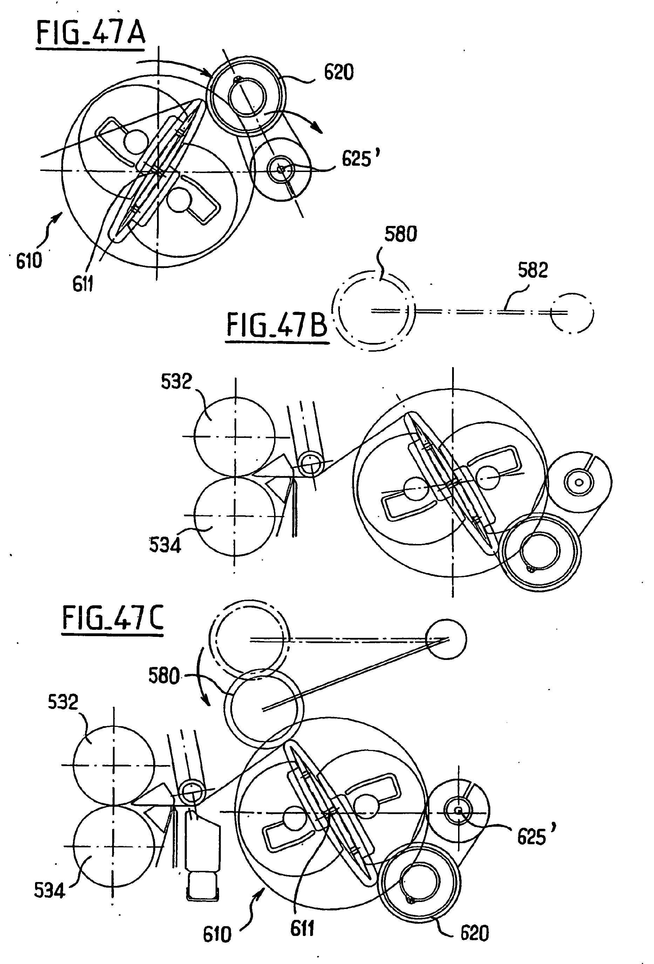

La rotation du mandrin est continue jusqu'à la première fraction du dernier tour de l'élément illustré sur la figure 47A.

Au cours de l'enroulement et de la rotation du mandrin, comme illustré sur les figures 46, le rouleau satellite presseur 620 entre en action lorsque le mandrin est en position 58° et donc que le presseur peut entrer en contact avec l'enroulement, et ce jusqu'à la position symétrique de la position 58° par rapport à l'axe horizontal, donc pendant 64°, à la suite de quoi il se dégage pour recommencer de la même manière le demi tour suivant.

Lors de l'enroulement les mors 612, 614 restent en position pincée jusqu'à la terminaison de l'élément. Dans cette position, l'ensemble des deux mors 612, 614 constituent la section en fusion avec le grand axe déployé.

La figure 47A illustre la position du rouleau presseur 620 sur le mandrin 610 à la fin du dernier tour complet d'enroulement, avant que le rouleau presseur 620 ne s'éloigne de l'enroulement.

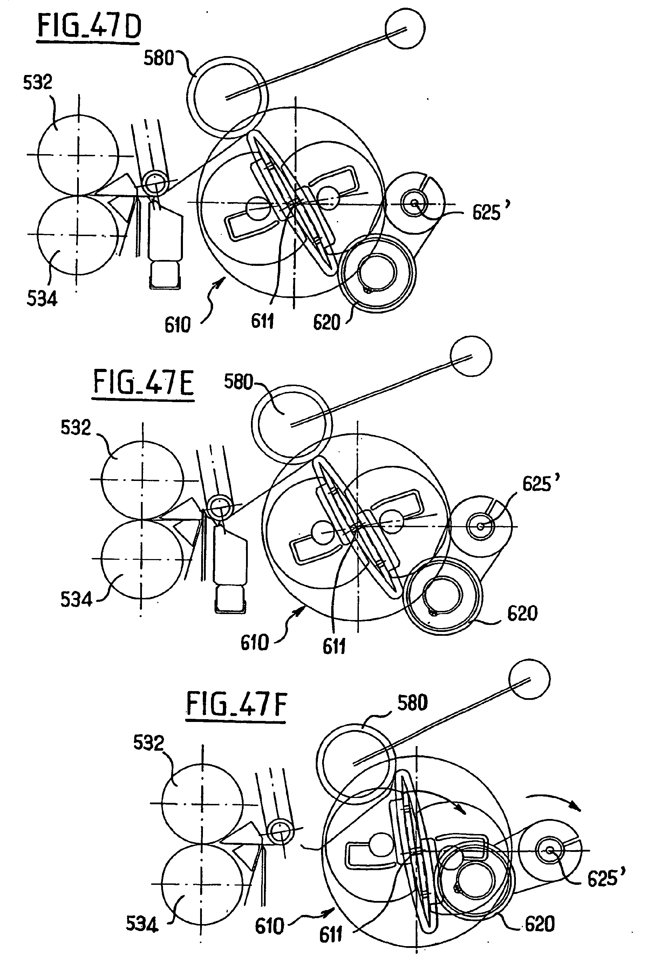

Le dernier tour illustré sur les figures 47 débute de préférence par une première étape qui correspond à un arrêt maintenu en position du mandrin 610 et des rouleaux pinceurs 532, 534, bande tendue. Préférentiellement, dans cette position, le rouleau presseur 620 est placé en position basse à 58° en contact contre l'enroulement comme illustré sur la figure 47B.

Puis le rouleau escamotable 580 est abaissé par activation du vérin 586, comme on le voit à l'examen comparé des figures 47B, 47C et 47D. Dans la position illustrée sur la figure 47D, le rouleau escamotable 580 bloque la feuille enroulée sur le mandrin 610. La barre de thermocollage 562 est activée pour souffler de l'air chaud afin d'élever la température de l'extrémité finale de l'enroulement afin de permettre ultérieurement son collage.

De préférence, le soufflage d'air chaud est opéré pendant un temps déterminé. A l'étape illustrée sur la figure 47E, la lame de coupe 552 est déplacée par le vérin 556 pour assurer la coupe de l'extrémité terminale de l'enroulement comme on le voit sur la figure 47F. La lame 552 est ensuite rétractée.

On relance ensuite la rotation du mandrin 610, le rouleau 580 restant en appui.

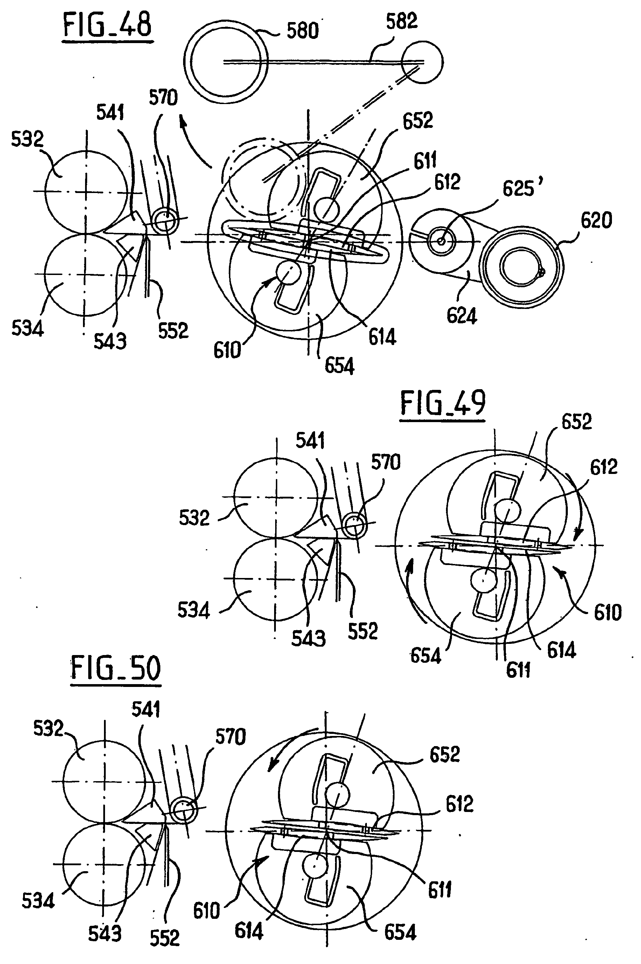

La rotation du mandrin 610, rouleau 580 en appui est poursuivie jusqu'à une adresse angulaire donnée, par exemple 9°, comme illustré sur la figure 48, à la suite de quoi le rouleau presseur 580 est relevé.

De préférence, on poursuit la rotation du mandrin sur un tour complet pour que le rouleau satellite 620 poursuive son travail d'écrasement sur le dernier tour enroulé jusqu'à accostage à un angle de référence 356°. Le mandrin est alors en position représentée sur la figure 49. On procède alors de préférence à une succession de cycles d'ouverture/fermeture des mors 612, 614 pour décoller la première spire de l'enroulement par rapport à la surface externe du mandrin, afin de faciliter l'extraction ultérieure de l'enroulement. Cette dernière étape est schématisée sur la figure 50.

Le déplacement relatif des deux mors 612, 614 lors de ces cycles alternés d'ouverture/fermeture est opéré par déplacement axial des deux demi-arbres 670, 680, grâce à la commande des vérins 834, 854. Le déplacement des demi-arbres 670, 680 en rapprochement du mandrin 610 entraîne la rotation des pignons arbres 658, 659 et des porte-mors 652, 654, et donc des mors 612, 614 eux-mêmes.

On a représenté sur les figures 51A, 52A et 53A, les positions des porte-mors 652, 654, des mors 612, 614, du culbuteur 620 et des leviers 830, 840 et 850 en position de repos. Cette position, dans laquelle les deux mors 612 et 614 sont accolés, est celle utilisée lors de la rotation du mandrin pour l'enroulement de la bande.

De préférence, comme indiqué précédemment, le coulissement axial des demi-arbres 670, 680 est opéré selon quatre positions additionnelles particulières de travail correspondant respectivement aux positions illustrées sur les figures 51, 52 et 53 avec les indices B, C, D et E respectivement.

Chacune de ces quatre positions additionnelles est réglable indépendamment grâce aux quatre vérins précédemment décrits 810, 834, 844 et 854.

L'énergie pneumatique permet de contrôler l'effort de poussée des vérins et de protéger ainsi la mécanique entrant dans la cinématique des mors.

Plus précisément :

la position illustrée sur les figures 51B, 52B et 53B est utilisée pour décoller la spire interne de l'enroulement par rapport à la surface extérieure du mandrin 610 (dans cette position, les faces internes des deux mors 612 et 614 sont parallèles et placées dans leur écartement maximal),

. la position illustrée sur les figures 51C, 52C et 53C est utilisée pour opérer le retrait de l'enroulement (dans cette position les faces internes des deux mors 612 et 614 sont parallèles et écartées pour permettre le retrait du début de bande, cependant l'écartement est inférieur à celui des figures d'indice B pour éviter un collage de la spire interne de l'enroulement sur la surface externe du mandrin 610),

. la position illustrée sur les figures 51D, 52D et 53D est une étape intermédiaire préparatoire à l'ouverture pour la saisie du début de bande en vue d'un enroulement (les faces internes des mors 612 et 614 sont écartées et les mors sont inclinées par rapport à la position occupée sur ies figures précédentes), et

. la position illustrée sur les figures 51E, 52E et 53E est utilisée pour la saisie du début de bande (les surfaces internes des mors 612 et 614 sont écartées et obliques entre elles ; elles forment un dièdre concave en direction du rouleau d'alimentation 570).

La position illustrée sur les figures 51B, 52B, 53B permet une forte rétraction du grand axe des mors 612, 614. Elle permet ainsi de donner "du ventre" à l'élément enroulé. Elle est donnée par l'action du vérin 854 qui pousse la bague 860, par exemple sur une distance de 7,5mm, entraînant un débattement angulaire des mors et porte-mors chacun sur un angle donné, par exemple de 7,5°.

La position illustrée sur les figures 51C, 52C et 53C, est obtenue par activation du vérin 834, présentant par exemple une course axiale de 4,5mm pour entraîner un débattement angulaire des mors et porte-mors contrôlé, par exemple chacun de 4,5°.

Au cours de la séquence précitée illustrée sur la figure 50, on peut passer plusieurs fois de la position illustrée sur les figures 51B, 52B, 53B à la position illustrée sur les figures 51C, 52C, 53C, successivement, pour créer une rupture d'adhérence entre les mors 612, 614 et la première spire enroulée.

La position finale du mandrin 610 est de préférence celle illustrée sur les figures 51C, 52C et 53C, situation d'attente d'extraction de l'élément enroulé, grâce au robot 700.

On notera cependant qu'avant d'extraire l'élément enroulé, de préférence le mandrin opère une correction angulaire pour venir compenser le décalage angulaire provoqué par l'ouverture des mors. En effet, de préférence, le robot 700 est adapté pour prendre l'élément enroulé en position horizontale, ce qui impose que les pointes des fuseaux constituant le mandrin soient situées dans cette position horizontale.

Après extraction de l'élément, le mandrin est bien entendu préparé et déplacé dans sa position de pleine ouverture dissymétrique des mors pour l'introduction du début de la bande du nouvel élément à enrouler.

Cette séquence de préparation est opérée en passant successivement par les positions illustrées sur les figures 51D, 52D, 53D puis 51E, 52E, 53E.

La position illustrée sur les figures 51D, 52D et 53D est due à l'action du vérin 844 qui sollicite la bague de poussée 860 sur une longueur typique de l'ordre de 13mm et entraîne donc une rotation typique de l'ordre de 13° sur chaque mors 612, 614.

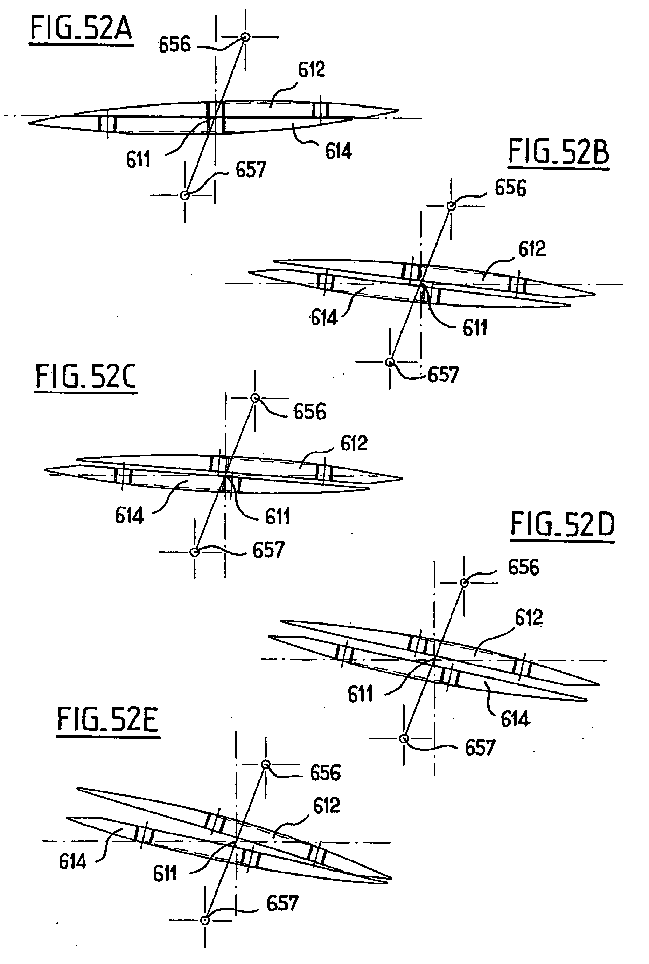

On passe ensuite à la position illustrée sur les figures 51E, 52E et 53E en activant le vérin 810, le vérin 834 restant lui-même activé. On obtient alors l'ouverture maximale des mors 612, 614 telle qu'illustrée sur la figure 52E. Cette position doit être indexée par contrôle de l'orientation du mandrin, par exemple à la position 348°, de sorte que la mâchoire formée par les deux mors 612, 614 soit symétrique par rapport à l'axe horizontal pour venir prendre la bande de façon symétrique, comme indiqué à l'origine en regard de la figure 44A.

Le déplacement relatif des moyens précités peut être contrôlé par tous moyens appropriés.

On a illustré sur la figure 34 un capteur 632 porté par le chariot 630 en regard du trajet de déplacement d'un élément de détection 663 porté par le corps de mandrin 660 pour contrôler le mouvement de rotation du corps de mandrin 660 par rapport au tiroir 630.

Les moyens assurant la commande en déplacement relatif des mors 612, 614 traversent une ouverture ménagée dans la cloison vertical du bâti délimitant les deux compartiments précités, pour permettre le déplacement en translation avec le chariot 630.

Bien entendu la présente invention n'est pas limitée aux modes de réalisation particuliers qui viennent d'être décrits, mais s'étend à toute variante conforme à son esprit.

Bien que le dépelliculage mécanique par lame, précédemment décrit, soit préféré car il évite l'introduction de produit chimique dans l'environnement du processus, en variante, on peut envisager de dépelliculer les complexes à l'aide d'un jet de solvant injecté au niveau de l'interface entre la face externe du complexe et la pellicule concernée.

Le dispositif conforme à l'invention peut également comprendre des moyens de dépelliculage comportant des moyens d'application d'un jet d'air, de préférence froid, sur la zone de divergence entre la pellicule et l'ensemble dont elle est déviée.

De même les fours à circulation d'air chaud pourront être remplacés par des rouleaux chauffants.

On a illustré sur les figures annexées et décrit précédemment une mise en oeuvre selon laquelle le complexe final de 6 couches est opéré par empilement in situ de trois complexes de base respectivement à 1, 2 et 3 couches, initialement séparés et préréalisés. En variante cependant, on peut envisager dans le cadre de la présente invention d'alimenter le mandrin 610 à l'aide d'un tel complexe de 6 couches préréalisé sur une machine adaptée. Dans ce cas l'interruption de l'anode de lithium doit être de préférence intégrée dans ce complexe. Selon encore une autre variante, dans le cadre de la présente invention, les différents complexes de base pourraient être réalisés in situ sur le dispositif de l'invention, à partir de films monocouches.

Les différents moyens mécaniques de coupe précédemment décrits pourront être remplacés par tous moyens équivalents, par exemple à base de laser.

Le cas échéant, la lame oscillante 524 peut être pilotée mécaniquement ou électroniquement par la rotation du mandrin 610 de sorte que les pas successifs de découpes opérées par cette lame 524 ne soient pas rigoureusement égaux entre eux sur la longueur d'un enroulement, mais soient fonction de la position angulaire du mandrin 610, lequel déclenche ainsi le début et la fin d'une découpe. De cette façon, les découpes se retrouvent superposées dans un même secteur de l'élément enroulé et au moins approximativement alignés radialement.

Le mandrin 610 peut lui-même faire l'objet de nombreuses variantes de réalisation.

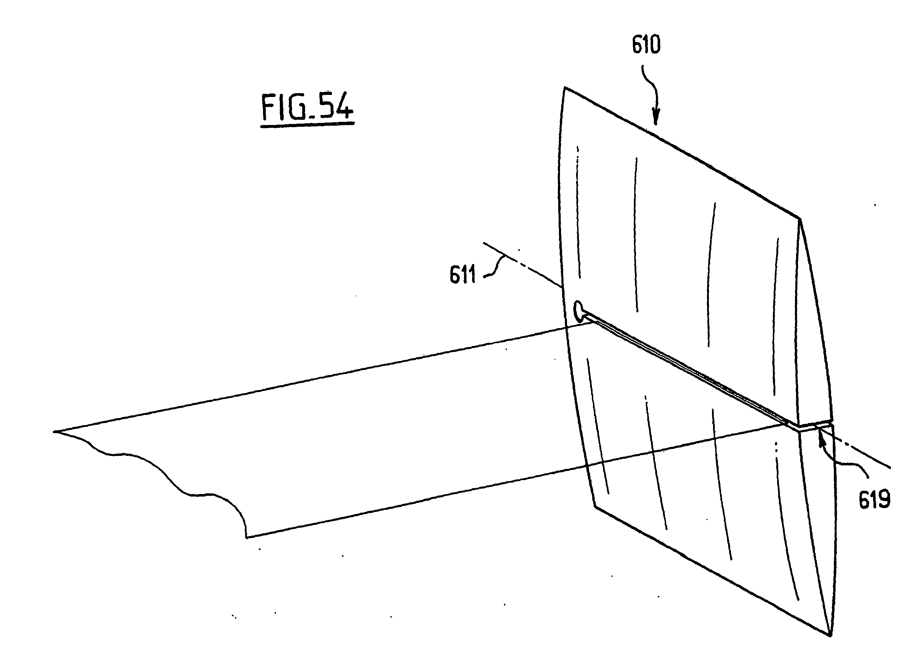

On a illustré sur ia figure 54, une variante de réalisation selon laquelle le mandrin est formé d'une pièce unique monobloc. Cette pièce 610 possède une section droite en fuseau similaire à celle définie par la combinaison des deux mors 612, 614 précédemment décrits. Cependant, on note à l'examen de la figure 54, la présence, dans la pièce précitée, d'une fente rectiligne 619 destinée à recevoir l'extrémité de la bande à enrouler.

Typiquement cette fente 619 s'étend sur une partie seulement de la longueur du mandrin 610, parallèlement aux arêtes effilées de celui-ci et sensiblement à mi-distance de ces arêtes.

Tous moyens appropriés peuvent être associés à un tel mandrin pour successivement ouvrir la fente 619 afin de permettre l'engagement d'une extrémité de bande, puis autoriser la fermeture de la fente pour permettre l'enroulement et/ou «aérer » l'enroulement.

A titre d'exemple non limitatif, le rapprochement des deux parties du mandrin situées de part et d'autre de la fente 619, pour aérer l'élément enroulé et permettre son extraction, peut être opéré par le robot 700 lui-même.

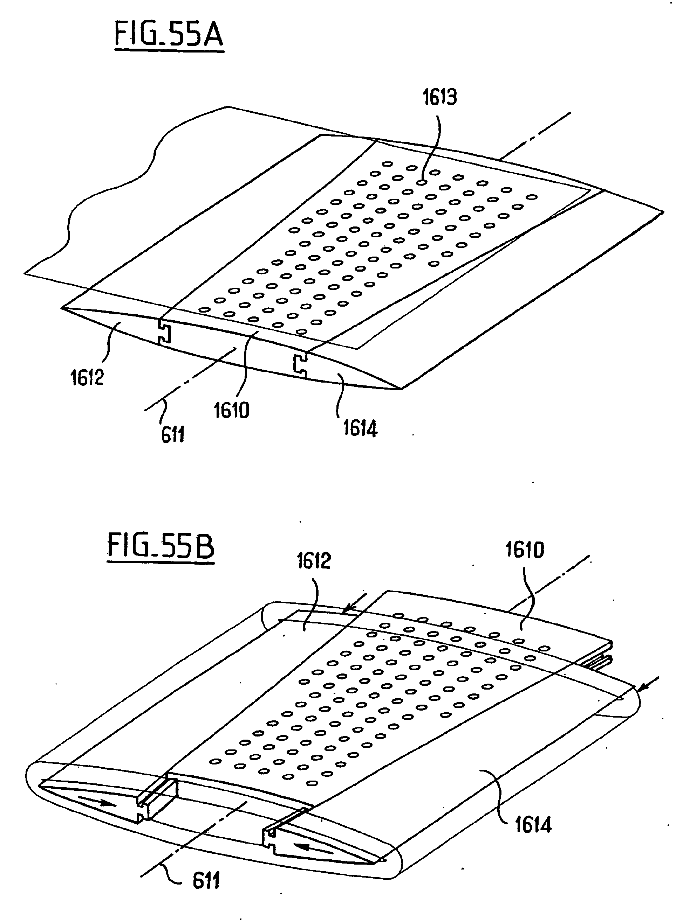

On a représenté sur les figures 55a et 55b, une autre variante de réalisation de mandrin.

Selon cette variante, le mandrin est formé de plusieurs pièces susceptibles de déplacement relatif parallèlement à l'axe de rotation 611 et formant en combinaison, dans la position de travail illustrée sur la figure 55a, une enveloppe identique au mandrin précité présentant une section droite en fuseau.

Selon le mode de réalisation particulier non limitatif illustré sur les figures 55, le mandrin est ainsi formé de trois pièces : une pièce centrale 1610 encadrée de deux pièces latérales 1612, 1614. En variante, le mandrin pourrait être formé de deux seulement de telles pièces. Par ailleurs, on notera que chacune des pièces 1610, 1612, 1614 possède une dimension «radiale », considérée transversalement à l'axe de rotation 611, évolutive lorsque l'on se déplace sur sa longueur, parallèlement à cet axe. Plus précisément la dimension radiale de la pièce centrale 1610 évolue en sens inverse de celle des pièces latérales 1612 et 1614.

Ainsi l'homme de l'art comprendra à l'examen comparé des figures 55A et 55B, que lorsqu'un déplacement relatif est opéré entre les pièces 1610 d'une part, et 1612, 1614 d'autre part, parallèlement à l'axe 611, par tous moyens appropriés, l'encombrement ou grand axe de la section du mandrin, varie.

Le mandrin illustré sur les figures 55A et 55B présente une autre particularité : l'un au moins des éléments, par exemple l'élément central 1610, possède une cavité qui débouche sur ses surfaces externes par l'intermédiaire d'une grille d'orifices 1613. Ainsi en reliant la cavité interne de la pièce 1610 à un moyen à dépression, on peut plaquer l'extrémité de la bande à enrouler sur le mandrin 610 par aspiration.

On a représenté sur les figures 55 des moyens de guidage à translation des pièces 1610, 1612, 1614 entre elles de type queue d'aronde. Bien entendu, tous moyens de guidage équivalents pourraient être retenus.

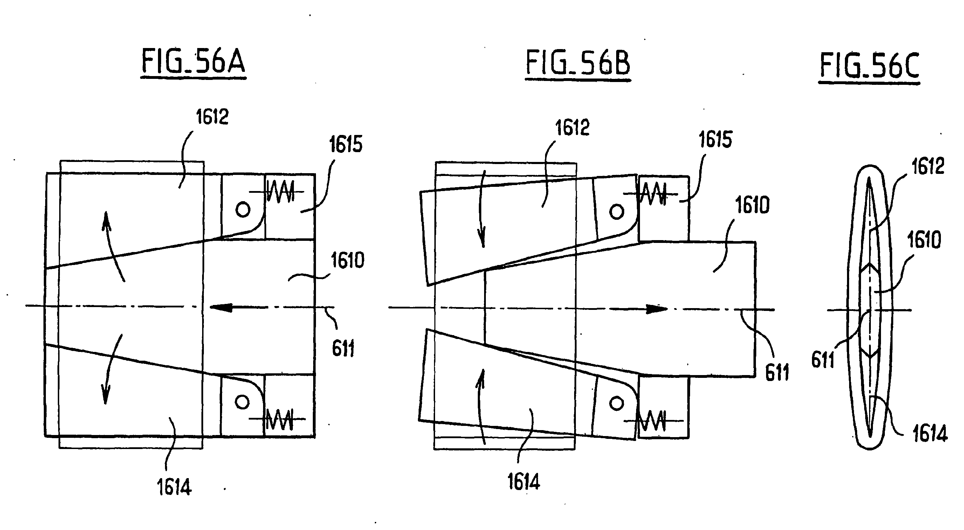

On a illustré sur les figures 56, une autre variante de réalisation selon laquelle le mandrin est également formé par la combinaison de plusieurs pièces, par exemple une pièce centrale 1610 et deux pièces latérales 1612, 1614 susceptibles de déplacement relatif selon au moins une composante parallèle à l'axe de rotation 610. Plus précisément selon le mode de réalisation représenté sur les figures 56, les pièces latérales 1612, 1614 sont articulées sur un support commun 1615 et la pièce centrale 1610, mobile par rapport à ce support commun, parallèlement à l'axe de rotation 611, joue par effet de coin pour modifier l'écartement entre celles-ci.

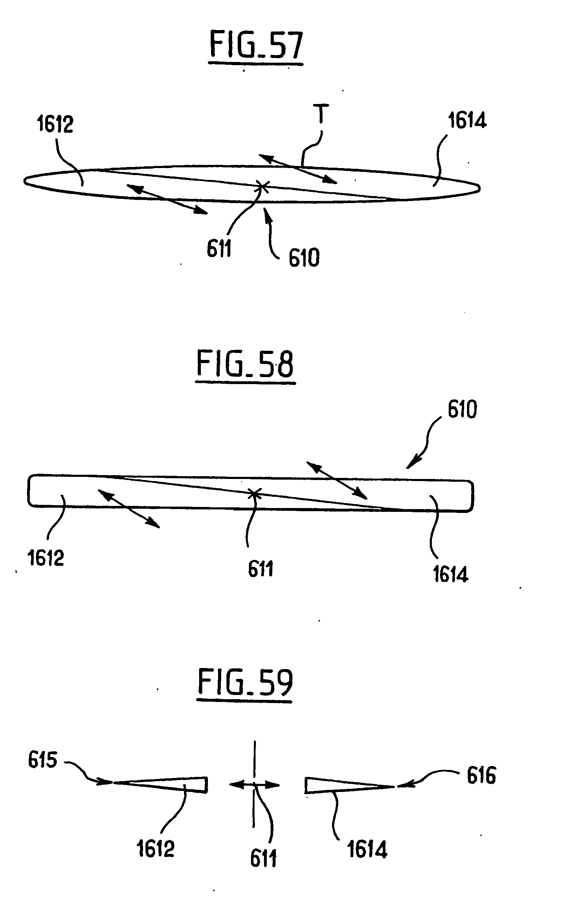

On a schématisé sur la figure 57, une variante de réalisation selon laquelle, tout en conservant la même section de mandrin que celle décrite précédemment, en regard notamment de la figure 2, on simplifie la commande de déplacement relatif des mors 612, 614 en ne conservant que des mouvements en translation des mors 612, 614 parallèlement entre eux selon une direction de translation non parallèle au plan d'interface 613, c'est-à-dire selon une trajectoire référencée T sur la figure 57 oblique par rapport au plan d'interface 613 des mors.

Bien évidemment, l'invention n'est pas limitée à la forme précise en fuseau du mandrin illustrée sur la figure 2.

On a par exemple illustré sur la figure 58, un mandrin formé par combinaison de deux mors 612, 614 définissant en combinaison un mandrin de section droite généralement rectangulaire à arêtes arrondies.

On a représenté sur les figures 55 un mandrin dont la section droite est modifiée par déplacement relatif de pièces 1610, 1612 et 1614 parallèlement à l'axe de rotation 611.

On peut envisager également de modifier la section droite du mandrin 610, notamment le grand axe de la section droite du mandrin, par déplacement de deux pièces latérales 1612, 1614 radialement en rapprochement et en éloignement de l'axe 611 et d'une pièce centrale 1610.

Les diverses variantes de mandrin précédemment décrites comprennent des pièces qui définissent une surface continue d'enroulement.

En variante, on peut envisager de réaliser le mandrin sous forme de deux pièces séparées 1612 et 1614 matérialisant les arêtes 615, 616, la partie centrale du mandrin restant évidée comme illustré sur la figure 59. De préférence, ces pièces 1612, 1614 sont pilotées sur commande à déplacement radial par rapport à l'axe de rotation 611 pour faciliter le dégagement de l'élément enroulé par réduction du grand axe du mandrin.

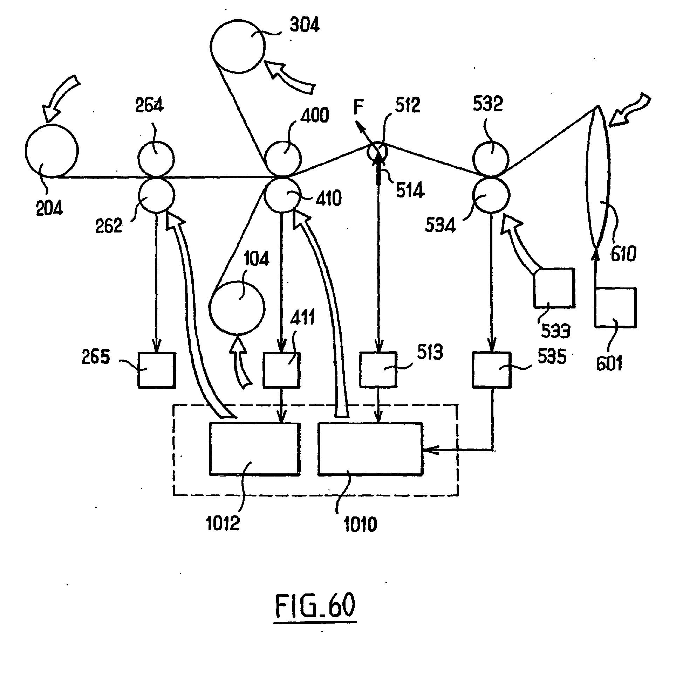

On va maintenant décrire plus particulièrement les moyens d'asservissement d'entraînement conformes à la présente invention en regard de la figure 60 annexée.

Selon cet aspect de l'invention, le dispositif de réalisation d'ensembles de stockage d'énergie électrique, comprend des moyens d'entraînement d'un film complexe et des moyens d'enroulement du film complexe, caractérisé en ce que les moyens d'entraînement comprennent au moins un couple de moyens d'entraînement respectivement maître et esclave, le moyen d'entraînement maître étant placé en aval du moyen d'entraînement esclave sur le chemin de défilement du film complexe, et des moyens de commande pour asservir le moyen d'entraînement esclave, sur le moyen d'entraînement maître.

Cette disposition permet d'améliorer la situation par rapport à l'art antérieur selon lequel généralement les moyens d'entraînement sont pilotés par un signal d'asservissement issu d'un moyen d'alimentation placé en amont.

On retrouve sur cette figure 60, le mandrin 610, la paire de rouleaux 532, 534, le rouleau de détection et de synchronisation 512, la paire de rouleaux de complexage 400, 410, les bobines d'alimentation 104, 204, 304 (on rappelle que typiquement, mais non limitativement, le rouleau 204 délivre un film de lithium tandis que les rouleaux 104 et 304 délivrent respectivement des complexes trois couches et deux couches) et la paire de rouleaux pinceurs 262 et 264.

Le mandrin 610 est l'organe directeur de l'ensemble de la bobineuse. Il reçoit sa consigne de vitesse en provenance d'un module de pilotage 601.

Tous les paramètres de défilement des films constituant le complexe sont réglés sur la base de la demande émanant du mandrin 610.

La paire de rouleaux motorisés 532, 534 est pilotée en mode entraînement à l'origine d'un enroulement pour acheminer le bord avant sur le mandrin 610.

Cependant pendant l'enroulement proprement dit du film complexe sur le mandrin 610, cette paire de rouleaux 532, 534 est pilotée en frein. Elle exerce ainsi sur le film complexe une traction constante et choisie, correspondant à une consigne. La paire de rouleaux 532, 534 reçoit sa consigne de couple frein en provenance d'un module de pilotage 533.

La paire de rouleaux 532, 534 est équipée d'un codeur incrémental 535, monté sur le motoréducteur d'entraînement, permettant d'attribuer la fonction Maître à cette paire de rouleaux.

La paire de rouleaux de complexage 400, 410 située en amont est également équipée d'un codeur 411. Cette paire de rouleaux 400, 410 est pilotée en Esclave par rapport aux rouleaux précités 532 et 534. Elle fonctionne en motorisation.

Plus précisément le codeur 535 associé à la paire de rouleaux 532, 534 mesure la longueur de bande qui défile entre lesdits rouleaux 532 et 534.

L'information correspondante de longueur est appliquée via un module 1010 à la paire de rouleaux de complexage 400, 410 de sorte que celle-ci achemine, sous le contrôle de son propre codeur associé 411, une longueur identique de bande.

Le rouleau oscillant de synchronisation 512 est positionné entre les paires de rouleaux 532, 534 et 400, 410. Il est susceptible d'un faible débattement et est soumis à un effort réglable permettant d'assurer son bon contact avec la bande entre les deux paires précitées de rouleaux 532, 534 et 400, 410.

Son rôle est de surveiller les microglissements ou perturbations pouvant éventuellement désynchroniser le défilement entre les deux paires de rouleaux 532, 534 et 400, 410.

Pour ce faire le codeur 513 du rouleau 512 est positionné sur l'axe de pivotement du rouleau 512. Il est chargé de capter le débattement angulaire de ce rouleau 512.

Le codeur 513 n'est pas sollicité en cas de parfaite synchronisation entre les deux paires de rouleaux 532, 534 et 400, 410. En revanche en cas de microglissements ou de perturbations entraînant une désynchronisation, le rouleau 512 est pivoté et le codeur 513 est sollicité.

Le codeur 513 est relié au module 1010. Ainsi le rouleau de synchonisation 512 apporte via le codeur 513, une correction, par exemple de +/- 10%, sur le débit linéaire de la paire esclave de rouleaux 400, 410.

La plage de +/- 10% de correction de débit de la paire de rouleaux de complexage 400, 410 est surtout utile au lancement, après chargement de nouvelles bobines de complexe 104, 204 et 304 dans la machine. En effet l'opérateur qui charge la bobine engage les complexes sans connaître ni tenir compte de la position initiale du rouleau 512.

En régime établi, cette correction est très voisine de zéro et ne sert qu'à gérer les microglissements.

En choisissant pour valeur de pilotage, l'information de longueur de bande débitée, plutôt que la vitesse de déroulement de la bande, on obtient un système permettant de réaliser une interpolation linéaire précise et continue entre les axes électriques matérialisés par les paires de rouleaux 532, 534 et 400, 410 (on entend par « axe électrique », la combinaison axe motoréducteur-codeur et variateur associé formant les paires de rouleaux 532, 534 et 400, 410). Ceci évite de cumuler les erreurs ou les dérives de synchronisation.

Ainsi la paire de rouleaux esclave 400, 410 suit le mouvement de la paire de rouleaux maître 532, 534, tout comme si ces rouleaux étaient situés respectivement deux à deux sur un même arbre mécanique, ayant par nature à chacune de ses extrémités le même positionnement angulaire.

Comme indiqué précédemment la force F appliquée sur le rouleau 512 est générée de préférence par un vérin pneumatique. Celui-ci est alimenté par un convertisseur Signal électrique/Pression dont la pression est proportionnelle au signal électrique issu de la consigne.

Le réglage de la consigne permet d'adapter la force exercée au complexe impliqué.

En variante la force appliquée sur le rouleau 512 peut être obtenue à l'aide de tout autre moyen approprié, autre qu'un vérin pneumatique, par exemple un ressort, un contre-poids, un organe élastique, un électroaimant, etc...

Le couple de rouleaux pinceurs 262, 264 est lui même un couple de rouleaux motorisés esclaves des rouleaux pinceurs motorisés 400 et 410 situés en aval. Il est équipé d'un capteur 265.

On rappelle que le couple de rouleaux 262, 264 a pour fonction d'appeler la bande de lithium provenant du dérouleur 204 et destinée à être complexée entre les deux complexes à deux couches et trois couches provenant des dérouleurs 104 et 304.

Ainsi le couple de rouleaux 532, 534 est le maître vis à vis du couple de rouleaux amont 400, 410, lequel est lui même le maître vis à vis du couple de rouleaux amont 262, 264.

L'invention met de ce fait en oeuvre au moins deux asservissements en cascade.

Le couple de rouleaux 262, 264 est également piloté à partir d'une consigne liée à l'information de longueur issue du capteur 411 associé à la paire de rouleaux 400, 410, via un module d'asservissement 1012.

Cependant on choisit de préférence d'avoir une consigne de longueur appliquée au couple de rouleaux 264, 262, légèrement inférieure à celle appliquée au couple 400, 410, afin de micro-étirer la bande de lithium et lui enlever ses défauts géométriques.

Typiquement le couple de rouleaux aval 262, 264 est piloté par une consigne de longueur égale à 99,5% du débit linéaire du couple 400, 410.

L'écart de consigne entre la consigne appliquée au couple 262, 264 et la consigne appliquée au couple 400, 410 est avantageusement paramétrable, notamment en fonction des déformations de la bande et de son épaisseur.

On rappelle que les rouleaux 262, 264 ont entre autres pour fonction de stopper le défilement de la bande de lithium en un temps très court, typiquement de l'ordre de 1 ms, lors de l'opération de coupe de la bande de lithium à la volée.

Les capteurs utilisés dans le cadre de la présente invention peuvent faire l'objet de nombreux modes de réalisation. Il peut s'agir de codeurs incrémentaux présentant un zéro au milieu de la correction, ou un codeur analogique de déplacement (inductif proportionnel, résistance variable, en fonction de sa longueur, capteur magnéto-résistif de champ magnétique, ...).

Très préférentiellement, dans le cadre de la présente invention, les codeurs 513 sont de type codeur absolu. Ainsi chaque position angulaire à un code binaire non volatil de positon absolue permettant de situer la position angulaire du rouleau 512, même après arrêt complet de la machine, sans réinitialisation du zéro au milieu du débattement.

Plus précisément encore dans le cadre de la présente invention, de préférence les capteurs de longueur sont adaptés pour mesurer des incréments de longueurs compris entre 1mm et 4$\mu$m, avantageusement entre 500$\mu$m et 8$\mu$m et très préférentiellement entre 100 et 40$\mu$m. Selon une autre caractéristique avantageuse de l'invention, les capteurs de longueur sont adaptés pour mesurer des incréments de longueurs inférieurs à 1/1000 de la longueur totale de l'enroulement, avantageusement inférieurs à 1/4000 de cette longueur et très préférentiellement inférieurs à 1/40 000 de cette longueur totale de l'enroulement.

Un autre moyen de contrôler le couple esclave 400, 410 par rapport au couple maître 532, 534 est de remplacer le rouleau 512 oscillant par un rouleau fixe fou, monté sur une jauge de contrainte. La jauge est dans ce cas sensible à la tension de bande perçue par le rouleau fou. Le couple 400, 410 reste esclave vis à vis du couple 532, 534. Le couple 400, 410 est corrigé en vitesse par rapport au couple 532, 534 en fonction de la tension de bande lue par la jauge du rouleau fou de telle sorte que la traction de bande souhaitée soit obtenue. Cette variante ne présente pas cependant les mêmes avantages que l'asservissement en longueur précédemment décrit. Elle peut en effet générer une oscillation de vitesse autour du point de consigne et donc une variation de la tension de bande.

L'asservissement en longueur préconisé dans le cadre de la présente invention offre de nombreux avantages :

- il permet de garantir une longueur totale précise et régulière d'enroulement, donc de garantir des caractéristiques homogènes pour tous les ensembles réalisés, et de garantir une localisation homogène de l'extrémité finale de l'enroulement et ainsi d'éviter toute surépaisseur,

- il permet de synchroniser parfaitement la coupe finale du complexe sur l'intervalle ménagé entre les deux tronçons de l'anode 40.

On va maintenant décrire plus en détail le module de chauffage 330. (On notera que le module de chauffage 130 destiné à chauffer le film X est similaire et parfaitement symétrique au module de chauffage 330 destiné à chauffer le film XIV, c'est pourquoi le module 130 ne sera pas décrit en détail.)

Ce module a pour objectif de résoudre le problème qui suit.

Les inventeurs ont constaté qu'il était possible de chauffer la surface de certains des films polymères avant que ceux-ci ne soient rassemblés en un complexe, de sorte qu'ils adhèrent les uns aux autres.

Les différentes couches de film constituent alors un ruban complexe monobloc ayant une certaine tenue d'ensemble. Cette caractéristique donne au complexe réalisé une machinabilité qui le prête bien à la réalisation d'enroulements de batteries.

En outre, la bonne adhérence des couches les unes aux autres assure un passage homogène du courant entre les différentes couches dans l'élément de batterie final. Ceci garantit une meilleure performance et une plus grande durée de vie de l'élément.

Dans le cadre d'une machine automatique de réalisation d'éléments de stockage d'énergie, les moyens de chauffage peuvent être positionnés le long du chemin de défilement de certains des films polymères mono-couche ou multi-couches.

Cependant une difficulté dans l'application de cette technique à une machine automatique est que le défilement des films polymère doit être régulièrement interrompu pour permettre la coupe du complexe, l'évacuation successive de chaque enroulement terminé et le réengagement d'un élément suivant. A cet effet, le chauffage des films doit être interrompu séquentiellement afin d'éviter la montée en température néfaste des portions de film exposées, à l'arrêt, à la chaleur des moyens de chauffage.

De même, lors du redémarrage du défilement des films polymères, les moyens de chauffage doivent être à nouveau efficaces le plus rapidement possible.

On cherche donc des moyens de chauffage présentant un temps de réponse en chauffage et en refroidissement très court (typiquement de l'ordre de quelques secondes).

L'utilisation d'émetteurs infrarouge comme moyens de chauffage ne semble pas satisfaisante. En effet, ces émetteurs sont peu adaptés au chauffage de polymères ou au chauffages de matériaux contenant du carbone (c'est le cas de certaines cathodes). En outre, ces émetteurs ont une inertie thermique qui les rend incompatibles avec les temps de réponse recvherchés.

Un but secondaire de l'invention est donc de fournir un dispositif de chauffage permettant de monter et descendre en température le plus rapidement possible.

Ce but est atteint dans le cadre de la présente invention grâce à un dispositif de chauffage de film mono-couche ou multi-couches en vue de la formation d'un complexe contenant ce film, caractérisé en ce qu'il comprend un tronçon de conduit dans lequel s'étend le film et des moyens pour faire circuler alternativement dans ce tronçon un flux d'air chaud ou un flux d'air froid.

Le chauffage par flux d'air est particulièrement adapté aux films polymères ou contenant du carbone.

Ce dispositif permet en outre de contrôler de manière précise la température du flux d'air mis en circulation. Ce dispositif permet par conséquent un contrôle de l'évolution du chauffage et du refroidissement.

Le fait de faire circuler alternativement dans un tronçon un flux d'air chaud ou un flux d'air froid conduit à un temps de réponse particulièrement court du dispositif. En effet, l'air chaud chasse l'air froid et vice versa de sorte que la température de l'air dans le tronçon est modifiée de manière quasi-instantanée.

L'invention concerne également un procédé de chauffage de film mono-couche ou multi-couches en vue de la formation d'un complexe contenant ce film, caractérisé en ce qu'il comprend les étapes consistant à :

- étendre le film dans un tronçon d'un conduit de circulation d'air,
- faire circuler alternativement dans ce tronçon un flux d'air chaud ou un flux d'air froid.

Plus précisément, le procédé permet de faire circuler un flux d'air chaud lorsque le film est entraîné en défilement dans le tronçon de conduit et faire circuler un flux d'air froid lorsque le défilement du film est interrompu.

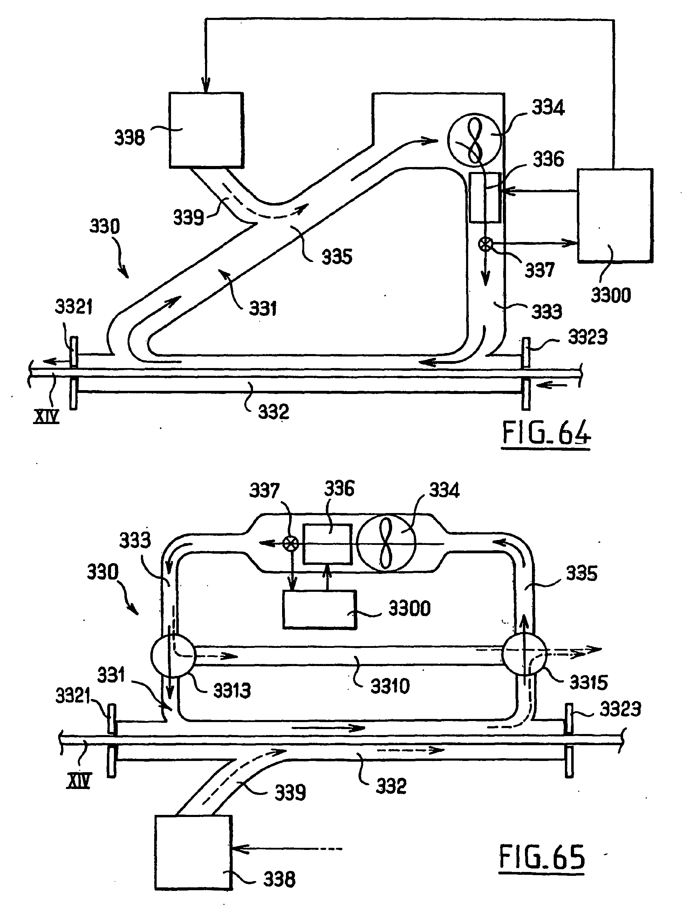

Sur la figure 64, le module de chauffage 330 comprend un conduit tubulaire de circulation d'air 331 fermé en forme générale de triangle droit. Ce conduit 331 comprend un tronçon 332 formé par la base du triangle, dans lequel défile le film multi-couche XIV (dont la composition est illustré à la figure 14). Le tronçon 332 est ouvert à ses deux extrémités par des fenêtres permettant le passage du film. Ces fenêtres sont délimitées par des barrettes 3321 et 3323 dont le positionnement est réglable, ce qui permet de modifier la hauteur des fenêtres.

Les deux tronçons 333 et 335 formant les deux autres branches du conduit 331 constituent respectivement un tronçon d'injection et un tronçon d'aspiration.

Des moyens pour pulser l'air sous la forme d'un ventilateur 334 sont disposés à la jonction des tronçons d'injection 333 et d'aspiration 335. Le ventilateur 334 est apte à être commandé pour créer un flux d'air circulant en boucle dans le conduit 331 dans le sens indiqué par les flèches pleines. Le flux d'air circule dans le tronçon 332 dans le sens de défilement du film XIV.

Le module de chauffage 330 comprend en outre un élément chauffant 336 sous la forme de résistances à fil nu, positionné en aval du ventilateur 334, dans le tronçon d'injection 333 ainsi qu'une sonde de température 337 permettent de mesurer la température du flux d'air en sortie de l'élément chauffant.

Lorsque le film XIV est entraîné en défilement, l'élément de chauffage 336 est en fonctionnement de sorte que le film XIV est soumis à un flux d'air chaud. Ce flux d'air chaud a pour fonction de porter à température contrôlée la surface externe du film XIV. A cet effet, la température du flux d'air est mesurée par la sonde 337 et l'élément de chauffage est régulé dynamiquement par des moyens de régulation 3300 en fonction de la température mesurée.

Le flux d'air chaud circulant en boucle, la dynamique de montée en température du dispositif de chauffage est particulièrement rapide.

Lorsque le défilement du film XIV est interrompu, le chauffage doit être stoppé. En effet, si le film continuait à être chauffé à l'arrêt, la zone de film surexposée située dans le conduit 332 subirait une altération de ses propriétés tel qu'un ramollissement excessif, des frisures entraînant des défauts de planéité du film. Cette altération provoquerait des défauts d'adhérence entre les couches du complexe obtenu et également des défauts électrochimiques de l'élément électrochimique final.

Pour éviter ces inconvénients, le dispositif de chauffage 330 comprend des moyens d'insufflation d'air comprimé froid. Ces moyens comprennent un compresseur 338 relié à un conduit latéral d'insufflation 339 débouchant en amont du ventilateur 334, dans le tronçon d'aspiration 335.

Dès que le défilement du film XIV est interrompu, l'élément de chauffage 336 est éteint et le compresseur 338 est mis en marche. Ce dernier insuffle de l'air froid dans ie tronçon d'aspiration 335. L'air froid insufflé est mis en circulation par le ventilateur 334. L'air froid chasse l'air chaud du conduit de circulation d'air 331. L'air chaud est évacué par les fenêtres du tronçon 332. La température du flux d'air est mesurée par la sonde 337 et le débit du compresseur est régulé dynamiquement par les moyens de régulation 3300 en fonction de la température mesurée.

Lors du défilement du film XIV, la température du flux d'air généré par le dispositif de chauffage 330 est d'environ 60 à 80 degrés Celsius suivant la nature du film. Lorsque le défilement est interrompu, le flux d'air généré par le dispositif de chauffage 330 est d'environ 10 degrés Celsius en dessous de la température de chauffage.

La durée d'interruption du défilement du film XIV est d'environ 10 secondes. Le débit du flux d'air est adapté pour permettre un temps de réponse en refroidissement de 2 secondes environ.

A cet effet, le conduit d'injection 333 doit être le plus court possible afin que la réponse en chauffage ou en refroidissement du dispositif soit la plus courte possible.

Le dispositif de chauffage peut disposer d'une sonde de température supplémentaire de sécurité destinée à corroborer les mesures de la sonde de régulation ou à assurer une relève dans le cas où la sonde de régulation ne serait plus opérationnelle.

Les barrettes 3321 et 3323 assurent un calibrage de la hauteur de l'espace de passage du film dans les fenêtres. Le réglage de la hauteur des fenêtres permet le réglage du débit de renouvellement de l'air dans le dispositif de chauffage 330.

L'ensemble du dispositif de chauffage 330 est recouvert d'un produit calorifuge par exemple tissu matelassé isolant de verre tissé silicone) de manière à limiter les dispersions calorifiques qui surchaufferaient le dispositif général de réalisation d'ensembles de stockage. Le calorifugeage du dispositif de chauffage assure une reproductibilité des ensembles enroulés réalisés et par conséquent, une constance de la qualité des ensembles enroulés produits.

Un panneau ouvrant latéral peut être prévu afin d'accéder au tronçon 332 pour y positionner le film XIV.

La figure 65 représente un autre mode de réalisation possible du module de chauffage 330.

Sur cette figure, le module de chauffage 330 comprend un conduit tubulaire de circulation d'air 331 fermé en forme générale de rectangle. Ce conduit 331 comprend un tronçon 332 formé par un grand côté du rectangle, dans lequel défile le film multi-couches XIV. Le tronçon 332 est ouvert à ses deux extrémités par des fenêtres permettant le passage du film et dont la hauteur est réglable par des barrettes 3321 et 3323.

Les deux tronçons 333 et 335 formant les deux petits côtés du rectangle constituent respectivement un tronçon d'injection et un tronçon d'aspiration.

Des moyens pour pulser l'air sous la forme d'un ventilateur 334 sont disposés sur un autre grand côté du rectangle entre les tronçons d'injection 333 et d'aspiration 335. Le ventilateur 334 est apte à être commandé pour créer un flux d'air circulant en boucle dans le conduit 331 dans le sens indiqué par les flèches pleines.

De même que le module de la figure 64, le module de chauffage 330 de la figure 65 comprend un élément chauffant 336 sous la forme de résistances à fil nu, positionné en aval du ventilateur 334 ainsi qu'une sonde de température 337 permettent de mesurer la température du flux d'air en sortie de l'élément chauffant.

Ce module de chauffage 330 comprend en outre un conduit de dérivation 3310 connecté à ses extrémités au tronçon d'injection 333 et au tronçon d'aspiration 335 par des vannes 3313 et 3315, en parallèle du tronçon 332 dans lequel le film XIV défile.

Le module de chauffage 330 comprend des moyens d'insufflation d'air comprimé froid. Ces moyens comprennent un compresseur 338 relié à un conduit latéral d'insufflation 339 débouchant directement dans le tronçon 332 dans lequel défile le film XIV.

Lorsque le film XIV est entraîné en défilement, les vannes 3313 et 3315 sont commandées pour permettre la circulation d'un flux d'air en boucle dans le conduit 331 selon la trajectoire indiquée par les flèches pleines. L'élément de chauffage 336 est en fonctionnement de sorte que le film XIV est soumis à un flux d'air chaud. La température du flux d'air est mesurée par la sonde 337 et l'élément de chauffage est régulé dynamiquement par des moyens de régulation 3300 en fonction de la température mesurée.

Dès que le défilement du film XIV est interrompu, l'élément de chauffage 336 peut être éteint et le compresseur 338 est mis en marche. Ce dernier insuffle de l'air froid dans le tronçon 332 dans lequel le film XIV est immobilisé.

La vannes 3313 est commandé pour que le flux d'air injecté par le ventilateur soit dirigé vers le conduit 3310 de dérivation. La vanne 3315 est commandée pour permettre l'éjection de l'air circulant dans le conduit de dérivation 3310 vers l'extérieur du module de chauffage 330. L'air pulsé par le ventilateur 334 n'est donc plus envoyé sur le film XIV. La circulation du flux d'air pulsé par le ventilateur 334 dans le conduit de dérivation 3310 produit une dépression qui entraîne le flux d'air froid également vers l'extérieur comme indiqué par les flèches en pointillés.

Ce module de chauffage 330 permet de dériver la circulation du flux d'air chaud et par conséquent d'augmenter l'efficacité du flux d'air froid. Il permet en outre de ne pas stopper l'élément de chauffage 336. Ainsi, lorsque le flux d'air chaud sera à nouveau envoyé vers le tronçon 332, cet air chaud sera dors et déjà à la température de chauffage souhaitée.

On va maintenant décrire de manière plus précise les moyens dérouleurs-aligneurs permettant d'assurer le positionnement latéral des films les uns par rapport aux autres tel que représenté sur les figures 17 à 20.

Ces moyens visent à résoudre le problème qui suit.

Une préoccupation dans le domaine des ensembles de stockage d'énergie sous forme d'enroulements est la réalisation des connectiques électriques permettant notamment un raccordement série/parallèle entre ces ensembles. En effet, ces connectiques doivent permettre de se connecter à certaines couches minces de l'enroulement tout en évitant les courts-circuits entre les couches des différents films.

Pour faciliter la réalisation de ces connectiques, une solution consiste, lors de la réalisation de l'enroulement, à contrôler le positionnement latéral des films enroulés les uns par rapport aux autres. Ainsi, dans l'enroulement final, certaines couches seront positionnées de manière à ce que l'un de leurs bords « déborde » plus ou moins par rapport aux bords des autres couches.

Cette technique permet par exemple de déposer sur les faces latérales de l'enroulement un métal, ce métal étant disposé uniquement sur le bord longitudinal en spirale de l'une ou une pluralité des couches. Le décalage latéral entre les couches permet en outre de les distinguer les unes des autres en fonction de leur positionnement lors de leur connexion.

Dans le cadre d'une machine automatique de réalisation d'éléments de stockage d'énergie, ce positionnement des films les uns par rapport aux autres est possible grâce à l'utilisation de systèmes spécifiques de positionnement. Des capteurs de position permettant de repérer le positionnement de l'un des bords longitudinaux d'un film sont disposés sur le chemin de défilement des films. Un système dérouleur-aligneur permet de régler dynamiquement la position du bord du film en fonction des informations fournies par ces capteurs.

Cependant l'inconvénient des systèmes dérouleurs-aligneurs existant pour les applications considérées est qu'ils sont assez encombrants. Cet inconvénient est particulièrement gênant dans le cadre d'une machine automatique de réalisation d'éléments de stockage d'énergie. En effet, cette machine doit être placée dans un environnement anhydre tel qu'une salle anhydre de faibles dimensions. Par conséquent, les éléments de cette machine doivent être le plus compacts possible pour un encombrement minimal final de la machine.

Par ailleurs, les systèmes dérouleurs-aligneurs utilisés dans la machine automatique de réalisation d'éléments de stockage d'énergie doivent fonctionner avec des longueurs de film les plus courtes possibles. Les films mis en jeu dans cette machine n'ont pas de rigidité propre et plus ils sont longs, plus ils risquent d'être détériorés, de friser ou de se tordre.

Un autre but secondaire de l'invention est donc de proposer un dispositif d'alignement compact, compatible avec les contraintes de réalisation en automatique d'ensembles de stockage d'énergie sous forme d'enroulements.

Ce but est atteint dans le cadre de la présente invention grâce à un dispositif de réalisation d'une structure de film complexe, comprenant une pluralité de moyens d'alimentation de films mono-couche ou multicouches, des moyens pour entraîner les films en défilement et des moyens pour superposer ces films en provenance des différents moyens d'alimentation pour former un complexe caractérisé en ce qu'il comprend un support mobile sur lequel est fixé au moins l'un des moyens d'alimentation de l'un des films, le support mobile étant apte à osciller autour d'un axe pour modifier le positionnement latéral dudit film par rapport aux autres films du complexe.

Un tel dispositif permet avantageusement d'intégrer les fonctions dérouleur et aligneur. En effet, les moyens d'alimentation forment le système dérouleur et également le système aligneur en combinaison avec le support mobile.

Il en résulte que le dispositif de l'invention présente un encombrement réduit par rapport aux systèmes de l'art antérieur.

Plus précisément, l'axe d'oscillation du support mobile est défini de la manière suivante :

- l'axe d'oscillation s'étend parallèlement à la direction de défilement du film en sortie des éléments montés sur le support mobile,

- l'axe d'oscillation s'étend dans un plan passant par le milieu du film,
- dans le cas où le moyen d'alimentation fixé sur le support mobile comprend une bobine d'alimentation à partir de laquelle est déroulé le film, l'axe d'oscillation du support passe par l'axe de rotation de la bobine d'alimentation.

L'invention concerne également un ensemble de réalisation d'ensembles de stockage d'énergie électrique sous forme d'enroulement multicouches, caractérisé en ce qu'il comprend le dispositif de réalisation d'une structure de film complexe qui précède et des moyens d'enroulement du complexe obtenu.

Les moyens dérouleurs aligneurs comprennent en particulier des supports sur lesquels sont montées les moyens d'alimentation 100, 200 et 300, sous la forme de platines mobiles.

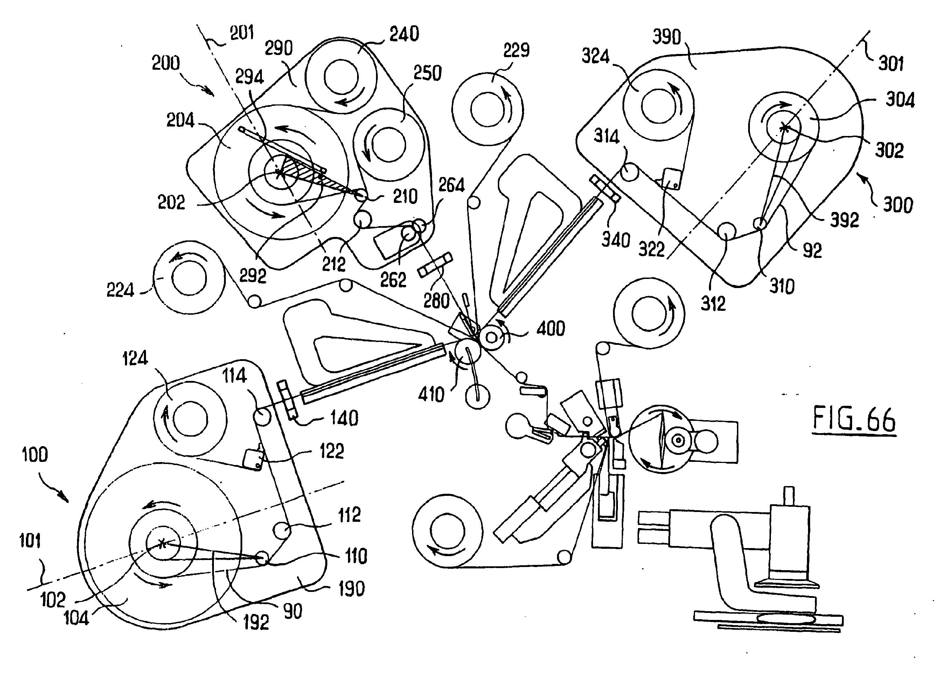

Ainsi que représenté sur la figure 66, le dispositif de réalisation d'ensembles de stockage comprend trois platines mobiles 190, 290 et 390 sur lesquelles sont montés les moyens d'alimentation 100, 200 et 300.

La platine 190 supporte le dérouleur 104 de complexe 90, les rouleaux 110 et 112 ainsi que l'ensemble de dépelliculage 120 incluant l'enrouleur de pellicule 124 et le système racleur 122.

La platine 290 supporte le dérouleur 204 de lithium, les rouleaux 210 et 212, les rouleaux d'alimentation de pellicule 240 et 250 et les rouleaux presseurs 262 et 264.

La platine 390 supporte le dérouleur 304 de complexe 92, les rouleaux 310 et 312 ainsi que l'ensemble de dépelliculage 320 comprenant l'enrouleur de pellicule 324 et le système racleur 322.

Les platines 190, 290 et 390 peuvent osciller autour d'axes respectifs 101, 201 et 301. Chaque axe 101, 201, 301 s'étend dans un plan passant par le milieu du film. En outre, chaque axe 101, 201, 301 passe par l'axe de rotation 102, 202, 302 du dérouleur 104, 204, 304 associé.

Il en résulte que les axes 101, 201, 301 sont parallèles aux platines 190, 290, 390 et passent par le centre des dérouleurs 104, 204 et 304.

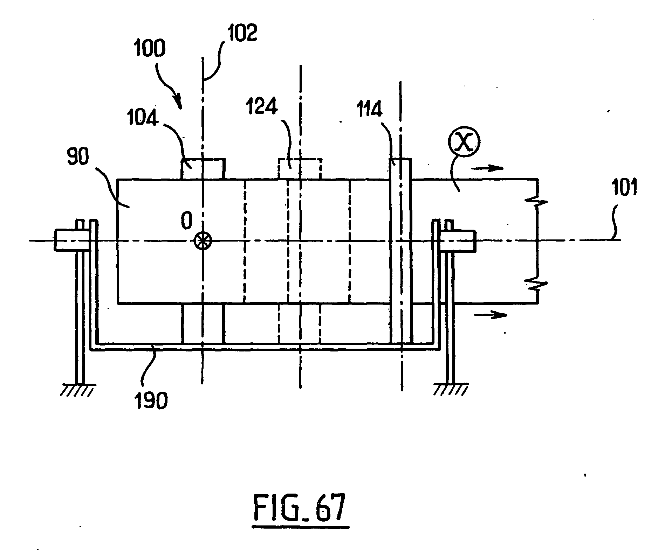

Sur la figure 67, le dérouleur-aligneur représenté comprend la platine 190 supportant la bobine 104 de complexe 90 assurant le rôle de dérouleur, le rouleau de dépelliculage 124 (représenté en traits pointillés) et le rouleau 114 montés à rotation par rapport à la platine 190. La direction de défilement du film en sortie des éléments montés sur la platine 190 est représentée par les flèches. La platine 190 est apte à osciller par rapport au bâti autour d'un axe 101. Comme on peut l'observer sur cette figure, l'axe 101 coupe l'axe 102 de rotation du dérouleur 104 en un point O et s'étend parallèlement à la direction de défilement du film, dans le plan passant par le milieu du film.

Ainsi que représenté sur la figure 66, les axes 101, 201, 301 sont parallèles aux directions de défilemement des tronçons de films issus des moyens d'alimentation 100, 200 et 300, ce qui signifie que :

- l'axe d'oscillation 101 est parallèle à la direction du tronçon de film (complexe 50, 60, 80) s'étendant entre le rouleau de sortie 114 et les rouleaux pinceurs 400 et 410,
- l'axe d'oscillation 210 est parallèle à la direction du tronçon de film (lithium 40) s'étendant entre les rouleaux de sortie 262 et 264 et les rouleaux pinceurs 400 et 410,
- l'axe d'oscillation 310 est parallèle à la direction du tronçon de film (complexe 83, 10, 20, 30) s'étendant entre le rouleau de sortie 314 et les rouleaux pinceurs 400 et 410.

Les moyens de détection 140, 280 et 340 disposés sur le chemin de déplacement de ces films issus respectivement des moyens d'alimentation 100, 200 et 300 mesurent en permanence le positionnement latéral des bords longitudinaux de ces films. Les platines 190, 290 et 390 sont déplacées en rotation autour des axes 101, 201, 301 par des moyens de déplacement asservis en fonction des mesures fournies les moyens de détection 140, 280 et 340. Les moyens de déplacement doivent présenter un temps de réponse d'environ 0,005 secondes. Ces moyens de déplacement peuvent comprendre par exemple des vérins électriques, hydrauliques ou pneumatiques, des électro-aimants ou tout autre type d'actionneur adapté au temps de réponse spécifié.

Il en résulte que les positionnements latéraux des films les uns par rapport aux autres, lorsque ceux-ci sont rassemblés en complexe au niveau des rouleaux presseurs 400 et 410, peut être parfaitement contrôlé.

Grâce à ce dispositif, les contraintes appliquées aux différents films sont similaires à celles générées par un aligneur à cadre classique. En particulier, ce dispositif ne génère pas d'efforts latéraux qui engendreraient des déformations dans le plan du film. En effet, les films sont seulement soumis à une légère torsion autour de leur fibre neutre longitudinale, ce qui minimise les contraintes générées dans les films en sortie des platines.

Comme on peut le constater, les ensembles de dépelliculage 120 et 320 sont montés respectivement sur les platines 190 et 390 avec les bobines 104 et 304 d'alimentation. Les rouleaux 114 et 314 assurent à la fois le rôle de rouleaux de sortie du système dérouleur-aligneur et le rôle de rouleaux de positionnement pour que les films soient maintenus en affleurement permanent des racleurs de dépelliculage 122 et 322.

On peut également constater que la bobine de lithium 204 est montée sur la platine 290 avec les rouleaux d'alimentation de pellicule 240 et 250. Les rouleaux presseurs 262 et 264 assurent l'entraînement du film de lithium 40 pris en sandwich entre ses deux pellicules 84 et 85.

La platine 290 comporte en outre des moyens de « reprise de mou » sur le film comprenant un bras rotatif 292 monté sur le dérouleur de lithium 204, porteur du rouleau 210 et un ressort de reprise de mou 294 disposé entre la platine 290 et le bras 292.

Les rouleaux presseurs 262 et 264 tirant sur le film de lithium, entraînent le bras 292 en rotation dans le sens de déroulement du dérouleur 204. En cas de mou sur le film, le ressort de reprise de mou 294 entraîne le bras 292 en sens inverse, de sorte que la force d'entraînement du film et la force de rappel du ressort 294 s'équilibrent pour redonner de la tension au film.

Les platines 190 et 390 peuvent disposer de moyens de reprise de mou équivalents à ceux qui sont associés aux bobines 104 et 304.

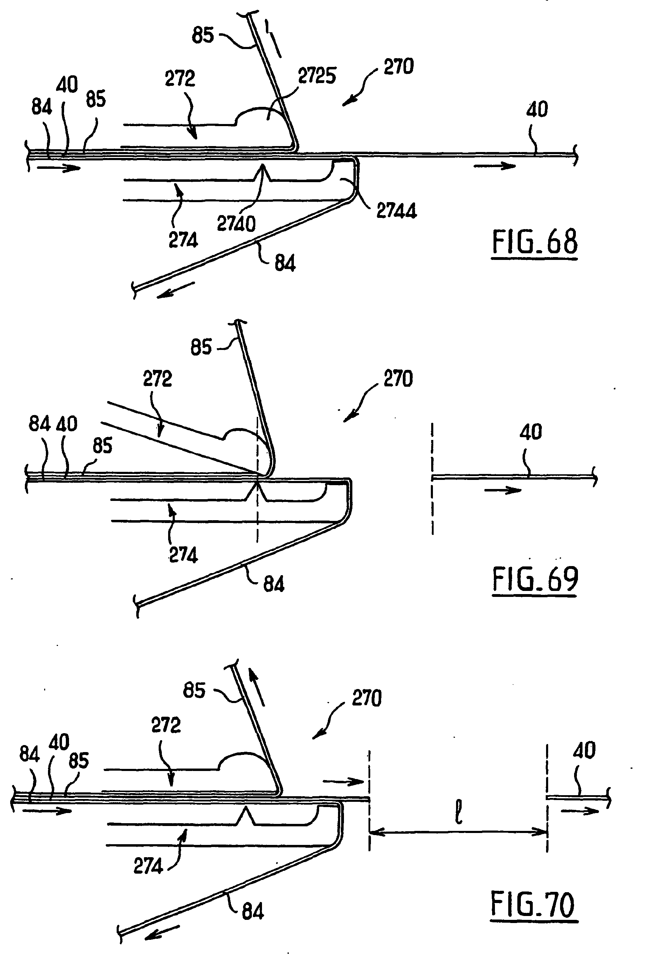

On va maintenant décrire plus en détail le fonctionnement du module de sectionnement 270 illustré aux figures 68 à 71.

Celui-ci a pour objectif de résoudre le problème qui suit.

La forme plane d'enroulement permet un empilement aisé des ensembles de stockages et un raccordement sous forme série/parallèle de plusieurs ensembles.

On a constaté cependant que l'étape de coupe du complexe final à l'aide d'un outil de coupe classique entraîne généralement un pincement des couches entre elles qui est particulièrement préjudiciable pour l'élément de stockage final.

En effet, ce pincement met en contact les différentes couches entre elles et génère des courts-circuits. Ce phénomène est aggravé lorsque pour achever l'enroulement et éviter le flottement de l'extrémité coupée, cette extrémité est chauffée et pressée contre l'enroulement.

Un but secondaire de l'invention est donc de permettre une fabrication en automatique et en continu d'ensembles multi-couches de stockage d'énergie électrique en évitant de créer des courts-circuits lors l'étape de coupe.

Ce but est atteint dans le cadre de la présente invention grâce à un dispositif de réalisation d'ensembles de stockage d'énergie, comprenant des moyens d'alimentation de films mono-couches ou multi-couches, des moyens d'entraînement pour faire défiler ces films, des moyens pour rassembler ces films en un complexe, et un mandrin adapté pour enrouler ces films sous forme d'un enroulement multi-couches, caractérisé en ce qu'il comprend des premiers moyens de coupe pour sectionner transversalement à leur direction de défilement une ou plusieurs des couche(s) formant le complexe et des seconds moyens de coupe pour sectionner transversalement à leur direction de défilement les couches restantes, de sorte que les couches sectionnées par les premiers moyens soient positionnées en retrait des autres couches au niveau d'une extrémité de l'enroulement du complexe.

Le procédé de l'invention évite, grâce à la prérupture de certaines couches du complexe de sectionner simultanément toutes les couches composant le complexe final. Ce procédé évite ainsi de pincer toutes les couches entre elles.

Sur les figures 68 à 71, le module de sectionnement 270 comprend un marteau mobile 272 et une enclume fixe 274 positionnés de part et d'autre du chemin de déplacement du complexe formé d'une couche centrale d'anode au Lithium 40 prise en sandwich entre deux pellicules de protection 84 et 85.

Le marteau 272 est formé d'un bras présentant à son extrémité une partie contondante plus épaisse 2725. Cette partie plus épaisse contondante joue également un rôle de bec dépelliculeur.

L'enclume 274 comporte une arête contondante 2740 s'étendant dans une direction générale transversale au défilement du complexe 84, 40, 85 et en face de la partie épaissecontondante 2725 du marteau 272. L'arête contondante 2740 ne présente pas un bord tranchant mais plutôt un bord émoussé de sorte qu'il ne puisse pas trancher le complexe par son seul contact avec celui-ci. L'enclume 274 se prolonge en un bec dépelliculeur 2744.

Sur la figure 68, le complexe 84, 40, 85 défile à vitesse constante et le module de sectionnement 270 est au repos. Le marteau 272 et l'enclume 274 s'étendent parallèlement au complexe 84, 40, 85. A mesure du défilement du complexe 84, 40, 85, les pellicules 84 et 85 sont entraînée et guidées respectivement le long de la surface du bec dépelliculeur 2744 et 2725. Ces surfaces forment un angle avec le complexe 84, 40, 85 supérieur à 90 degrés de sorte que les pellicules soient retournées sur elles-mêmes lors de leur pelage.

Sur la figure 69, le marteau 272 est actionné. Il s'abaisse et sa partie épaisse vient frapper le complexe 84, 40, 85 contre l'arête contondante 2740 de l'enclume 274. Les pellicules 84 et 85 sont formées d'un matériau apte à résister à la frappe du marteau 274 tandis que la couche de Lithium plus fragile est rompue le long de l'arête 2740. Simultanément à l'actionnement du module de sectionnement 270, le défilement du complexe 84, 40, 85 en amont du module 270 est stoppé par les rouleaux pinceurs 262 et 264 (voir figure 7). Le Lithium en aval du module de sectionnement, entraîné par les moyens de complexage continue de défiler.

Sur la figure 70, lorsqu'un intervalle I d'interruption souhaité de la couche de Lithium est obtenu, le marteau 272 est relevé et le complexe 84, 40, 85 à nouveau entraîné en défilement par les rouleaux 262 et 264 agissant en moteur.

Le module de sectionnement 270 permet d'obtenir un intervalle I de complexe 10, 20, 30, 40, 50, 60 dépourvu de Lithium.

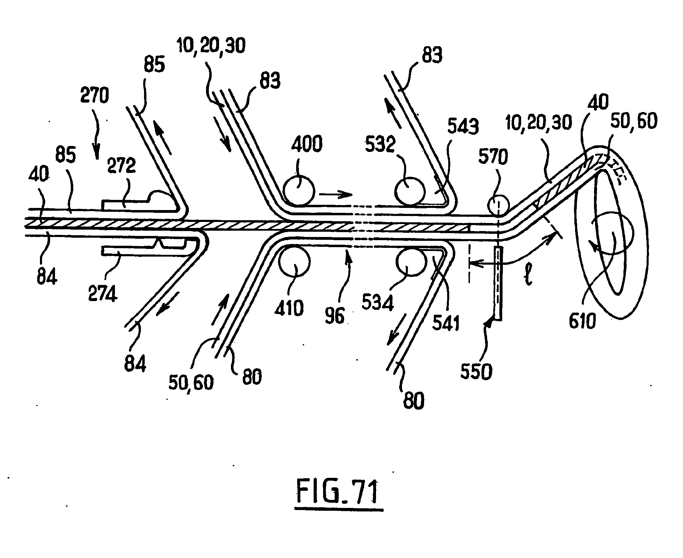

Ainsi que représenté schématiquement sur la figure 71, les moyens de coupe 550 opèrent ensuite un sectionnement transversal complet du complexe sensiblement au milieu de l'intervalle I formé dans la couche de Lithium 40 (couche hachurée sur cette figure).

Il en résulte que la couche d'anode 40 est positionnée en retrait des autres couches composant l'enroulement final, tant au niveau de l'extrémité avant que de l'extrémité arrière de l'enroulement (voir figure 21).

On a décrit un module de sectionnement comprenant un marteau et une enclume dans lequel l'enclume supporte une arête contondante. Bien entendu, l'arête peut être indifféremment supportée par le marteau ou l'enclume.

## Revendications

1. Dispositif de réalisation d'ensembles de stockage d'énergie électrique (En) comprenant des moyens multiples d'alimentation de structures en film (100, 200, 300), des moyens (400, 410) de complexage des structures en film reçues en provenance des différents moyens d'alimentation, des moyens (610) d'enroulement du complexe obtenu et des moyens de pilotage en continu et en synchronisme contrôlé des moyens d'alimentation, des moyens de complexage et des moyens d'enroulement, dans lequel les moyens d'alimentation comprennent des dérouleurs motorisés (104, 204, 304) et des moyens associés adaptés pour piloter séquentiellement les dérouleurs en mode frein.

2. Dispositif selon la revendication 1, **caractérisé par le fait qu'**il comprend des moyens de complexage (C, 400, 410) formés d'une paire de rouleaux presseurs (400, 410).

3. Dispositif selon l'une des revendications précédentes, **caractérisé par le fait qu'**il comprend un mandrin (610) ayant une section générale en fuseau.

4. Dispositif selon l'une des revendications précédentes, **caractérisé par le fait qu'**il comprend un mandrin (610) ayant une longueur supérieure à la largeur des complexes à enrouler.

5. Dispositif selon l'une des revendications précédentes, **caractérisé par le fait qu'**il comprend un mandrin (610) présentant une section non circulaire de révolution et que le dispositif comprend des moyens d'entraînement à rotation du mandrin (610) selon une vitesse angulaire non constante contrôlée de manière à obtenir une vitesse linéaire constante d'alimentation desdits films.

6. Dispositif selon l'une des revendications précédentes, **caractérisé par le fait que** la vitesse angulaire de rotation du mandrin d'enroulement (610) présente deux pics par tour de rotation.

7. Dispositif selon l'une des revendications précédentes, **caractérisé par le fait que** la vitesse de rotation du mandrin d'enroulement (610) est déterminée par la relation :

'

$$\omega = V / (2 . \pi . r)$$

dans laquelle :

V représente la vitesse linéaire constante recherchée pour le complexe, et
r représente un rayon d'enroulement lui même calculé sur la base de la relation :

$$r = r_o + (F . n . e)$$

dans laquelle :

ro représente le rayon du mandrin (610) nu,
F représente un facteur de correction,
n représente le rang de la spire en cours, et
e représente l'épaisseur du complexe enroulé sur le mandrin (610).

**8.** Dispositif selon l'une des revendications précédentes, **caractérisé par le fait qu'**un rouleau presseur (620) est associé au mandrin d'enroulement (610).

**9.** Dispositif selon la revendication précédente, **caractérisé par le fait que** le rouleau presseur (620) est porté par un équipage (624) rotatif autour d'un axe (625) excentré par rapport à l'axe du rouleau presseur (620).

**10.** Dispositif selon la revendication précédente, **caractérisé par le fait que** l'équipage rotatif (624) qui porte le rouleau presseur (620) est entraîné à rotation à une vitesse angulaire double de celle du mandrin (610).

**11.** Dispositif selon la revendication 10, **caractérisé par le fait que** l'équipage rotatif (624) est entraîné en rotation mécaniquement par la rotation du mandrin (610) avec un rapport multiplicateur égal à 2.

**12.** Dispositif selon l'une des revendications précédentes, **caractérisé par le fait que** le mandrin (610) est formé de deux mors (612, 614) accolés.

**13.** Dispositif selon la revendication 12, **caractérisé par le fait que** les deux mors (612, 614) sont symétriques et leur plan de symétrie passe par l'axe de rotation (611) du mandrin (610).

**14.** Dispositif selon l'une des revendications 12 et 13, **caractérisé par le fait qu'**il comprend des moyens d'entraînement aptes à déplacer les deux mors (612, 614) composant le mandrin (610) dans une position relative d'ouverture.

**15.** Dispositif selon l'une des revendications 12 à 14, **caractérisé par le fait qu'**il comprend des moyens d'entraînement aptes à déplacer les deux mors (612, 614) composant le mandrin (610) l'un par rapport à l'autre, parallèlement à leur plan d'interface.

**16.** Dispositif selon l'une des revendications précédentes, **caractérisé par le fait qu'**il comprend une presse (710) apte à finaliser l'aplanissement des enroulements formés sur le mandrin (610) après extraction desdits enroulements en position séparée du mandrin.

**17.** Dispositif selon l'une des revendications précédentes, **caractérisé par le fait qu'**il comporte au moins trois moyens d'alimentation de films (104, 204, 304) et des moyens (C, 400, 410) de complexage des films issus de ces trois moyens d'alimentation.

**18.** Dispositif selon l'une des revendications précédentes, **caractérisé par le fait qu'**il comporte trois moyens d'alimentation de films (104, 204, 304) destinés respectivement à l'alimentation : d'un ensemble (90) comportant une cathode (60) et un électrolyte (50), d'un ensemble (40) comprenant un film d'anode (40) et d'un ensemble (92) comportant un collecteur (10), une cathode (20) et un électrolyte (30).

**19.** Dispositif selon l'une des revendications précédentes, **caractérisé par le fait qu'**il comprend des moyens de chauffage (130, 330) disposés en amont des moyens de complexage (C, 400, 410).

**20.** Dispositif selon la revendication précédente, **caractérisé par le fait que** les moyens de chauffage comprennent des fours (130, 330).

**21.** Dispositif selon la revendication 19, **caractérisé par le fait que** les moyens de chauffage comprennent des rouleaux chauffants.

**22.** Dispositif selon l'une des revendications 19 à 21, **caractérisé par le fait que** les moyens de chauffage comprennent des moyens aptes à assurer séquentiellement un refroidissement des films traités.

**23.** Dispositif selon l'une des revendications précédentes, **caractérisé par le fait qu'**il comprend des moyens (104, 304) aptes à alimenter au moins un ensemble (90, 92) comprenant au moins un film recouvert d'au moins une pellicule de protection.

**24.** Dispositif selon l'une des revendications précédentes, **caractérisé par le fait qu'**il comprend des moyens de dépelliculage (122, 322, 220, 225, 541, 543) aptes à retirer au moins une pellicule disposée sur un ensemble.

**25.** Dispositif selon la revendication précédente, **caractérisé par le fait que** les moyens de dépelliculage comprennent des moyens aptes à dévier brutalement d'au moins 60° une pellicule de protection de l'ensemble qui la porte.

**26.** Dispositif selon l'une des revendications 24 ou 25, **caractérisé par le fait que** les moyens de dépelliculage comprennent une arête émoussée (232) proche du plan de déplacement, en amont, d'un film à dépelliculer et à convexité dirigée vers l'aval du déplacement de celui-ci, adaptée pour provoquer un micro-étirage d'une pellicule de protection recouvrant ledit film, lorsque la pellicule est déviée, par traction, sur l'arête.

**27.** Dispositif selon l'une des revendications 24 à 26, **caractérisé par le fait qu'**il comprend des moyens aptes à régler l'effort de traction exercé sur la pellicule.

**28.** Dispositif selon la revendication 24, **caractérisé par le fait que** les moyens de dépelliculage comprennent des moyens d'application d'un jet de solvant.

**29.** Dispositif selon la revendication 24, **caractérisé par le fait que** les moyens de dépelliculage comprennent des moyens d'application d'un jet d'air sur la zone de divergence entre la pellicule et l'ensemble dont elle est déviée.

**30.** Dispositif selon l'une des revendications précédentes, **caractérisé par le fait qu'**il comprend des moyens d'application (262, 264) aptes à appliquer au moins une pellicule de protection sur au moins une face externe d'un film d'anode (40).

**31.** Dispositif selon la revendication précédente, **caractérisé par le fait que** le film d'anode (40) est un film de lithium.

**32.** Dispositif selon l'une des revendications précédentes, **caractérisé par le fait qu'**il comprend des moyens (240) aptes à appliquer une pellicule (84) sur la périphérie d'un bobinage d'anode (40) sur un arc d'enroulement d'au moins 90°.

**33.** Dispositif selon l'une des revendications précédentes, **caractérisé par le fait qu'**il comprend des moyens (220, 225) aptes à retirer au moins une pellicule (84, 85) en amont d'un poste de complexage (400, 410).

**34.** Dispositif selon l'une des revendications précédentes, **caractérisé par le fait qu'**il comprend des moyens (541, 543) aptes à retirer au moins une pellicule (80, 83) en amont d'un poste d'enroulement (610).

**35.** Dispositif selon l'une des revendications précédentes, **caractérisé par le fait qu'**il comprend des moyens (240, 250) aptes à disposer des pellicules de protection (84, 85) sur certains au moins des films impliqués.

**36.** Dispositif selon l'une des revendications précédentes, **caractérisé par le fait qu'**il met en oeuvre des pellicules (80, 81, 82, 83, 84, 85) recouvrant certains au moins des films impliqués et qui assurent une fonction d'entraînement de ceux-ci.

**37.** Dispositif selon l'une des revendications précédentes, **caractérisé par le fait qu'**il met en oeuvre des pellicules (80, 81, 82, 83, 84, 85) recouvrant certains au moins des films impliqués et qui assurent une fonction de protection anti-collage de ceux-ci sur les rouleaux de parcours.

**38.** Dispositif selon l'une des revendications précédentes, **caractérisé par le fait qu'**il comprend des moyens d'ajustement du positionnement relatif des bords longitudinaux des films impliqués.

**39.** Dispositif selon la revendication précédente, **caractérisé par le fait que** les moyens d'ajustement comprennent des capteurs de position (140, 280, 340) et des moyens de déplacement des dérouleurs d'alimentation.

**40.** Dispositif selon la revendication précédente, **caractérisé par le fait que** les moyens de déplacement sont adaptés pour assurer un pivotement des bâtis supports de dérouleurs d'alimentation.

**41.** Dispositif selon l'une des revendications 39 ou 40, **caractérisé par le fait que** les moyens de déplacement sont adaptés pour assurer un pivotement des bâtis supports de dérouleurs d'alimentation autour d'axes (102, 202, 302) parallèles aux tronçons de films acheminés en amont des moyens de complexage (400, 410).

**42.** Dispositif selon l'une des revendications 39 à 41, **caractérisé par le fait que** les moyens de déplacement sont adaptés pour assurer un pivotement des bâtis supports de dérouleurs d'alimentation autour d'axes (102, 202, 302) passant par l'axe de rotation des dérouleurs d'alimentation (104, 204, 304) et par un plan médian de la largeur de la bobine d'alimentation.

**43.** Dispositif selon l'une des revendications précédentes, **caractérisé par le fait qu'**il comprend des moyens de sectionnement (272, 274, 552) des films impliqués.

**44.** Dispositif selon la revendication précédente, **carac-**

**térisé par le fait qu'**il comprend des moyens (272, 274) de sectionnement d'un film d'anode (40).

**45.** Dispositif selon la revendication précédente, **caractérisé par le fait qu'**il comprend des moyens (272, 274) de sectionnement d'un film d'anode (40) entre deux pellicules (84, 85) sans rupture de celles-ci.

**46.** Dispositif selon l'une des revendications 43 à 45, **caractérisé par le fait qu'**il comprend des moyens (272, 274) de sectionnement d'un film d'anode (40), formés d'un marteau (272) et d'une enclume (274).

**47.** Dispositif selon la revendication précédente, **caractérisé par le fait que** l'un au moins du marteau (272) ou de l'enclume (274) comprend au moins une arête contondante.

**48.** Dispositif selon l'une des revendications précédentes, **caractérisé par le fait qu'**il comprend des moyens (272, 274) de sectionnement d'un film et des moyens d'entraînement du tronçon situé en aval de la rupture pour provoquer un intervalle dans le film.

**49.** Dispositif selon la revendication précédente, **caractérisé par le fait que** le film sectionné est un film d'anode (40).

**50.** Dispositif selon l'une des revendications précédentes, **caractérisé par le fait qu'**il comprend des moyens (552) de sectionnement complet d'un complexe.

**51.** Dispositif selon l'une des revendications précédentes **caractérisé par le fait qu'**il comprend des moyens (552) de sectionnement formés d'une lame possédant un bord tranchant à deux pentes en dièdre convexe.

**52.** Dispositif selon l'une des revendications précédentes, **caractérisé par le fait qu'**il comprend des dérouleurs (104, 204, 304) et enrouleurs (124, 324, 542, 548) motorisés.

**53.** Dispositif selon la revendication 52, **caractérisé par le fait que** les enrouleurs (124, 229, 324, 542, 546) sont motorisés et pilotés en couple.

**54.** Dispositif selon l'une des revendications 52 ou 53, **caractérisé par le fait que** les dérouleurs (104, 204, 304) et enrouleurs (124, 324, 542, 546) sont pilotés par des signaux tenant compte du diamètre des enroulements.

**55.** Dispositif selon l'une des revendications précédentes, **caractérisé par le fait qu'**il comprend des moyens de mesure de la longueur débitée de l'ensemble complexe.

**56.** Dispositif selon l'une des revendications précédentes, **caractérisé par le fait qu'**il comprend des moyens de coupes localisées interrompues d'un film collecteur de courant (10).

**57.** Dispositif selon la revendication précédente, **caractérisé par le fait que** les moyens de coupe localisée d'un film collecteur de courant comprennent une lame oscillante (524) placée sur une première face du collecteur, associée à deux rouleaux (526, 528) placés sur l'autre face de celui-ci.

**58.** Dispositif selon l'une des revendications 56 ou 57, **caractérisé par le fait que** le déplacement des moyens de coupes localisées (524) est piloté par le déplacement du mandrin (610).

**59.** Dispositif selon l'une des revendications précédentes, **caractérisé par le fait qu'**il comprend des rouleaux de complexage (400, 410) chauffants.

**60.** Dispositif selon l'une des revendications précédentes, **caractérisé par le fait qu'**il comprend des rouleaux de complexage (400, 410) ayant au moins un diamètre de l'ordre de 20 mm.

**61.** Dispositif selon l'une des revendications précédentes, **caractérisé par le fait qu'**il comporte deux compartiments séparés par une cloison (900) : un premier compartiment qui loge l'ensemble des moyens assurant le déplacement des films et complexes impliqués et un second compartiment qui loge l'ensemble des moyens de pilotage et de commande.

**62.** Dispositif selon la revendication précédente, **caractérisé par le fait que** le compartiment qui loge l'ensemble des moyens assurant le déplacement des films est placé sous atmosphère contrôlée.

**63.** Dispositif selon l'une des revendications précédentes, **caractérisé par le fait qu'**il comprend des moyens aptes à escamoter sur commande les moyens de traitement des films pour faciliter la mise en place de ceux-ci.

**64.** Dispositif de réalisation d'ensembles de stockage d'énergie électrique selon l'une des revendications précédentes, comprenant un mandrin (610) adapté pour enrouler des films superposés sous forme d'un ensemble multi-couches, **caractérisé par le fait qu'**il comprend des moyens (670, 680, 800) aptes à modifier sur commande la section droite du mandrin (610).

**65.** Dispositif de réalisation d'ensembles de stockage d'énergie électrique selon l'une des revendications précédentes, comprenant des moyens d'entraînement d'un film complexe et des moyens (610) d'enroulement du film complexe, **caractérisé en ce que** les moyens d'entraînement comprennent au moins un couple de moyens d'entraînement respectivement maître et esclave (532, 534 et 400, 410 ; 400, 410 et 262, 264), le moyen d'entraînement maître (532, 534 ; 400, 410) étant placé en aval du moyen d'entraînement esclave (400, 410 ; 262, 264) sur le chemin de défilement du film complexe, et des moyens de commande pour asservir le moyen d'entraînement (400, 410 ; 262, 264) esclave, sur le moyen d'entraînement (532, 534 ; 400, 410) maître.

66. Dispositif de réalisation d'ensembles de stockage d'énergie, selon l'une des revendications précédentes, comprenant des moyens d'entraînement (532, 534, 610) d'un film complexe, des moyens d'enroulement (610) du film complexe et des moyens de coupe (550) pour sectionner le film complexe en fin d'enroulement, **caractérisé en ce qu'**il comprend en outre des moyens de chauffage (562) pour chauffer le film complexe et des moyens (580) pour presser l'extrémité de fin d'enroulement du film contre la surface de l'ensemble enroulé, de sorte que la fin de l'enroulement adhère à cette surface.

67. Dispositif de réalisation d'ensembles de stockage d'énergie électrique, selon l'une des revendications précédentes, comprenant des moyens d'entraînement d'un film complexe et des moyens d'enroulement (610) du film complexe (10, 20, 30, 40, 50, 60), **caractérisé en ce qu'**il comprend en outre des moyens (532, 534, 570, 610) pour tendre le film complexe sur un tronçon et des moyens de coupe (550) mobiles apte à être actionnés séquentiellement pour venir effectuer une coupe en l'air du film complexe (10, 20, 30, 40, 50, 60) au niveau du tronçon tendu.

68. Dispositif de réalisation d'ensembles de stockage d'énergie électrique, selon l'une des revendications précédentes, **caractérisé en ce qu'**il comprend un tronçon (332) de conduit (331) dans lequel s'étend le film (XIV) et des moyens pour faire circuler alternativement dans ce tronçon (332) un flux d'air chaud ou un flux d'air froid.

69. Dispositif de réalisation d'une structure de film complexe, selon l'une des revendications précédentes, comprenant une pluralité de moyens d'alimentation (100, 200, 300) de films mono-couche ou multi-couches, des moyens pour entraîner les films en défilement et des moyens (400, 410) pour superposer ces films en provenance des différents moyens d'alimentation pour former un complexe **caractérisé en ce qu'**il comprend un support mobile (190 ; 290 ; 390) sur lequel est fixé au moins l'un des moyens d'alimentation (100 ; 200 ; 300) de l'un des films, le support mobile (190 ; 290 ; 390) étant apte à osciller autour d'un axe (101 ; 201 ; 301) pour modifier le positionnement latéral dudit film par rapport aux autres films du complexe.

70. Dispositif de réalisation d'ensembles de stockage d'énergie, selon l'une des revendications précédentes, comprenant des moyens d'alimentation (100, 200, 300) de films mono-couches ou multi-couches (90, 40, 92), des moyens d'entraînement (530) pour faire défiler ces films, des moyens (C) pour rassembler ces films en un complexe (96), et un mandrin (610) adapté pour enrouler ces films sous forme d'un enroulement multi-couches (10, 20, 30, 40, 50, 60), **caractérisé en ce qu'**il comprend des premiers moyens de coupe (270) pour sectionner transversalement à leur direction de défilement une ou plusieurs des couche(s) (40) formant le complexe (96) et des seconds moyens de coupe (550) pour sectionner transversalement à leur direction de défilement les couches restantes (10, 20, 30, 50, 60), de sorte que les couches sectionnées (40) par les premiers moyens (270) soient positionnées en retrait des autres couches (10, 20, 30, 50, 60) au niveau d'une extrémité de l'enroulement du complexe (96).

71. Dispositif selon l'une des revendications 1 à 71, **caractérisé par le fait que** deux au moins des trois moyens constitués par les moyens de l'alimentation, de complexage et d'enroulement sont associés à des moyens d'entraînement respectifs.

72. Procédé de réalisation d'ensembles de stockage d'énergie électrique comprenant les étapes d'alimentation de multiples structures en film (90, 40, 92) à partir de moyens d'alimentation distincts (104, 204, 304), les moyens d'alimentation comprenant des dérouleurs motorisés et des moteurs associés, de complexage (400, 410) des structures en film (90, 40, 92) reçues en provenance des différents moyens d'alimentation (104, 204, 304), d'enroulement (610) du complexe obtenu et de pilotage en continu et en synchronisme contrôlé des moyens d'alimentation (104, 204, 304), des moyens de complexage (400, 410) et des moyens d'enroulement (610), et de pilotage séquentiel des dérouleurs en mode frein au moyen des moteurs associés.

73. Procédé selon la revendication précédente, **caractérisé par le fait que** les étapes de complexage et d'enroulement sont opérées en continu.

74. Procédé selon l'une des revendications 72 ou 73, **caractérisé par le fait que** l'un au moins des moyens d'alimentation est formé lui même d'un moyen de complexage in situ d'au moins deux films initialement séparés.

**75.** Procédé selon l'une des revendications 72 à 74 pour la fabrication d'un élément de stockage d'énergie, constitué d'un enroulement plat à contraintes internes minimisées, formé d'un ensemble superposé de films comportant au moins un collecteur de courant (10), une cathode (20) à base de polymères chargés, un électrolyte solide (30) à base de polymères chargés, une anode métallique (40), de préférence à base de lithium, ces différents éléments étant réalisés sous la forme de films minces, comprenant les étapes de complexage entre eux desdits films puis enroulement et préformage sur un mandrin quasi-plat (610) à section en fuseau, et enfin pressage et mise à plat sur une presse à faible poussée.

**76.** Elément de stockage d'énergie obtenu par la mise en oeuvre du procédé conforme à la revendication 75, constitué d'un enroulement plat à contraintes internes minimisées, **caractérisé en ce qu'**il est formé d'un ensemble superposé de films comportant au moins un collecteur de courant (10), une cathode (20) à base de polymères chargés, un électrolyte solide (30) à base de polymères chargés, une anode métallique (40), de préférence à base de lithium, ces différents éléments étant réalisés sous la forme de films minces, complexés entre eux puis enroulés et préformés sur un mandrin quasi-plat (610) à section en fuseau, et enfin pressés et mis à plat sur une presse à faible poussée.

**Claims**

**1.** A device for making electric energy storage assemblies (En), the device comprising multiple feed means (100, 200, 300) for feeding sheet structures, means (400, 410) for laminating the sheet structures received from the various feed means, winder means (610) for winding the resulting laminate, and control means for controlling continuously and in controlled synchronism the feed means, the laminator means, and the winder means, in which the feed means comprise motor-driven unwinders (104, 204, 304) and associated means that are adapted to control the unwinders sequentially in brake mode.

**2.** A device according to claim 1, **characterized by** the fact that it includes laminator means (C, 400, 410) formed by a pair of presser rollers (400, 410).

**3.** A device according to either preceding claim, **characterized by** the fact that it comprises a mandrel (610) of generally timezone-shaped section.

**4.** A device according to any preceding claim, **characterized by** the fact that the mandrel (610) is of length greater than the width of the laminates for winding.

**5.** A device according to any preceding claim, **characterized by** the fact that it includes a mandrel (610) presenting a section that is not circularly symmetrical, and that the device includes means for rotating the mandrel (610) at a controlled non-constant angular speed so as to obtain a constant linear speed for feeding said sheets.

**6.** A device according to any preceding claim, **characterized by** the fact that the angular speed of rotation of the winder mandrel (610) presents two peaks per revolution.

**7.** A device according to any preceding claim, **characterized by** the fact that the speed of rotation of the winder mandrel (610) is determined by the relationship:

$$\omega = V/(2.\pi.r)$$

in which:

V represents the desired constant linear speed for the laminate; and
$\underline{r}$ represents a winding radius itself calculated on the basis of the following relationship:

$$r = r_0 + (F.n.e)$$

in which:

$r_0$ represents the radius of the mandrel (610) when bare;
F represents a correction factor;
$\underline{n}$ represents the number of the current turn; and
$\underline{e}$ represents the thickness of the laminate wound on the mandrel (610).

**8.** A device according to any preceding claim, **characterized by** the fact that a presser roller (620) is associated with the winder mandrel (610).

**9.** A device according to the preceding claim, **characterized by** the fact that the presser roller (620) is carried by rotary equipment (624) mounted to rotate about an axis (625) that is eccentric relative to the axis of the presser roller (620).

**10.** A device according to the preceding claim, **characterized by** the fact that the rotary equipment (624) that carries the presser roller (620) is rotated at an angular speed that is twice that of the mandrel (610).

**11.** A device according to claim 10, **characterized by** the fact that the rotary equipment (624) is mechanically driven by rotation of the mandrel (610) with a velocity ratio of 2.

12. A device according to any preceding claim, **characterized by** the fact that the mandrel (610) is made up of two adjacent jaws (612, 614).

13. A device according to claim 12, **characterized by** the fact that the two jaws (612, 614) are symmetrical and their plane of symmetry contains the axis of rotation (611) of the mandrel (610).

14. A device according to claim 12 or claim 13, **characterized by** the fact that it includes drive means suitable for moving the two jaws (612, 614) making up the mandrel (610) into an open relative position.

15. A device according to any one of claims 12 to 14, **characterized by** the fact that it includes drive means suitable for moving the two jaws (612, 614) making up the mandrel (610) relative to each other parallel to their interface plane.

16. A device according to any preceding claim, **characterized by** the fact that it includes a press (710) suitable for finishing off flattening the windings formed on the mandrel (610) after said windings have been extracted to a position separate from the mandrel.

17. A device according to any preceding claim, **characterized by** the fact that it includes at least three sheet feed means (104, 204, 304) and laminator means (C, 400, 410) for laminating sheets coming from the three feed means.

18. A device according to any preceding claim, **characterized by** the fact that it includes three sheet feed means (104, 204, 304) serving respectively to feed: an assembly (90) comprising a cathode (60) and an electrolyte (50); an assembly (40) comprising an anode sheet (40); and an assembly (92) comprising a collector (10), a cathode (20), and an electrolyte (30).

19. A device according to any preceding claim, **characterized by** the fact that it includes heater means (130, 330) disposed upstream from said laminator means (C, 400, 410).

20. A device according to the preceding claim, **characterized by** the fact that the heater means comprise ovens (130, 330).

21. A device according to claim 19, **characterized by** the fact that the heater means comprise heater rollers.

22. A device according to any one of claims 19 to 21, **characterized by** the fact that the heater means comprise means suitable for sequentially cooling treated sheets.

23. A device according to any preceding claim, **characterized by** the fact that it includes means (104, 304) suitable for feeding at least one assembly (90, 92) comprising at least one sheet covered by at least one protective film.

24. A device according to any preceding claim, **characterized by** the fact that it includes film-remover means (122, 322, 220, 225, 541, 543) suitable for removing at least one film placed on an assembly.

25. A device according to the preceding claim, **characterized by** the fact that the film-remover means comprise means suitable for abruptly diverting a protective film through at least 60° relative to the assembly carrying it.

26. A device according to claim 24 or claim 25, **characterized by** the fact that the film-remover means comprise a dull edge (232) close to the plane of displacement of a film to be removed, and upstream from the point of remover, with the convex side of the edge facing downstream in the displacement direction, suitable for micro-stretching a protective film covering said sheet when the film is deflected by being pulled over the edge.

27. A device according to any one of claims 24 to 26, **characterized by** the fact that it includes means suitable for adjusting the traction force exerted on the film.

28. A device according to claim 24, **characterized by** the fact that the film-remover means comprise means for applying a jet of solvent.

29. A device according to claim 24, **characterized by** the fact that the film-remover means comprise means for applying a jet of air to the zone where the film and the assembly from which it is being removed diverge.

30. A device according to any preceding claim, **characterized by** the fact that it includes applicator means (262, 264) suitable for applying at least one protective film on at least one outside face of an anode sheet (40).

31. A device according to the preceding claim, **characterized by** the fact that the anode sheet (40) is a lithium sheet.

32. A device according to any preceding claim, **characterized by** the fact that it includes means (240) suitable for applying a film (84) to the periphery of an anode reel (40) over a winding arc of not less than 90°.

33. A device according to any preceding claim, **characterized by** the fact that it includes means (220, 225) suitable for removing at least one film (84, 85) upstream from a laminator station (400, 410).

34. A device according to any preceding claim, **characterized by** the fact that it includes means (541, 543) suitable for removing at least one film (80, 83) upstream from a winder station (610).

35. A device according to any preceding claim, **characterized by** the fact that it includes means (240, 250) suitable for placing protective films (84, 85) on at least some of the sheets involved.

36. A device according to any preceding claim, **characterized by** the fact that it uses films (80, 81, 82, 83, 84, 85) covering at least some of the sheets involved and forming a drive function thereon.

37. A device according to any preceding claim, **characterized by** the fact that it uses films (80, 81, 82, 83, 84, 85) covering at least some of the sheets involved and performing an anti-stick protection function for the sheets relative to rollers on their paths.

38. A device according to any preceding claim, **characterized by** the fact that it includes means for adjusting the relative positioning of the longitudinal edges of the sheets involved.

39. A device according to the preceding claim, **characterized by** the fact that the adjustment means comprise position sensors (140, 280, 340) and displacement means for moving the feed unwinders.

40. A device according to the preceding claim, **characterized by** the fact that the displacement means are adapted to pivot support plates carrying feed unwinders.

41. A device according to claim 39 or claim 40, **characterized by** the fact that the displacement means are adapted to pivot support plates carrying feed unwinders about axes (102, 202, 302) that are parallel to the segments of sheet conveyed upstream from the laminator means (400, 410).

42. A device according to any one of claims 39 to 41, **characterized by** the fact that the displacement means are adapted to pivot the support plates supporting feed unwinders about axes (102, 202, 302) intersecting the axes of rotation of the feed unwinders (104, 204, 304) and contained in a plane halfway across the width of the feed reel.

43. A device according to any preceding claim, **characterized by** the fact that it includes sectioner means (272, 274, 552) for sectioning the sheets involved.

44. A device according to the preceding claim, **characterized by** the fact that it includes sectioner means (272, 274) for sectioning an anode sheet (40).

45. A device according to the preceding claim, **characterized by** the fact that it includes sectioner means (272, 274) for sectioning an anode sheet (40) between two films (84, 85) without breaking the films.

46. A device according to any one of claims 43 to 45, **characterized by** the fact that it includes sectioner means (272, 274) for sectioning an anode sheet (40), the sectioner means being constituted by a hammer (272) and an anvil (274).

47. A device according to the preceding claim, **characterized by** the fact that at least one of the hammer (272) and the anvil (274) includes at least one striker edge.

48. A device according to any preceding claim, **characterized by** the fact that it includes sectioner means (272, 274) for sectioning a sheet and drive means for driving the segment situated downstream from the break in order to produce a gap in the sheet.

49. A device according to the preceding claim, **characterized by** the fact that the sectioned sheet is an anode sheet (40).

50. A device according to any preceding claim, **characterized by** the fact that it includes sectioner means (552) for completely sectioning a laminate.

51. A device according to any preceding claim, **characterized by** the fact that it includes sectioner means (552) formed by a blade having a sharp edge with two slopes forming a convex ridge.

52. A device according to any preceding claim, **characterized by** the fact that it includes motor-driven unwinders (104, 204, 304) and winders (124, 324, 524, 548).

53. A device according to claim 52, **characterized by** the fact that the winders (124, 229, 324, 542, 546) are motor-driven and controlled in torque.

54. A device according to claim 52 or claim 53, **characterized by** the fact that the unwinders (104, 204, 304) and the winders (124, 324, 542, 546) are controlled by signals that take account of the diameter of the windings.

**55.** A device according to any preceding claim, **characterized by** the fact that it includes means for measuring the delivered length of the laminated assembly.

**56.** A device according to any preceding claim, **characterized by** the fact that it includes cutter means for making localized interrupted cuts in a current collector sheet (10).

**57.** A device according to the preceding claim, **characterized by** the fact that the cutter means for localized cutting of a current collector sheet comprise an oscillating blade (524) placed facing a first face of the collector, associated with two rollers (526, 528) placed facing the other face thereof.

**58.** A device according to claim 56 or claim 57, **characterized by** the fact that displacement of the localized cutter means (524) is controlled by the displacement of the mandrel (610).

**59.** A device according to any preceding claim, **characterized by** the fact that it includes heating laminator rollers (400, 410).

**60.** A device according to any preceding claim, **characterized by** the fact that it includes laminator rollers (400, 410) having a diameter of at least about 20 mm.

**61.** A device according to any preceding claim, **characterized by** the fact that it comprises two compartments separated by a partition (900): a first compartment housing all of the means for moving the sheets and laminates involved, and a second compartment housing all of the control means.

**62.** A device according to the preceding claim, **characterized by** the fact that the compartment housing the means for ensuring displacement of the sheets is placed under a controlled atmosphere.

**63.** A device according to any preceding claim, **characterized by** the fact that it includes means suitable on command for retracting the sheet-treatment means in order to facilitate putting the sheets into place.

**64.** A device for making electric energy storage assemblies according to any preceding claim, including a mandrel (610) adapted to wind superposed sheets in the form of a multi-sheet assembly, the device being **characterized by** the fact that it includes means (670, 680, 800) suitable on command for modifying the right section of the mandrel (610).

**65.** A device for making electric energy storage assemblies according to any preceding claim, including drive means for driving a laminated sheet and means (610) for winding the laminated sheet, the device being **characterized in that** the drive means comprise at least one pair of drive means respectively constituting a master pair and a slave pair (532 & 534 and 400 & 410; 400 & 410 and 262 & 264), the master drive means (532 & 534; 400 & 410) being placed downstream from the slave drive means (400 & 410; 262 & 264) on the travel path of the laminated sheet, and control means for servo-controlling the slave drive means (400 & 410; 262 & 264) on the master drive means (532 & 534; 400 & 410).

**66.** A device for making energy storage assemblies according to any preceding claim, the device comprising drive means (532, 534, 610) for driving a laminated sheet, winder means (610) for winding the laminated sheet, and cutter means (550) for sectioning the laminated sheet at the end of winding, the device being **characterized in that** it further comprises heater means (562) for heating the laminated sheet and presser means (580) for pressing the end-of-winding end of the sheet against the surface of the wound assembly so that the winding end adheres to said surface.

**67.** A device for making electric energy storage assemblies according to any preceding claim, the device comprising drive means for driving a laminated sheet and winder means (610) for winding the laminated sheet (10, 20, 30, 40, 50, 60), the device being **characterized in that** it further comprises tensioner means (532, 534, 570, 610) for tensioning the laminated sheet over a segment, and moving cutter means (550) suitable for being actuated sequentially to cut the laminated sheet (10, 20, 30, 40, 50, 60) in air through the tensioned segment.

**68.** A device for making electric energy storage assemblies according to any preceding claim, the device being **characterized in that** it includes a segment (332) of duct (331) in which the sheet (XIV) extends, and means for causing a flow of hot air and a flow of cold air to circulate in alternation in said segment (332).

**69.** A device for making a laminated sheet structure according to any preceding claim, the device comprising a plurality of feed means (100, 200, 300) for feeding single-layer or multilayer sheets, drive means for driving travel of the sheets, and means (400, 410) for superposing the sheets coming from the various feed means in order to form a laminate, the device being **characterized in that** it includes a movable support (190; 290; 390) on which at least one of the feed means (100; 200; 300) for at least one of the sheets is mounted, the movable support (190; 290; 390) being suitable for oscillating about an axis (101; 201; 301) for modifying the lateral positioning of said sheet relative to the other sheets of the laminate.

70. A device for making energy storage assemblies according to any preceding claim, the device comprising feed means (100, 200, 300) for feeding single-layer or multilayer sheets (90, 40, 92), drive means (510) for causing said sheet to travel, means (C) for uniting the sheets in a laminate (96), and a mandrel (610) adapted to wind the sheets in the form of a multilayer winding (10, 20, 30, 40, 50, 60), the device being **characterized in that** it includes first cutter means (270) for sectioning one or more layers (40) making up the laminate (96) transversely to the laminate travel direction, and second cutter means (550) for sectioning the other layers (10, 20, 30, 50, 60) transversely to the laminate travel direction so that the layer(s) (40) sectioned by the first means (270) is/are set back relative to the other layers (10, 20, 30, 50, 60) at an end of the laminate winding (96).

71. A device according to any one of claims 1 to 71, **characterized by** the fact that at least three means constituted by the feed means, the laminator means, and the winder means are associated with respective drive means.

72. A method of making electric energy storage assemblies, the method comprising the steps of feeding multiple sheet structures (90, 40, 92) from distinct feed means (104, 204, 304), the feed means comprising motor-driven unwinders and associated motors, laminating (400, 410) the film structures (90, 40, 92) received from the various feed means (104, 204, 304), winding (610) the resulting laminate, and continuously and with controlled synchronism controlling the feed means (104, 204, 304), the laminator means (400, 410), and the winder means (610), and sequentially controlling the unwinders in brake mode by means of the associated motors.

73. A method according to the preceding claim, **characterized by** the fact that the laminating and winding steps are performed continuously.

74. A method according to claim 72 or claim 73, **characterized by** the fact that at least one of the feed means is itself formed by means for in situ lamination of at least two initially separate sheets.

75. A method according to any one of claims 72 to 74 for fabricating an energy storage cell, constituted by a flat winding with minimized internal stresses formed of a superposed assembly of sheets comprising at least one current collector (10), a cathode (20) based on filled polymers, a solid electrolyte (30) based on filled polymers, a metal anode (40), preferably based on lithium, these various items being made in the form of thin sheets, the method comprising the steps of laminating said sheets together and then winding and preforming them on an almost flat mandrel (610) having a section that is timezone-shaped, and finally pressing and flattening the winding on a low-thrust press.

76. An energy storage cell obtained by implementing the method in accordance with claim 75, constituted by a flat winding with minimized internal stresses, the cell being **characterized in that** it is formed by a superposed assembly of sheets comprising at least a current collector (10), a cathode (20) based on filled polymers, a solid electrolyte (30) based on filled polymers, a metal anode (40), preferably based on lithium, these various items being made in the form of thin sheets that are laminated together and then wound and preformed on an almost flat mandrel (610) having a timezone-shaped section, and finally pressed and flattened on a low-thrust press.

## Patentansprüche

1. Vorrichtung zur Herstellung von Anordnungen zur Speicherung elektrischer Energie (En), umfassend vielfache Mittel für die Zuführung von Strukturen aus Folie (100, 200, 300), Mittel (400, 410) zum Kaschieren der von den unterschiedlichen Zuführmitteln stammenden, aufgenommenen Strukturen aus Folie, Mittel (610) zum Aufwickeln des erhaltenen Gebildes und Mittel zur kontinuierlichen und synchrongesteuerten Steuerung der Zuführmittel, Kaschiermittel und Aufwicklungsmittel, wobei die Zuführmittel motorbetriebene Abwickler (104, 204, 304) und zugehörige Motoren umfassen, die dafür geeignet sind, die Abwickler im Bremsmodus sequentiell zu steuern.

2. Vorrichtung nach Anspruch 1, **dadurch gekennzeichnet, dass** sie Kaschiermittel (C, 400, 410) umfasst, die von einem Paar Andrückrollen (400, 410) gebildet sind.

3. Vorrichtung nach einem der vorhergehenden Ansprüche, **dadurch gekennzeichnet, dass** sie ein Spannfutter (610) umfasst, das einen allgemein spindelförmigen Querschnitt aufweist.

4. Vorrichtung nach einem der vorhergehenden Ansprüche, **dadurch gekennzeichnet, dass** sie ein Spannfutter (610) umfasst, das eine Länge aufweist, die größer als die Breite der aufzuwickelnden Gebilde ist.

5. Vorrichtung nach einem der vorhergehenden Ansprüche, **dadurch gekennzeichnet, dass** sie ein Spannfutter (610) umfasst, das einen nicht kreisförmigen Rotationsquerschnitt aufweist, und dass die Vorrichtung Mittel umfasst, um das Spannfutter (610) zur Drehung in einer nicht konstanten Winkelgeschwindigkeit anzutreiben, die derart gesteuert wird, dass eine konstante lineare Geschwindigkeit für die Zuführung der Folien erhalten wird.

6. Vorrichtung nach einem der vorhergehenden Ansprüche, **dadurch gekennzeichnet, dass** die Rotationswinkelgeschwindigkeit des Aufwickelspannfutters (610) zwei Spitzenwerte pro Umdrehung aufweist.

7. Vorrichtung nach einem der vorhergehenden Ansprüche, **dadurch gekennzeichnet, dass** die Rotationsgeschwindigkeit des Aufwickelspannfutters (60) durch folgende Beziehung bestimmt wird:

$$\omega = V / (2 . \Pi . r)$$

wobei:

V die konstante lineare Geschwindigkeit darstellt, die für das Gebilde angestrebt wird, und r einen Aufwickelradius darstellt, der seinerseits auf der Grundlage der folgenden Beziehung berechnet wird:

$$r = ro + (F . n . e)$$

wobei:

ro den Radius des unbestückten Spannfutters (610) darstellt,
F einen Korrekturfaktor darstellt,
n den laufenden Gewindegang darstellt und
e die Dicke des auf das Spannfutter (610) aufgewickelten Gebildes darstellt.

8. Vorrichtung nach einem der vorhergehenden Ansprüche, **dadurch gekennzeichnet, dass** eine Andrückrolle (620) mit dem Aufwickelspannfutters (610) verbunden ist.

9. Vorrichtung nach dem vorhergehenden Anspruch, **dadurch gekennzeichnet, dass** die Andrückrolle (620) durch eine Einrichtung (624) getragen wird, die um eine Achse (625), die in Bezug auf die Achse der Andrückrolle (620) exzentrisch ist, drehbar ist.

10. Vorrichtung nach dem vorhergehenden Anspruch, **dadurch gekennzeichnet, dass** die drehbare Einrichtung (624), welche die Andrückrolle (620) trägt, zur Drehung mit einer Winkelgeschwindigkeit angetrieben wird, die das Zweifache derjenigen des Spannfutters (610) beträgt.

11. Vorrichtung nach Anspruch 10, **dadurch gekennzeichnet, dass** die drehbare Einrichtung (624) durch die Drehung des Spannfutters (610) mit einem Übersetzungsverhältnis, das gleich 2 ist, mechanisch zur Drehung angetrieben wird.

12. Vorrichtung nach einem der vorhergehenden Ansprüche, **dadurch gekennzeichnet, dass** das Spannfutter (610) von zwei verbundenen Spannbakken (612, 614) gebildet ist.

13. Vorrichtung nach Anspruch 12, **dadurch gekennzeichnet, dass** die zwei Spannbacken (612, 614) symmetrisch sind und ihre Symmetrieebene durch die Rotationsachse (611) des Spannfutters (610) verläuft.

14. Vorrichtung nach einem der Ansprüche 12 und 13, **dadurch gekennzeichnet, dass** sie Antriebsmittel umfasst, die dafür geeignet sind, die zwei Spannbacken (612, 614), aus denen das Spannfutter (610) besteht, in eine relative Öffnungsposition zu bewegen.

15. Vorrichtung nach einem der Ansprüche 12 bis 14, **dadurch gekennzeichnet, dass** sie Antriebsmittel umfasst, die dafür geeignet sind, die zwei Spannbacken (612, 614), aus denen das Spannfutter (610) besteht, in Bezug zueinander parallel zur ihrer Schnittebene zu bewegen.

16. Vorrichtung nach einem der vorhergehenden Ansprüche, **dadurch gekennzeichnet, dass** sie eine Presse (710) umfasst, die dafür geeignet ist, die Einebnung der auf dem Spannfutter (610) gebildeten Wicklungen nach Auszug der Wicklungen in eine vom Spannfutter getrennte Position zum Abschluss zu bringen.

17. Vorrichtung nach einem der vorhergehenden Ansprüche, **dadurch gekennzeichnet, dass** sie zumindest drei Mittel für die Zuführung von Folien (104, 204, 304) und Mittel (C, 400,410) zum Kaschieren der von diesen drei Zuführmitteln stammenden Folien umfasst.

18. Vorrichtung nach einem der vorhergehenden Ansprüche, **dadurch gekennzeichnet, dass** sie drei Mittel für die Zuführung von Folien (104, 204, 304) umfasst, die jeweils vorgesehen sind für die Zuführung von: einer Anordnung (90), die eine Kathode (60) und einen Elektrolyt (50) umfasst, einer Anordnung (40), die eine Anodenfolie (40) umfasst und einer Anordnung (92), die einen Kollektor (10), eine Kathode (20) und einen Elektrolyt (30) umfasst.

**19.** Vorrichtung nach einem der vorhergehenden Ansprüche, **dadurch gekennzeichnet, dass** sie Aufheizmittel (130, 330) umfasst, die vor den Kaschiermitteln (C, 400, 410) angeordnet sind.

**20.** Vorrichtung nach dem vorhergehenden Anspruch, **dadurch gekennzeichnet, dass** die Aufheizmittel Öfen (130, 330) umfassen.

**21.** Vorrichtung nach Anspruch 19, **dadurch gekennzeichnet**, die Aufheizmittel Heizwalzen umfassen.

**22.** Vorrichtung nach einem der Ansprüche 19 bis 21, **dadurch gekennzeichnet, dass** die Aufheizmittel Mittel umfassen, die dafür geeignet sind, eine Abkühlung der bearbeiteten Folien sequentiell zu bewirken.

**23.** Vorrichtung nach einem der vorhergehenden Ansprüche, **dadurch gekennzeichnet, dass** sie Mittel (104, 304) umfasst, die dafür geeignet sind, zumindest eine Anordnung (90, 92) zu beschicken, die zumindest eine Folie umfasst, die mit zumindest einer Schutzschicht beschichtet ist.

**24.** Vorrichtung nach einem der vorhergehenden Ansprüche, **dadurch gekennzeichnet, dass** sie Entschichtungsmittel (122, 322, 220, 225, 541, 543) umfasst, die dafür geeignet sind, zumindest eine auf einer Anordnung angeordnete Schicht abzuziehen.

**25.** Vorrichtung nach dem vorhergehenden Anspruch, **dadurch gekennzeichnet, dass** die Entschichtungsmittel Mittel umfassen, die dafür geeignet sind, eine Schutzschicht um mindestens 60° von der sie tragenden Anordnung stark umzulenken.

**26.** Vorrichtung nach einem der Ansprüche 24 oder 25, **dadurch gekennzeichnet, dass** die Entschichtungsmittel eine abgestumpfte Kante (232) umfassen, die nahe und vor der Ebene der Bewegung einer zu entschichtenden Folie ist und eine Wölbung aufweist, die zur Position nach deren Verschiebung hin ausgerichtet ist, die dafür geeignet ist, eine Mikro-Streckung einer Schutzschicht, mit der die Folie beschichtet ist, zu bewirken, sobald die Schicht auf der Kante, durch Zug, umgelenkt wird.

**27.** Vorrichtung nach einem der Ansprüche 24 bis 26, **dadurch gekennzeichnet, dass** sie Mittel umfasst, die dafür geeignet sind, die auf die Schicht ausgeübte Zugkraft zu regeln.

**28.** Vorrichtung nach Anspruch 24, **dadurch gekennzeichnet, dass** die Entschichtungsmittel Mittel zum Aufbringen eines Lösungsmittelstrahls umfassen.

**29.** Vorrichtung nach Anspruch 24, **dadurch gekennzeichnet, dass** die Entschichtungsmittel Mittel zum Aufbringen eines Lösungsmittelstrahls auf den Divergenzbereich zwischen der Schicht und der Anordnung, von der sie umgelenkt wird, umfassen.

**30.** Vorrichtung nach einem der vorhergehenden Ansprüche, **dadurch gekennzeichnet, dass** sie Aufbringmittel (262, 264) umfasst, die dafür geeignet sind, zumindest eine Schutzschicht auf zumindest eine außen liegenden Seite einer Anodenfolie (40) aufzubringen.

**31.** Vorrichtung nach dem vorhergehenden Anspruch, **dadurch gekennzeichnet, dass** die Anodenfolie (40) eine Lithiumfolie ist.

**32.** Vorrichtung nach einem der vorhergehenden Ansprüche, **dadurch gekennzeichnet, dass** sie Mittel (240) umfasst, die dafür geeignet sind, eine Schicht (84) auf den Umfang einer Anodenwicklung (40) auf einem Aufwickelbogen von mindestens 90° aufzubringen.

**33.** Vorrichtung nach einem der vorhergehenden Ansprüche, **dadurch gekennzeichnet, dass** sie Mittel (220, 225) umfasst, die dafür geeignet sind, zumindest eine Schicht (84, 85) vor einer Kaschierstation (400, 410) abzuziehen.

**34.** Vorrichtung nach einem der vorhergehenden Ansprüche, **dadurch gekennzeichnet, dass** sie Mittel (541, 543) umfasst, die dafür geeignet sind, zumindest eine Schicht (80, 83) vor einer Aufwickelstation (610) abzuziehen.

**35.** Vorrichtung nach einem der vorhergehenden Ansprüche, **dadurch gekennzeichnet, dass** sie Mittel (240, 250) umfasst, die dafür vorgesehen sind, Schutzschichten (84, 85) auf zumindest bestimmten der einbezogenen Folien anzuordnen.

**36.** Vorrichtung nach einem der vorhergehenden Ansprüche, **dadurch gekennzeichnet, dass** sie Schichten (80, 81, 82, 83, 84, 85) einsetzt, die zumindest bestimmte der einbezogenen Folien bedecken und eine Funktion für deren Antrieb sicherstellen.

**37.** Vorrichtung nach einem der vorhergehenden Ansprüche, **dadurch gekennzeichnet, dass** sie Schichten (80, 81, 82, 83, 84, 85) einsetzt, die zumindest bestimmte der einbezogenen Folien bedecken und eine Funktion zum Schutz vor deren Festkleben auf den Transportrollen sicherstellen.

**38.** Vorrichtung nach einem der vorhergehenden Ansprüche, **dadurch gekennzeichnet, dass** sie Mittel zum Anpassen der relativen Positionierung der Längsränder der einbezogenen Folien umfasst.

**39.** Vorrichtung nach dem vorhergehenden Anspruch, **dadurch gekennzeichnet, dass** die Anpassungsmittel Positionsgeber (140, 280, 340) und Mittel für die Bewegung der Zuführabwickler umfassen.

**40.** Vorrichtung nach dem vorhergehenden Anspruch, **dadurch gekennzeichnet, dass** die Bewegungsmittel dafür geeignet sind, eine Schwenkbewegung der Trägergestelle der Zuführabwickler zu bewirken.

**41.** Vorrichtung nach einem der Ansprüche 39 oder 40, **dadurch gekennzeichnet, dass** die Bewegungsmittel dafür geeignet sind, eine Schwenkbewegung der Trägergestelle der Zuführabwickler um Achsen (102, 202, 302) herum zu bewirken, die parallel zu den Folienabschnitten sind, die vor die Kaschiermittel (400, 410) transportiert werden.

**42.** Vorrichtung nach einem der Ansprüche 39 bis 41, **dadurch gekennzeichnet, dass** die Bewegungsmittel dafür geeignet sind, eine Schwenkbewegung der Trägergestelle der Zuführabwickler um Achsen (102, 202, 302) herum zu bewirken, die durch die Rotationsachse der Zuführabwickler (104, 204, 304) und durch eine Mittelebene der Breite der Zuführspule verlaufen.

**43.** Vorrichtung nach einem der vorhergehenden Ansprüche, **dadurch gekennzeichnet, dass** sie Mittel (272, 274, 552) zum Durchtrennen der einbezogenen Folien umfasst.

**44.** Vorrichtung nach dem vorhergehenden Anspruch, **dadurch gekennzeichnet, dass** sie Mittel (272, 274) zum Durchtrennen einer Anodenfolie (40) umfasst.

**45.** Vorrichtung nach dem vorhergehenden Anspruch, **dadurch gekennzeichnet, dass** sie Mittel (272, 274) zum Durchtrennen einer Anodenfolie (40) zwischen zwei Schichten (84, 85) ohne deren Durchriss umfasst.

**46.** Vorrichtung nach einem der Ansprüche 43 bis 45, **dadurch gekennzeichnet, dass** sie Mittel (272, 274) zum Durchtrennen einer Anodenfolie (40) umfasst, die von einem Hammer (272) und einem Amboss (274) gebildet sind.

**47.** Vorrichtung nach dem vorhergehenden Anspruch, **dadurch gekennzeichnet, dass** einer von beiden, Hammer (272) oder Amboss (274), zumindest eine abgestumpfte Kante aufweist.

**48.** Vorrichtung nach einem der vorhergehenden Ansprüche, **dadurch gekennzeichnet, dass** sie Mittel (272, 274) zum Durchtrennen einer Folie und Mittel für den Antrieb des Abschnitts, der sich hinter der Trennstelle befindet, umfasst, um einen Spalt in der Folie zu bewirken.

**49.** Vorrichtung nach dem vorhergehenden Anspruch, **dadurch gekennzeichnet, dass** die durchtrennte Folie eine Anodenfolie (40) ist.

**50.** Vorrichtung nach einem der vorhergehenden Ansprüche, **dadurch gekennzeichnet, dass** sie Mittel (552) zum vollständigen Durchtrennen eines Gebildes umfasst.

**51.** Vorrichtung nach einem der vorhergehenden Ansprüche, **dadurch gekennzeichnet, dass** sie Mittel (552) zum Durchtrennen umfasst, die von einer Klinge gebildet sind, die eine Schneidkante mit zwei Neigungen als konvexem Zweiflach aufweist.

**52.** Vorrichtung nach einem der vorhergehenden Ansprüche, **dadurch gekennzeichnet, dass** sie motorbetriebene Aufwickler (124, 324, 542, 548) umfasst.

**53.** Vorrichtung nach Anspruch 52, **dadurch gekennzeichnet, dass** die Aufwickler (124, 229, 324, 542, 546) paarweise angetrieben und gesteuert werden.

**54.** Vorrichtung nach einem der Ansprüche 52 oder 53, **dadurch gekennzeichnet, dass** die Abwickler (104, 204, 304) und die Aufwickler (124, 324, 542, 546) durch Signale, welche den Durchmesser der Aufwickler berücksichtigen, gesteuert werden.

**55.** Vorrichtung nach einem der vorhergehenden Ansprüche, **dadurch gekennzeichnet, dass** sie Mittel zur Messung der zurechtgeschnittenen Länge der zusammengesetzten Anordnung umfasst.

**56.** Vorrichtung nach einem der vorhergehenden Ansprüche, **dadurch gekennzeichnet, dass** sie Mittel für das lokalisierte, nicht durchgängige Schneiden einer Stromkollektorfolie (10) umfasst.

**57.** Vorrichtung nach dem vorhergehenden Anspruch, **dadurch gekennzeichnet, dass** die Mittel für das lokalisierte Schneiden einer Stromkollektorfolie eine oszillierende Klinge (524) umfassen, die an einer ersten Seite des Kollektors platziert ist, die mit zwei auf deren anderer Seite angeordneten Rollen (526, 528) verbunden ist.

**58.** Vorrichtung nach einem der Ansprüche 56 oder 57, **dadurch gekennzeichnet, dass** die Bewegung der Mittel für das lokalisierte Schneiden (524) durch die Bewegung des Spannfutters (610) gesteuert wird.

**59.** Vorrichtung nach einem der vorhergehenden Ansprüche, **dadurch gekennzeichnet, dass** sie Kaschier-Heizwalzen (400, 410) umfasst.

**60.** Vorrichtung nach einem der vorhergehenden Ansprüche, **dadurch gekennzeichnet, dass** sie Kaschierwalzen (400, 410) umfasst, die zumindest einen Durchmesser in der Größenordnung von 20 mm aufweisen.

**61.** Vorrichtung nach einem der vorhergehenden Ansprüche, **dadurch gekennzeichnet, dass** sie zwei durch eine Trennwand (900) getrennte Räume aufweist: einen ersten Raum, der die Anordnung der Mittel für die Bewegung der einbezogenen Folien und Gebilde aufnimmt, und einen zweiten Raum, der die Anordnung der Steuer- und Betätigungsmittel aufnimmt.

**62.** Vorrichtung nach dem vorhergehenden Anspruch, **dadurch gekennzeichnet, dass** der Raum, der die Anordnung der Mittel für die Bewegung der Folien aufnimmt, unter kontrollierte Atmosphäre gestellt ist.

**63.** Vorrichtung nach einem der vorhergehenden Ansprüche, **dadurch gekennzeichnet, dass** sie Mittel umfasst, die dafür geeignet sind, auf Befehl die Mittel zur Bearbeitung der Folien zu versenken, um deren Einlegen zu vereinfachen.

**64.** Vorrichtung zur Herstellung von Anordnungen zur Speicherung elektrischer Energie nach einem der vorhergehenden Ansprüche, umfassend ein Spannfutter (610), das zum Aufwickeln von Folien geeignet ist, die in Form einer mehrschichtigen Anordnung übereinandergelegt sind, **dadurch gekennzeichnet, dass** sie Mittel (670, 680, 800) umfasst, die dafür geeignet sind, auf Befehl den Querschnitt des Spannfutters (610) zu verändern.

**65.** Vorrichtung zur Herstellung von Anordnungen zur Speicherung von elektrischer Energie nach einem der vorhergehenden Ansprüche, umfassend Mittel für den Antrieb einer zusammengesetzten Folie und Mittel zum Aufwickeln der zusammengesetzten Folie, **dadurch gekennzeichnet, dass** die Antriebsmittel zumindest ein Paar Antriebsmittel, Master bzw. Slave (532, 534 und 400, 410; 400, 410 und 262, 264), umfassen, wobei das Master-Antriebsmittel (532, 534; 400, 410) auf der Abspulstrecke der zusammengesetzten Folie hinter dem Slave-Antriebsmittel (400, 410; 262, 264) angeordnet ist, und Betätigungsmittel zum Steuern des Slave-Antriebsmittels (400, 410; 262, 264) auf dem Master-Antriebsmittel (532, 534; 400, 410) umfassen.

**66.** Vorrichtung zur Herstellung von Anordnungen zur Speicherung von Energie nach einem der vorhergehenden Ansprüche, umfassend Mittel für den Antrieb (532, 534, 610) einer zusammengesetzten Folie, Mittel (610) zum Aufwickeln der zusammengesetzten Folie und Schneidemittel (550), um die zusammengesetzte Folie am Ende der Wicklung zu durchtrennen, **dadurch gekennzeichnet, dass** sie ferner Heizmittel (562) umfasst, um die zusammengesetzte Folie aufzuheizen, und Mittel (580) umfasst, um das Ende am Wicklungsende der Folie gegen die Oberfläche der aufgewickelten Anordnung zu pressen, so dass das Wicklungsende auf dieser Oberfläche haftet.

**67.** Vorrichtung zur Herstellung von Anordnungen zur Speicherung von elektrischer Energie nach einem der vorhergehenden Ansprüche, umfassend Mittel für den Antrieb einer zusammengesetzten Folie und Mittel zum Aufwickeln (610) der zusammengesetzten Folie (10, 20, 30, 40, 50, 60), **dadurch gekennzeichnet, dass** sie ferner Mittel (532, 534, 570, 610) umfasst, um die zusammengesetzte Folie auf einem Abschnitt zu spannen, und bewegliche Schneidemittel (550) umfasst, die sequentiell betätigbar sind, um einen Schnitt der zusammengesetzten Folie (10, 20, 30, 40, 50, 60) im Bereich des gespannten Abschnitts frei durchzuführen.

**68.** Vorrichtung zur Herstellung von Anordnungen zur Speicherung von elektrischer Energie nach einem der vorhergehenden Ansprüche, **dadurch gekennzeichnet, dass** sie einen Abschnitt (332) in Form eines Kanals (331) umfasst, in dem sich die Folie (XIV) erstreckt, und Mittel umfasst, um zu bewirken, dass in diesem Abschnitt (332) abwechselnd ein heißer Luftstrom oder ein kalter Luftstrom zirkuliert.

**69.** Vorrichtung zur Herstellung einer zusammengesetzten Folienstruktur nach einem der vorhergehenden Ansprüche, umfassend eine Vielzahl von Mitteln (100, 200, 300) für die Zuführung von Einschicht- oder Mehrschicht-Folien, Mittel für den Antrieb der Folien beim Abspulen und Mittel (400, 410), um diese von unterschiedlichen Zuführmitteln stammenden Folien übereinander zu legen, um ein Gebilde zu bilden, **dadurch gekennzeichnet, dass** sie einen beweglichen Träger (190; 290; 390) umfasst, auf dem zumindest eines der Mittel (100; 200; 300) für die Zuführung einer der Folien befestigt ist, wobei der bewegliche Träger (190; 290; 390) in der Lage ist, um eine Achse (101; 201; 301) herum zu schwenken, um die seitliche Positionierung der Folie relativ zu den anderen Folien des Gebildes zu verändern.

**70.** Vorrichtung zur Herstellung von Anordnungen zur Speicherung von Energie nach einem der vorhergehenden Ansprüche, umfassend Mittel (100, 200, 300) für die Zuführung von Einschicht- oder Mehrschicht-Folien (90, 40, 92), Antriebsmittel (530), um diese Folien abzuspulen, Mittel (C), um diese Folien zu einem Gebilde (96) zusammenzusetzen, und ein Spannfutter (610), das dafür geeignet ist, diese Folien in Form einer Mehrschicht-Wicklung (10, 20, 30, 40, 50, 60) aufzuwickeln, **dadurch gekennzeichnet, dass** sie erste Schneidemittel (270) umfasst, um quer zu ihrer Abspulrichtung eine oder mehrere Schicht(en) (40), die das Gebilde (96) bilden, zu durchtrennen, und zweite Schneidemittel (550) umfasst, um die übrigen Schichten (10, 20, 30, 50, 60) quer zu ihrer Abspulrichtung abzutrennen, so dass die durch die ersten Mittel (270) durchtrennten Schichten (40) im Bereich eines Endes der Wicklung des Gebildes (96) von den anderen Schichten (10, 20, 30, 50, 60) zurückgezogen positioniert werden.

71. Vorrichtung nach einem der Ansprüche 1 bis 71, **dadurch gekennzeichnet, dass** mindestens zwei der drei Mittel, die von den Zuführ-, Kaschier-und Aufwicklungsmitteln gebildet sind, mit jeweiligen Antriebsmitteln verbunden sind.

72. Verfahren zur Herstellung von Anordnungen zur Speicherung von elektrischer Energie, umfassend die Schritte des Zuführens vielfacher Strukturen aus Folie (90, 40, 92) von verschiedenen Zuführmitteln (104, 204, 304), wobei die Zuführmittel motorbetriebene Abwickler und zugehörige Motoren umfassen, des Kaschierens (400, 410) der Strukturen aus Folie (90, 40, 92), die von unterschiedlichen Zuführmitteln (104, 204, 304) stammend aufgenommen werden, des Aufwickelns (610) des erhaltenen Gebildes und der kontinuierlichen und synchrongesteuerten Steuerung der Zuführmittel (104, 204, 304), der Kaschiermittel (400, 410) und der Aufwicklungsmittel (610), und der sequentiellen Steuerung der Abwickler im Bremsmodus mittels der zugehörigen Motoren.

73. Verfahren nach dem vorhergehenden Anspruch, **dadurch gekennzeichnet, dass** die Schritte zum Kaschieren und Aufwickeln kontinuierlich durchgeführt werden.

74. Verfahren nach einem der Ansprüche 72 oder 73, **dadurch gekennzeichnet, dass** zumindest eines der Zuführmittel seinerseits von einem Kaschiermittel in situ von zumindest zwei anfänglich getrennten Folien gebildet ist.

75. Verfahren nach einem der Ansprüche 72 bis 74 zur Herstellung eines Elements zur Speicherung von Energie, bestehend aus einer ebenen Wicklung mit minimierten internen Spannungen, die von einer übereinanderliegenden Anordnung von Folien gebildet ist, die mindestens einen Stromkollektor (10), eine Kathode (20) auf der Basis von geladenen Polymeren, einen festen Elektrolyt (30) auf der Basis von geladenen Polymeren, eine metallische Anode (40), vorzugsweise auf der Basis von Lithium, umfasst, wobei diese verschiedenen Elemente in Form von dünnen Folien hergestellt sind, umfassend die Schritte des Kaschierens der Folien untereinander, dann des Aufwickelns und Vorformens auf einem quasi ebenen Spannfutter (610) mit spindelförmigem Querschnitt, und schließlich des Pressens und Einebnens auf einer Presse unter geringem Druck.

76. Element zur Speicherung von Energie, erhalten durch die Umsetzung des Verfahrens nach Anspruch 75, bestehend aus einer ebenen Wicklung mit minimierten internen Spannungen, **dadurch gekennzeichnet, dass** sie von einer übereinanderliegenden Anordnung von Folien gebildet ist, die zumindest einen Stromkollektor (10), eine Kathode (20) auf der Basis von geladenen Polymeren, einen festen Elektrolyt (30) auf der Basis von geladenen Polymeren, eine metallische Anode (40), vorzugsweise auf der Basis von Lithium, umfasst, wobei diese verschiedenen Elemente in Form von dünnen Folien hergestellt, untereinander kaschiert, dann auf einem quasi ebenen Spannfutter (610) mit spindelförmigem Querschnitt aufgewickelt und vorgeformt und schließlich auf einer Presse mit geringem Druck gepresst und eingeebnet sind.

FIG_1

FIG.2

FIG.3

FIG.4

FIG.5

FIG.6

FIG.22

**FIG_7**

FIG.8

FIG.31

FIG.9

90

81
50
60
80

FIG.10

50
60
80

FIG.11

40

FIG.12

94

85
40
84

FIG.13

92

83
10
20
30
82

FIG.14

83
10
20
30

FIG.15

96

83
10
20
30
40
50
60
80

FIG.16

10
20
30
40
50
60

## FIG_17

50

60

80

## FIG_18

85

40

84

## FIG_19

30

20

10

83

## FIG_20

83

10

20

30

40

50

60

80

50

# FIG. 21

FIG. 23

96    526    528

520    529    524

FIG. 24

521

P1    L1    -96-

FIG. 25

96    521

523

FIG. 26

96    521    525

522

**FIG.27**

Vitesse de rotation Tr/s

Courbes variation de vitesse mandrin 1$^{er}$ tour à 6m/mn

Temps en seconde

PA

PA

EP 1 593 173 B1

FIG. 28

Vitesse de
rotation
Tr/s     Courbes variation de vitesse mandrin garni ép=5,5mm (19$^{eme}$ tour dans l'exemple)

Temps en
seconde

PA

PA

EP 1 593 173 B1

FIG.29

EP 1 593 173 B1

## FIG. 30

| Angle en ° | | Rayon enroulement | Facteur de correction | 1er Tour | | 2nd tour | | ... | 10e Tour | | ... | 23e Tour | |
|---|---|---|---|---|---|---|---|---|---|---|---|---|---|
| | | | | r | N | r | N | | r | N | | r | N |
| 0 | 180 | 5,00 | 1,109980 | 5,22 | 182,87 | 5,44 | 175,41 | | 7,22 | 132,26 | | 10,11 | 94,49 |
| 1 | 181 | 5,06 | 1,200700 | 5,30 | 180,17 | 5,54 | 172,36 | | 7,46 | 127,98 | | 10,58 | 90,23 |
| 2 | 182 | 5,24 | 1,319033 | 5,50 | 173,50 | 5,77 | 165,57 | | 7,88 | 121,21 | | 11,31 | 84,45 |
| 3 | 183 | 5,57 | 1,483629 | 5,87 | 162,77 | 6,16 | 154,93 | | 8,54 | 111,85 | | 12,39 | 77,04 |
| ... | ... | | | | | | ... | | | | | | |
| 80 | 260 | 54,30 | 0,796343 | 54,46 | 17,53 | 54,62 | 17,48 | | 55,89 | 17,09 | | 57,96 | 16,47 |
| 85 | 265 | 52,82 | 0,774575 | 52,97 | 18,03 | 53,13 | 17,97 | | 54,37 | 17,56 | | 56,38 | 16,94 |
| ... | ... | | | | | | ... | | | | | | |
| 178 | 358 | 5,19 | 0,977600 | 5,39 | 177,31 | 5,58 | 171,10 | | 7,15 | 133,65 | | 9,69 | 98,58 |
| 179 | 359 | 5,05 | 1,037420 | 5,26 | 181,63 | 5,46 | 174,74 | | 7,12 | 134,03 | | 9,82 | 97,22 |
| 180 | 360 | 5,00 | 1,109980 | 5,22 | 182,87 | 5,44 | 175,41 | | 7,22 | 132,26 | | 10,11 | 94,49 |

EP 1 593 173 B1

# FIG.32

81, 82, 84, 85, 80, 83

230

232

90, 92, 94, 96

**FIG.33**

ENROULEUR VITESSE CO-PILOTEE
PAR POSITION ANGULAIRE

# FIG.34

FIG.35

682 684 680 685 686 687

672 674 675 676 677

670

FIG.36

684

680

FIG.37

689 684 689

680 682

686 672

670 679

679 676

674 679

680

682 XXXVI 684 685 686 FIG.38

687

XXXVI

671 673 FIG.39

672 674 675 677

670 676 676

670 675 FIG.40

671 677

672 674 673

EP 1 593 173 B1

FIG.41

## FIG.42

FIG.43

810

834

854

EP 1 593 173 B1

## FIG_44A

532

652
612
610

534

614

654

## FIG_44B

532

534

610

## FIG_44C

532

534

610

## FIG_44D

532

534

610

## FIG.44E

## FIG.44F

## FIG.45

FIG.46A

610  611  620  625'

FIG.46B

611  610  620  625'

FIG.46C

610  620  611  625'

FIG.46D

620  610  611  625'

## FIG.46E

## FIG.46F

## FIG.46G

## FIG.46H

FIG.47A

620

625'

610

611

FIG.47B

580

582

532

534

FIG.47C

580

532

534

610  611  620  625'

## FIG.47D

532

580

625'

534

610    611    620

## FIG.47E

580

532

625'

534

610    611

620

## FIG.47F

532

580

534    610    611    620    625'

FIG_48

FIG_49

FIG_50

## FIG.51A

610

652

612

611

614

654

## FIG.51B

610

652

612

611

614

654

FIG_51C

652

610

612

614

611

654

FIG_51D

652

612

610

614

611

654

FIG_51E

652

612

614

654

# FIG.52A

# FIG.52B

# FIG.52C

# FIG.52D

# FIG.52E

## FIG.53A

820

840

830

850

860

822

## FIG.53B

820

830

860

822

840

850

## FIG.53C

820

830,850

860

822

840

## FIG. 53D

## FIG. 53E

**FIG.54**

610

619

611

## FIG.55A

## FIG.55B

FIG.56C

1612

1610

1614

611

FIG.56B

1615

1610

611

1612

1614

FIG.56A

1615

1610

611

1612

1614

## FIG.57

1612   T   1614
611   610

## FIG.58

610
1612   611   1614

## FIG.59

615   616
1612   611   1614

**FIG.60**

FIG. 61

FIG. 62

FIG. 63

FIG.64

FIG.65

FIG.66

FIG. 67

85

272

2725

270

84 40 85

40

2744

274 2740

84

## FIG.68

85

272

270

84 40

85

40

274

84

## FIG.69

85

272

270

84 40 85

40

274

$\ell$

84

## FIG.70

270  85  10,20,30  83  83

85  40  50,60

40  85  272

400  532  543  10,20,30  570  550

274

84

84  410  96  534  541  610

50,60  80  80

FIG.71

**EP 1 593 173 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 962643 A
- EP 0034662 A
- US 2276980 A
- FR 2737339 A
- FR 2759087 A
- FR 2759211 A
- FR 2808622 A